# EUROPEAN PATENT APPLICATION

(11) **EP 4 454 529 A1**
(43) Date of publication of application: **30.10.2024**
(21) Application number: 22914949.7
(22) Date of filing: 28.12.2022
(51) Int. Cl.: A47L 11/24

(54) **CLEANING DEVICE, AND CONTROL METHOD AND CONTROL APPARATUS THEREFOR**

(30) Priority: 28.12.2021 CN 202111633171; 07.01.2022 CN 202210018305; 17.02.2022 CN 202210145455; 17.02.2022 CN 202210145556
(71) Applicant: Midea Robozone Technology Co., Ltd., Suzhou, Jiangsu 215100 (CN)
(72) Inventor: SUN, Tao, Suzhou, Jiangsu 215100 (CN); PENG, Rui, Suzhou, Jiangsu 215100 (CN); HAN, Chong, Suzhou, Jiangsu 215100 (CN); GOU, Jiansong, Suzhou, Jiangsu 215100 (CN); LI, Song, Suzhou, Jiangsu 215100 (CN); QIN, Jianzhou, Suzhou, Jiangsu 215100 (CN); YAO, Weijian, Suzhou, Jiangsu 215100 (CN)
(74) Representative: RGTH
(86) International application number: PCT/CN2022/142944
(87) International publication number: WO 2023/125698

(57) **Abstract**

Provided is a method for controlling a cleaning device, an apparatus for controlling a cleaning device, a cleaning device, and a readable storage medium. The method for controlling the cleaning device includes: obtaining an environmental characteristic parameter by detecting an operation environment of the cleaning device, the environmental characteristic parameter including at least one of a room characteristic parameter and an obstacle parameter; and controlling the cleaning device to perform cleaning according to the at least one of the room characteristic parameter and the obstacle parameter. In this way, the cleaning device can be controlled based on at least one of the room characteristic parameter and the obstacle parameter, which realizes different cleaning control manners in different scenarios, and fully satisfies user's needs.

## Description

### CROSS-REFERENCES TO RELATED APPLICATIONS

This application claims priorities to Chinese Patent Application No. 202111633171.4, filed on December 28, 2021 and entitled "ROBOT CONTROL METHOD AND APPARATUS, AND ROBOT", Chinese Patent Application No. 202210018305.X, filed on January 7, 2022 and entitled "OBSTACLE AVOIDANCE METHOD AND APPARATUS FOR CLEANING ROBOT, ELECTRONIC DEVICE, AND MEDIUM", Chinese Patent Application No. 202210145455.7, filed on February 17, 2022 and entitled "METHOD AND APPARATUS FOR CONTROLLING CLEANING DEVICE, CLEANING DEVICE, AND READABLE STORAGE MEDIUM", and Chinese Patent Application No. 202210145556.4, filed on February 17, 2022 and entitled "CONTROL METHOD AND APPARATUS FOR MOVABLE DEVICE, MOVABLE DEVICE, AND STORAGE MEDIUM", the entire disclosure of which are incorporated herein by reference.

### FIELD

The present disclosure relates to the technical field of device control, in particular to, a method for controlling a cleaning device, an apparatus for controlling a cleaning device, a cleaning device, and a readable storage medium.

### BACKGROUND

In the related art, an intelligence degree of a cleaning device is mainly reflected in an improvement in accuracy of navigation and motion, recognition and collision-free of isolated objects, and non-omission cleaning of segmented regions. However, there is no fine control method for a cleaning strategy, which results in a single and insufficiently intelligent cleaning strategy of the cleaning device.

### SUMMARY

The present disclosure aims to at least solve one of the technical problems in the related art to some extent. To this end, a first objective of the present disclosure is to provide a method for controlling a cleaning device. In this way, the cleaning device may be controlled based on at least one of a room characteristic parameter and an obstacle parameter, which realizes different cleaning control manners in different scenarios, and fully satisfies user's needs.

A second objective of the present disclosure is to provide an apparatus for controlling a cleaning device.

A third objective of the present disclosure is to provide a cleaning device.

A fourth objective of the present disclosure is to provide a readable storage medium.

In order to achieve the above objects, an embodiment of an aspect of the present disclosure provides a method for controlling a cleaning device. The method comprises: obtaining an environmental characteristic parameter by detecting an operation environment of the cleaning device, the environmental characteristic parameter comprising at least one of a room characteristic parameter and an obstacle parameter; and controlling the cleaning device to perform cleaning according to at least one of the room characteristic parameter and the obstacle parameter.

In another exemplary embodiment of the present disclosure, the room characteristic parameter comprises floor characteristic information of a room; and controlling the cleaning device to perform cleaning according to the room characteristic parameter comprises: determining control information according to the floor characteristic information, and controlling the cleaning device according to the control information.

In this technical solution, the cleaning device may be a device like a sweeping robot, a mopping robot, and an all-in-one sweeping and mopping robot, and is movable in a plurality of rooms. In this way, an objective of performing cleaning in different rooms is realized.

In an exemplary embodiment of the present disclosure, the cleaning device is mounted with devices like a camera and an infrared sensor, and may acquire the floor characteristic information in the room. The floor characteristic information may indicate a ground paving situation in the room. Further, corresponding control information is determined according to the floor characteristic information in the room. In this way, the cleaning device performs a cleaning operation according to the control information.

Through the above manner, the cleaning device is capable of achieving more intelligent and customized cleaning based on ground situations of the room, and improving high efficiency and accuracy of room cleaning.

In the above technical solution, the floor characteristic information comprises a flooring material; and said determining the control information according to the floor characteristic information comprises: determining first control information corresponding to the flooring material. The first control information comprises at least one of a water allocating amount, a number of cleaning times, a fan suction force, and a moving speed.

In this technical solution, the floor characteristic information may comprise the flooring material. For example, the materials comprise wood (like the wood floors), porcelain, stone (like floor tiles), and the like.

The control information of the cleaning device comprises the first control information. The first control information may be the at least one of the water allocating amount, the number of cleaning times, the fan suction force, and the moving speed.

In an exemplary embodiment of the present disclosure, based on the flooring material in the room, a water allocating amount, a fan suction force, and a moving speed of the cleaning device during operation are determined correspondingly, and a number of cleaning times of the cleaning device for the room is determined.

Through the above manner, the cleaning device is capable of achieving more personalized and intelligent cleaning of the room based on the flooring material in the room.

In any of the above technical solutions, a water allocating amount corresponding to a flooring material of wood is smaller than a water allocating amount corresponding to a flooring material of porcelain or stone.

In this technical solution, in response to recognizing that the flooring material in the room is wood, i.e., when the wood floors are paved in the room, the water allocating amount of the cleaning device when performing cleaning may be reduced. In this way, a damage of water stains to the wood floors is reduced, to protect the wood floors.

In response to recognizing that the flooring material in the room is porcelain or stone, i.e., when the floor tiles are paved in the room, the water allocating amount of the cleaning device when performing cleaning may be relatively increased. In this way, a cleaning degree for the floor tiles is improved, and a cleaning effect is ensured.

In any of the above technical solutions, a number of cleaning times corresponding to a flooring material of wood is greater than a number of cleaning times corresponding to a flooring material of porcelain or stone.

In this technical solution, in response to recognizing that the flooring material in the room is wood, i.e., when the wood floors are paved in the room, the water allocating amount of the cleaning device when performing cleaning may be reduced. In this way, the damage of water stains to the wood floors is reduced to protect the wood floors, and the number of cleaning times is increased to ensure the cleaning effect.

In response to recognizing that the flooring material in the room is porcelain or stone, i.e., when the floor tiles are paved in the room, the water allocating amount of the cleaning device when performing cleaning may be relatively increased. In this way, the cleaning degree for the floor tiles is improved to ensure the cleaning effect, and the number of cleaning times is relatively reduced to reduce a waste of electric energy of the cleaning device.

In any of the above technical solutions, the floor characteristic information comprises a flooring direction; and said determining the control information according to the floor characteristic information comprises: determining second control information corresponding to the flooring direction. The second control information comprises that a cleaning direction of the cleaning device is in consistent with the flooring direction.

In this technical solution, the floor characteristic information may comprise the flooring direction, i.e., a texture of the wood floors or the floor tiles paved in the ground.

The control information of the cleaning device comprises the second control information, and the second control information may be control information indicating the cleaning direction of the cleaning device.

In an exemplary embodiment of the present disclosure, the cleaning direction of the cleaning device is correspondingly determined based on the flooring direction in the room. In this way, the cleaning direction of the cleaning device is in consistent with the flooring direction, i.e., the cleaning direction of the cleaning device is parallel to the flooring direction.

Through the above-mentioned manner, the cleaning device is capable of performing cleaning in a direction parallel to the flooring direction in the room. In this way, residual dust and water stains in gaps between the wood floors or floor tiles are reduced, and cleaning marks of the cleaning device on the wood floors or floor tiles are not chaotic, to improve the cleaning effect.

In any of the above technical solutions, the floor characteristic information comprises a flooring size; and said determining the control information according to the floor characteristic information comprises: determining a room type of the room based on the flooring size; and determining third control information corresponding to the room type.

In this technical solution, the floor characteristic information may comprise the flooring size, i.e., a size of the room, and the control information of the cleaning device may comprise the third control information.

In an exemplary embodiment of the present disclosure, the size of the room is determined based on the flooring size of the room. In this way, the room type is determined, and the third control information of the cleaning device is further determined correspondingly according to the room type.

Through the above manner, cleaning performed by the cleaning device is capable of being adaptively controlled according to the room type. In this way, the efficiency and accuracy of the room cleaning are improved.

In any of the above technical solutions, the room type comprises at least one of a bedroom, a living room, a kitchen, and a toilet; and the third control information comprises at least one of a room cleaning sequence, a cleaning agent amount, and a disinfectant amount.

In the technical solution, the room may comprise a bedroom, a living room, a kitchen, or a toilet, and cleaning manners of the cleaning device may be different in different types of rooms.

The third control information of the cleaning device may be the at least one of the room cleaning sequence, the cleaning agent amount, and the disinfectant amount. For example, when the room is determined to be the bedroom, the room may be cleaned first. When the room is determined to be the living room, the living room may be cleaned after the bedroom is cleaned. When the room is determined to be the kitchen or toilet, the cleaning device may spray the cleaning agent, disinfectant, and the like.

Through the above manner, more intelligent and customized cleaning is realized.

In any of the above technical solutions, the floor characteristic information comprises a socket position; and said determining the control information according to the floor characteristic information comprises: determining fourth control information corresponding to the socket position.

In this technical solution, the floor characteristic information may comprise the socket position, i.e., a position of a socket mounted on the ground. The control information of the cleaning device comprises the fourth control information for controlling a movement route of the cleaning device.

In an exemplary embodiment of the present disclosure, based on the socket position on the ground of the room, the movement route of the cleaning device is controlled to avoid the occurrence of a risk of electric leakage at a position where the cleaning device cleans the socket and to improve safety during cleaning.

In any of the above technical solutions, the fourth control information comprises that a cleaning area of the cleaning device is out of a predetermined range of the socket position.

In this technical solution, in response to recognizing the socket mounted on the ground in the room, the cleaning device may maintain a predetermined safe distance from the socket during cleaning, i.e., cleaning is performed out of a predetermined range of the cleaning device from the socket. For example, cleaning is performed outside a position at a distance of 10 centimeters or 20 centimeters from the socket.

Through the above manner, the risk of electric leakage at the position where the cleaning device cleans the socket is avoided, and the safety during cleaning is improved.

In any of the above technical solutions, the floor characteristic information comprises a room segmenting characteristic of the room; and said determining the control information according to the floor characteristic information comprises: determining control information corresponding to the room segmenting characteristic based on a height of the room segmenting characteristic being smaller than or equal to a predetermined threshold.

In this technical solution, the floor characteristic information may comprise the room segmenting characteristic of the room, such as a door pass bar, a threshold stone, and a door sliding track.

When it is recognized that the height of the room segmenting characteristic does not exceed the predetermined threshold, which indicates that the height of the room segmenting characteristic is low, the cleaning device may be controlled to clean the position. When it is recognized that the height of the room segmenting characteristic exceeds the predetermined threshold, which indicates that the height of the room segmenting characteristic is high, the cleaning device is allowed not to clean the position, to prevent the cleaning device from being stuck at a position of the room segmenting characteristic.

In any of the above technical solutions, obtaining the floor characteristic information of the room comprises: obtaining a room segmenting characteristic of the room; and obtaining the floor characteristic information of the room in response to the cleaning device entering the room through the room segmenting characteristic.

In the technical solution, the room segmenting characteristic is an important basis for room division, and may comprise a door pass bar, a threshold stone, a door sliding track, and the like.

In response to recognizing that the cleaning device enters the room through the room segmenting characteristic, the floor characteristic information of the room is acquired, and the cleaning device is further controlled to perform room cleaning according to the control information corresponding to the floor characteristic information.

Through the above manner, according to the room segmenting characteristic, it may be accurately determined that whether the cleaning device enters the room. In this way, the floor characteristic information is acquired after the cleaning device enters the room, to realize timely and accurate acquisition of the floor characteristic information.

In another exemplary embodiment of the present disclosure, the room characteristic parameter comprises room characteristic information of a room; and the obstacle parameter comprises a position of an object in the room. Controlling the cleaning device to perform cleaning according to the room characteristic parameter and the obstacle parameter comprises: determining a cleaning parameter according to the room characteristic information; and controlling the cleaning device to avoid the position of the object and to operate according to the cleaning parameter.

In this technical solution, the cleaning device may be a device like a sweeping robot, a mopping robot, and an all-in-one sweeping and mopping robot, and is movable in the plurality of rooms. In this way, an objective of performing cleaning in different rooms is realized.

In an exemplary embodiment of the present disclosure, the cleaning device is mounted with devices like a camera and an infrared sensor, and may acquire the floor characteristic information in the room and a specific position of a fixed object in the room. Position characteristic information of the object is capable of indicating the room type, the ground paving in the room, and other situations.

Further, the corresponding cleaning parameter is determined according to the room characteristic information in the room, and a route of the cleaning device is determined according to the specific position of the fixed object. In this way, the cleaning device can move with avoiding the specific position of the fixed object, and the cleaning operation is performed according to the control information.

Through the above manner, the cleaning device is capable of adaptively setting a reasonable cleaning manner based on a specific situation of the room, realizing more intelligent and customized cleaning, and improving the efficiency and accuracy of the room cleaning.

In the above technical solution, the room characteristic information comprises a room type; and said determining the cleaning parameter according to the room characteristic information comprises determining a first cleaning parameter corresponding to the room type. The first cleaning parameter comprises at least one of a cleaning priority and a cleaning degree.

In this technical solution, the room characteristic information may comprise the room type, and the first cleaning parameter of the cleaning device may be further determined correspondingly according to the room type.

The cleaning parameter of the cleaning device comprises the first cleaning parameter. The room may comprise a bedroom, a living room, a kitchen, or a toilet. The first cleaning parameters such as the cleaning priority and the cleaning degree of the cleaning device in different types of rooms may be different.

Through the above manner, the cleaning manner of the cleaning device is capable of being adaptively controlled according to the room type. In this way, the efficiency and accuracy of the room cleaning are improved.

In any of the above technical solutions, a cleaning priority corresponding to a room type of a bedroom or a living room is greater than a cleaning priority corresponding to a room type of a toilet or a kitchen.

In this technical solution, the cleaning priority when the room is the bedroom or the living room is greater than or equal to a first threshold. The cleaning priority when the room is the toilet or the kitchen is smaller than the first threshold.

Through the above manner, more intelligent and customized cleaning can be realized.

In any of the technical solutions described above, a cleaning degree corresponding to a room type of the toilet or the kitchen is greater than a cleaning degree corresponding to a room type of the bedroom or the living room.

In the technical solution, since a dirty degree of the toilet or the kitchen is greater than a dirty degree of the bedroom or the living room, a cleaning degree of the toilet or a cleaning degree of the kitchen is also greater. That is, the cleaning degree corresponding to a room type of the toilet or kitchen is greater than or equal to a second threshold, and the cleaning degree corresponding to a room type of the bedroom or living room is smaller than the second threshold.

Through the above manner, more intelligent and customized cleaning can be realized.

In any of the above technical solutions, the room characteristic information comprises a flooring material; and said determining the cleaning parameter according to the room characteristic information comprises determining a second cleaning parameter corresponding to the flooring material. The second cleaning parameter comprises at least one of a water allocating amount, a number of cleaning times, and a fan suction force.

In this technical solution, the room characteristic information may comprise flooring material. For example, the materials comprise wood (like the wood floors), porcelain, stone (like the floor tiles), concrete, and the like.

The cleaning parameter of the cleaning device comprises the second cleaning parameter, and the second cleaning parameter may be the at least one of the water allocating amount, the number of cleaning times, and the fan suction force.

In an exemplary embodiment of the present disclosure, the water allocating amount, the number of cleaning times, the fan suction force, and the like of the cleaning device during operation are correspondingly determined based on the flooring material in the room.

Through the above manner, the cleaning device is capable of realizing more personalized and intelligent cleaning of the room based on the flooring material in the room.

In any of the technical solutions described above, a water allocating amount corresponding to a flooring material of wood, a water allocating amount corresponding to a flooring material of porcelain or stone, and a water allocating amount corresponding to a flooring material of concrete increase sequentially.

In the technical solution, the water allocating amount of the cleaning device corresponding to a flooring material of wood is smaller than or equal to a third threshold. The water allocating amount of the cleaning device corresponding to a flooring material of porcelain or stone is greater than the third threshold and smaller than or equal to a fourth threshold. The water allocating amount of the cleaning device corresponding to a flooring material of concrete is greater than the fourth threshold. The fourth threshold is greater than the third threshold.

In an exemplary embodiment of the present disclosure, in response to recognizing that the flooring material in the room is wood, i.e., when the wood floors are paved in the room, the water allocating amount of the cleaning device when performing cleaning may be reduced relatively. In this way, the damage of water stains to the wood floors is reduced, to protect the wood floors.

In response to recognizing that the flooring material in the room is porcelain or stone, i.e., when the floor tiles are paved in the room, the water allocating amount of the cleaning device when performing cleaning may be controlled to be moderate. In this way, the cleaning degree for the floor tiles is improved, and the cleaning effect is ensured.

In response to recognizing that the flooring material in the room is concrete, i.e., when cement is paved in the room, the water allocating amount of the cleaning device when performing cleaning may be relatively increased. In this way, a cleaning degree for a cement ground is improved, and the cleaning effect is ensured.

In any of the above technical solutions, a number of cleaning times corresponding to a flooring material of wood, a number of cleaning times corresponding to a flooring material of porcelain or stone, a number of cleaning times corresponding to a flooring material of concrete decrease sequentially.

In the technical solution, the number of cleaning times of the cleaning device corresponding to a flooring material of wood is greater than or equal to a fifth threshold. The number of cleaning times of the cleaning device corresponding to a flooring material of porcelain or stone is smaller than the fifth threshold and greater than or equal to a sixth threshold. The number of cleaning times of the cleaning device corresponding to a flooring material of concrete is smaller than the sixth threshold. The sixth threshold is smaller than the fifth threshold.

In an exemplary embodiment of the present disclosure, in response to recognizing that the flooring material in the room is wood, i.e., the wood floors are paved in the room, the water allocating amount of the cleaning device when performing cleaning may be relatively reduced. In this way, the damage of water stains to the wood floors is reduced to protect the wood floors, and the number of cleaning times of the cleaning device is increased to ensure the cleaning effect.

In response to recognizing that the flooring material in the room is porcelain or stone, i.e., the floor tiles are paved in the room, the water allocating amount and the number of cleaning times of the cleaning device when performing cleaning may be controlled to be moderate. In this way, the cleaning degree for the floor tiles is improved, and the cleaning effect is ensured.

In response to recognizing that the flooring material in the room is concrete, i.e., the cement is paved in the room, the water allocating amount of the cleaning device when performing cleaning may be relatively increased. In this way, the cleaning degree for the cement ground is improved to ensure the cleaning effect, while the number of cleaning times is relatively reduced to reduce the waste of the electric energy of the cleaning device.

In any of the above technical solutions, said controlling the cleaning device to avoid the position of the object comprises: determining relative position information of the object with respect to a ground of the room; and controlling the cleaning device to avoid the position of the object according to the relative position information.

In the technical solution, the relative position information of the object in the room with respect to the ground is determined. The relative position information may indicate whether there is a gap between the object and the ground and a size of the gap when there is a gap. Further, according to whether there is a gap or the size of the gap when there is a gap, it is controlled that whether the cleaning device moves with avoiding the object.

Through the above-mentioned manner, a manner of avoiding objects by the cleaning device is controlled, and the cleaning effect of the room is improved.

In any of the above technical solutions, obtaining the environmental characteristic parameter comprises: acquiring a first image of the room, and recognizing the room based on the first image; and determining the room characteristic information of the room and the position of the object according to a predetermined correspondence relationship.

In the technical solution, by acquiring the first image of the room, a specific room entered by the cleaning device is determined based on the first image, and the room characteristic information of the room and the position of the object are determined according to the predetermined correspondence relationship among the room, the room characteristic information, and the position of the object.

That is, the predetermined correspondence relationship among the room, the room characteristic information, and the position of the object is pre-stored. After the specific room is determined according to the first image, the room characteristic information of the room and the position of the object may be obtained.

Through the above manner, after the entered room is determined, the pre-stored room characteristic information and position of the object may be obtained according to the predetermined correspondence relationship, without the need to recognize the room characteristic information and the position of the object through the image. In this way, accuracy and timeliness of obtaining the room characteristic information and the position of the object are improved.

In any of the above technical solutions, the method further comprises, prior to obtaining the environmental characteristic parameter: controlling the cleaning device to move in the room, and acquiring a second image of the room; and determining the room characteristic information and the position of the object based on the second image, and determining the predetermined correspondence relationship.

In the technical solution, the cleaning device is controlled to move in the room, and the second image of the room is obtained during the movement, to realize image collection with positioning. Further, the room characteristic information of the room and the position of the object are recognized in the second image, and a room name is stored in correspondence with the room characteristic information and the position of the object to determine the predetermined correspondence relationship.

When the cleaning device performs next cleaning, the room characteristic information and the position of object are determined according to the predetermined correspondence relationship. In this way, the cleaning plan is formulated based on the actual situation, and intelligence of the cleaning device is improved.

In another exemplary embodiment of the present disclosure, the cleaning device is a cleaning robot; and controlling the cleaning device to perform cleaning according to the obstacle parameter comprises: starting a cleaning in a target region at a first speed after receiving an operation instruction; obtaining, in response to detecting a target obstacle at a position having a first distance from the cleaning robot in a current forward direction, a recognition result for determining an object category of the target obstacle by using an imaging apparatus disposed on the cleaning robot; selecting a target obstacle avoidance route based on the recognition result; and maneuvering the cleaning robot based on the target obstacle avoidance route. The target obstacle avoidance route corresponds to one of changing the current forward direction and maintaining the current forward direction.

In another embodiment based on the method described above in the present disclosure, said selecting the target obstacle avoidance route based on the recognition result comprises: selecting a first obstacle avoidance route in response to determining that the object category of the target obstacle is recognizable; or selecting a second obstacle avoidance route in response to determining that the object category of the target obstacle is unrecognizable. The first obstacle avoidance route is a route on which the cleaning robot is instructed to bypass the target obstacle without changing the current forward direction. The second obstacle avoidance route is a route on which the cleaning robot is instructed to bypass the target obstacle by moving in another forward direction.

In another embodiment based on the method described above in the present disclosure, said selecting the first obstacle avoidance route in response to determining that the object category of the target obstacle is recognizable comprises: determining the object category of the target obstacle, and obtaining a contour parameter and a size parameter that correspond to the object category based on a pre-stored obstacle data set; calculating a circumscribed image of the target obstacle according to the contour parameter and the size parameter; and calculating the first obstacle avoidance route based on the circumscribed image and a purePuresuit algorithm.

In another embodiment based on the method described above in the present disclosure, the method further comprises, subsequent to calculating the first obstacle avoidance route: selecting the first obstacle avoidance route and maneuvering the cleaning robot; and determining that the cleaning robot completes obstacle avoidance in response to detecting that the cleaning robot bypasses the target obstacle and moves in the current forward direction.

In another embodiment based on the method described above in the present disclosure, said selecting the second obstacle avoidance route in response to determining that the object category of the target obstacle is unrecognizable comprises: obtaining a parallel angle difference between the target obstacle and the cleaning robot in response to determining that the object category of the target obstacle is unrecognizable; and determining a rotation angle for rotating a forward direction of the cleaning robot based on the parallel angle difference, and calculating the second obstacle avoidance route based on the rotation angle.

In another embodiment based on the method described above in the present disclosure, the method further comprises, subsequent to calculating the second obstacle avoidance route: selecting the second obstacle avoidance route and maneuvering the cleaning robot; and determining that the cleaning robot completes obstacle avoidance in response to detecting that the cleaning robot moves in the another forward direction and has a distance from the target obstacle exceeding a second distance.

In another embodiment based on the method described above in the present disclosure, the method further comprises, subsequent to starting the cleaning in the target region at the first speed: switching the first speed to a second speed in response to detecting the target obstacle at a position having a second distance from the cleaning robot in the current forward direction; and detecting whether the target obstacle is located at the position having the first distance from the cleaning robot in the current forward direction. The second speed is lower than the first speed, and the second distance is greater than the first distance.

In another embodiment based on the method described above in the present disclosure, the method further comprises, prior to starting the cleaning in the target region at the first speed: obtaining an initial grid map of the target region, robot posture information, and sample obstacle information; and generating a semantic map by projecting each sample obstacle onto the initial grid map through a Bresenham algorithm. The sample obstacle information comprises a parameter of a sample obstacle and an object category of the sample obstacle. Said starting the cleaning in the target region at the first speed after receiving the operation instruction comprises: starting the cleaning in the target region at the first speed based on the semantic map after receiving the operation instruction.

In another embodiment based on the method described above in the present disclosure, said obtaining the recognition result for determining the object category of the target obstacle by using the imaging apparatus disposed on the cleaning robot comprises: obtaining a target obstacle image by using the imaging apparatus; extracting an object characteristic of the target obstacle image by using an image detection classification model; and determining the recognition result of the object category corresponding to the target obstacle based on the existence of object characteristics. The object characteristic comprises at least one of a size characteristic, a color characteristic, and a contour characteristic.

In another embodiment based on the method described above in the present disclosure, the method further comprises, prior to obtaining the target obstacle image by using the imaging apparatus: obtaining at least two sample images; labeling a category identifier for each of the at least two sample images based on an object category of an obstacle; and obtain the image detection classification model satisfying a predetermined condition by training a predetermined image semantic segmentation model by using the sample images labeled with the category identifiers and the obstacle object characteristics comprised in the sample images. The sample image comprises at least one obstacle object characteristic. The image detection classification model is configured for determining the object category of the target obstacle.

In the present disclosure, the cleaning is started in the target region at the first speed after the operation instruction is received. In response to detecting the target obstacle at the position having the first distance from the cleaning robot in the current forward direction, the recognition result for determining the object category of the target obstacle is obtained by using the imaging apparatus disposed on the cleaning robot. The corresponding target obstacle avoidance route is selected based on the recognition result. The target obstacle avoidance route corresponds to one of changing the current forward direction and maintaining the current forward direction. The cleaning robot is maneuvered based on the target obstacle avoidance route. By applying the technical solutions of the present disclosure, when the robot detects the obstacle in front of the robot, different obstacle avoidance routes may be selected according to whether the object category of the obstacle is recognizable. In this way, different obstacle bypassing methods can be performed according to different types of object contours. Therefore, an obstacle avoidance ability of the cleaning robot is improved, and a collision-free function is realized. Moreover, a problem, where the robot cannot completely avoid the obstacles due to a limited perception range of the robot, is avoided.

In another exemplary embodiment of the present disclosure, the cleaning device is a robot mounted with a first laser sensor and a second laser sensor, an inclination angle of the first laser sensor on the robot is different from an inclination angle of the second laser sensor on the robot, and a mounting height of the first laser sensor on the robot is different from a mounting height of the second laser sensor on the robot; and controlling the cleaning device to perform cleaning according to the obstacle parameter comprises: obtaining a first sensing distance through the first laser sensor; obtaining a second sensing distance through the second laser sensor; determining a first falling point coordinate based on the mounting height and the inclination angle of the first laser sensor on the robot, and the first sensing distance; determining a second falling point coordinate based on the mounting height and the inclination angle of the second laser sensor on the robot, and the second sensing distance; recognizing an obstacle type corresponding to a target region based on the first falling point coordinate, the second falling point coordinate, and a predetermined height for surmountable obstacle; and controlling motion of the robot based on the obstacle type. The first sensing distance is a distance between the first laser sensor and a light spot of a laser emitted by the first laser sensor. The second sensing distance is a distance between the second laser sensor and a light spot of a laser emitted by the second laser sensor. The first falling point coordinate is a coordinate of the light spot of the laser emitted by the first laser sensor. The second falling point coordinate is a coordinate of the light spot of the laser emitted by the second laser sensor. The target region is a region where the first falling point coordinate and the second falling point coordinate are located.

In another exemplary embodiment of the present disclosure, the mounting height of the first laser sensor is greater than the mounting height of the second laser sensor; and a distance that is reachable by the laser emitted by the first laser sensor is greater than a distance that is reachable by the laser emitted by the second laser sensor. The first falling point coordinate is (Xa, Ya). The method further comprises, prior to recognizing the obstacle type corresponding to the target region: comparing an absolute value of Ya with the height for surmountable obstacle; and controlling the robot to pause in response to the absolute value of Ya being greater than the height for surmountable obstacle.

In another exemplary embodiment of the present disclosure, the second falling point coordinate is (Xb, Yb); the height for surmountable obstacle is h; and said recognizing the obstacle type corresponding to the target region based on the first falling point coordinate, the second falling point coordinate, and the predetermined height for surmountable obstacle comprises: determining that the obstacle type corresponding to the target region is a large stair in response to Ya being smaller than -h and Yb being smaller than or equal to Ya; determining that the obstacle type corresponding to the target region is a down ramp in response to Ya being smaller than -h and Yb being smaller than 0 but greater than Ya; and determining that the obstacle type corresponding to the target region is a large stair in response to Ya being smaller than -h and Yb being greater than or equal to 0.

In another exemplary embodiment of the present disclosure, the obstacle type is the down ramp; and said controlling the motion of the robot based on the obstacle type comprises: determining an angle corresponding to the down ramp; and controlling the motion of the robot based on the angle corresponding to the down ramp and a predetermined climbable degree.

In another exemplary embodiment of the present disclosure, the second falling point coordinate is (Xb, Yb); the height for surmountable obstacle is h; and said recognizing the obstacle type corresponding to the target region based on the first falling point coordinate, the second falling point coordinate, and the predetermined height for surmountable obstacle comprises: determining that the obstacle type corresponding to the target region is a high obstacle in response to Ya being greater than h and Xb being greater than or equal to Xa; and determining that the obstacle type corresponding to the target region is an up ramp in response to Ya being greater than h and Xb being smaller than Xa.

In another exemplary embodiment of the present disclosure, the obstacle type is the up ramp; and said controlling the motion of the robot based on the obstacle type comprises: determining an angle corresponding to the up ramp; and controlling the motion of the robot based on the angle corresponding to the up ramp and a predetermined climbable degree.

In another exemplary embodiment of the present disclosure, the mounting height of the first laser sensor is greater than the mounting height of the second laser sensor; a distance that is reachable by the laser emitted by the first laser sensor is greater than a distance that is reachable by the laser emitted by the second laser sensor; the first falling point coordinate is (Xa, Ya); and the height for surmountable obstacle is h. The method further comprises: controlling the robot to switch from a normal mode to a low-speed mode in response to Ya being greater than a target height and smaller than or equal to h, the target height being greater than 0 and smaller than h, and a speed of the low-speed mode being smaller than a speed of the normal mode; controlling the robot to move in the normal mode in response to Ya being greater than or equal to a negative number of the target height and smaller than or equal to the target height; and controlling the robot to switch from the normal mode to the low-speed mode in response to Ya being greater than or equal to a negative number of h and smaller than the negative number of the target height.

In an exemplary embodiment of the present disclosure, the first laser sensor is a line laser sensor; and the second laser sensor is a laser ranging sensor.

In the embodiment of the present disclosure, the inclination angles of the first laser sensor and the second laser sensor mounted on the robot are different, and the mounting height of the first laser sensor on the robot and the mounting height of the second laser sensor on the robot are also different. Therefore, the first falling point coordinate and the second falling point coordinate obtained based on the first laser sensor and the second laser sensor are coordinates corresponding to two different positions. Since the coordinates of the two different positions may reflect a height difference between the two positions, combined with the predetermined height for surmountable obstacle, a corresponding obstacle type in a region where the two different positions are located may be quickly and accurately recognized. For example, it is recognized whether the obstacle type is a stair that can be climbed over by the robot.

In order to achieve the above object, embodiments of another aspect of the present disclosure also provide an apparatus for controlling a cleaning device. The apparatus for controlling the cleaning device comprises: a detection device configured to obtain an environmental characteristic parameter by detecting an operation environment of the cleaning device, the environmental characteristic parameter comprising at least one of a room characteristic parameter and an obstacle parameter; and a control device configured to control the cleaning device to perform cleaning according to at least one of the room characteristic parameter and the obstacle parameter.

In another exemplary embodiment of the present disclosure, the cleaning device is a cleaning robot; and the control device comprises a first obtaining module, a first detection module, a first selection module, and a first operation module. The first obtaining module is configured to start a cleaning in a target region at a first speed after receiving an operation instruction. The first detection module is configured to obtain, in response to detecting a target obstacle at a position having a first distance from the cleaning robot in a current forward direction, a recognition result for determining an object category of the target obstacle by using an imaging apparatus disposed on the cleaning robot. The first selection module is configured to select a target obstacle avoidance route based on the recognition result. The target obstacle avoidance route corresponds to one of changing the current forward direction and maintaining the current forward direction. The first operation module is configured to maneuver the cleaning robot based on the target obstacle avoidance route.

By applying the technical solutions of the present disclosure, when the cleaning robot detects the obstacle in front of the robot, different obstacle avoidance routes may be selected according to whether the object category of the obstacle is recognizable. In this way, different obstacle bypassing methods can be performed according to different types of object contours. Therefore, the obstacle avoidance ability of the cleaning robot is further improved, and the collision-free function is realized. Moreover, the problem, where the robot cannot completely avoid the obstacles due to the limited perception range of the robot, is avoided.

In another exemplary embodiment of the present disclosure, the cleaning device is a robot mounted with a first laser sensor and a second laser sensor, an inclination angle of the first laser sensor on the robot is different from an inclination angle of the second laser sensor on the robot, and a mounting height of the first laser sensor on the robot is different from a mounting height of the second laser sensor on the robot; and the control device comprises a first distance obtaining module, a second distance obtaining module, a first falling point coordinate determining module, a second falling point coordinate determining module, an obstacle type recognition module, and a motion control module. The first distance obtaining module is configured to obtain a first sensing distance through the first laser sensor. The first sensing distance is a distance between the first laser sensor and a light spot of a laser emitted by the first laser sensor. The second distance obtaining module is configured to obtain a second sensing distance through the second laser sensor. The second sensing distance is a distance between the second laser sensor and a light spot of a laser emitted by the second laser sensor. The first falling point coordinate determining module is configured to determine a first falling point coordinate based on the mounting height and the inclination angle of the first laser sensor on the robot, and the first sensing distance. The first falling point coordinate is a coordinate of the light spot of the laser emitted by the first laser sensor. The second falling point coordinate determining module is configured to determine a second falling point coordinate based on the mounting height and the inclination angle of the second laser sensor on the robot, and the second sensing distance. The second falling point coordinate is a coordinate of the light spot of the laser emitted by the second laser sensor. The obstacle type recognition module is configured to recognize an obstacle type corresponding to a target region based on the first falling point coordinate, the second falling point coordinate, and a predetermined height for surmountable obstacle. The target region is a region where the first falling point coordinate and the second falling point coordinate are located. The motion control module is configured to control motion of the robot based on the obstacle type.

In the embodiment of the present disclosure, the inclination angles of the first laser sensor and the second laser sensor mounted on the robot are different, and the mounting height of the first laser sensor on the robot and the mounting height of the second laser sensor on the robot are also different. Therefore, the first falling point coordinate and the second falling point coordinate obtained based on the first laser sensor and the second laser sensor are the coordinates corresponding to the two different positions. Since the coordinates of the two different positions may reflect the height difference between the two positions, combined with the predetermined height for surmountable obstacle, the corresponding obstacle type in the region where the two different positions are located may be quickly and accurately recognized. For example, it is recognized whether the obstacle type is the stair that can be climbed over by the robot.

In another exemplary embodiment of the present disclosure, the room characteristic parameter comprises floor characteristic information of a room; and the control device is further configured to determine control information according to the floor characteristic information and maneuver the cleaning device according to the control information.

In this technical solution, the cleaning device may be a device like a sweeping robot, a mopping robot, and an all-in-one sweeping and mopping robot, and is movable in the plurality of rooms. In this way, an objective of performing cleaning in different rooms is realized.

In an exemplary embodiment of the present disclosure, the cleaning device is mounted with devices like a camera and an infrared sensor, and may acquire the floor characteristic information in the room. The floor characteristic information may indicate the ground paving situation in the room. Further, the corresponding control information is determined according to the floor characteristic information in the room. In this way, the cleaning device performs the cleaning operation according to the control information.

Through the above manner, the cleaning device is capable of achieving more intelligent and customized cleaning based on the ground situations of the room, and improving the efficiency and accuracy of the room cleaning.

In another exemplary embodiment of the present disclosure, the room characteristic parameter comprises room characteristic information of a room; and the obstacle parameter comprises a position of an object in the room. The control device is further configured to: determine a cleaning parameter according to the room characteristic information; and control the cleaning device to avoid the position of the object and to operate according to the cleaning parameter.

In this technical solution, the cleaning device may be a device like a sweeping robot, a mopping robot, and an all-in-one sweeping and mopping robot, and is movable in the plurality of rooms. In this way, an objective of performing cleaning in different rooms is realized.

In an exemplary embodiment of the present disclosure, the cleaning device is mounted with devices like a camera and an infrared sensor, and may acquire the floor characteristic information in the room and the specific position of the fixed object in the room. The position characteristic information of the object is capable of indicating the room type, the ground paving in the room, and other situations.

Further, the corresponding cleaning parameter is determined according to the room characteristic information in the room, and the route of the cleaning device is determined according to the specific position of the fixed object. In this way, the cleaning device can move with avoiding the specific position of the fixed object, and the cleaning operation is performed according to the control information.

Through the above manner, the cleaning device is capable of adaptively setting the reasonable cleaning manner based on the specific situation of the room, realizing more intelligent and customized cleaning, and improving the efficiency and accuracy of the room cleaning.

According to yet another aspect of the present disclosure, a cleaning device is provided. The cleaning device comprises: a memory configured to store a program or an instruction; and a processor, when executing the program or the instruction, performing the method for controlling the cleaning device according to any one of the technical solutions described above.

The cleaning device provided in the present disclosure realizes the steps of the method for controlling the cleaning device according to any of the technical solutions described above when the program or instruction is executed by the processor. Therefore, the cleaning device comprises all the beneficial effects of the method for controlling the cleaning device according to any of the technical solutions described above.

According to still yet another aspect of the present disclosure, a readable storage medium is provided. The readable storage medium has a program or an instruction stored thereon. The program or the instruction, when executed by a processor, causes the processor to perform the method for controlling the cleaning device according to any one of the technical solutions described above.

The readable storage medium provided by the present disclosure realizes the steps of the method for controlling the cleaning device according to any of the technical solutions described above when the program or instruction is executed by the processor. Therefore, the readable storage medium comprises all the beneficial effects of the method for controlling the cleaning device according to any of the technical solutions described above.

Additional aspects and advantages of the present disclosure will be in part set forth below, become apparent in part from the following description, or can be learned by practice of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a first schematic flowchart of a method for controlling a movable device according to an embodiment of the present disclosure;
FIG. 2 is a second schematic flowchart of a method for controlling a movable device according to an embodiment of the present disclosure;
FIG. 3 is a third schematic flowchart of a method for controlling a movable device according to an embodiment of the present disclosure;
FIG. 4 is a fourth schematic flowchart of a method for controlling a movable device according to an embodiment of the present disclosure;
FIG. 5 is a fifth schematic flowchart of a method for controlling a movable device according to an embodiment of the present disclosure;
FIG. 6 is a sixth schematic flowchart of a method for controlling a movable device according to an embodiment of the present disclosure;
FIG. 7 is a seventh schematic flowchart of a method for controlling a movable device according to an embodiment of the present disclosure;
FIG. 8 is a first schematic diagram of ground paving in a room according to an embodiment of the present disclosure;
FIG. 9 is a second schematic diagram of ground paving in a room according to an embodiment of the present disclosure;
FIG. 10 is an eighth schematic flowchart of a method for controlling a cleaning device according to an embodiment of the present disclosure;
FIG. 11 is a ninth schematic flowchart of a method for controlling a cleaning device according to an embodiment of the present disclosure;
FIG. 12 is a tenth schematic flowchart of a method for controlling a cleaning device according to an embodiment of the present disclosure;
FIG. 13 is an eleventh schematic flowchart of a method for controlling a cleaning device according to an embodiment of the present disclosure;
FIG. 14 is a twelfth schematic flowchart of a method for controlling a cleaning device according to an embodiment of the present disclosure;
FIG. 15 is a thirteenth schematic flowchart of a method for controlling a cleaning device according to an embodiment of the present disclosure;
FIG. 16 is a first schematic diagram of a room layout according to an embodiment of the present disclosure;
FIG. 17 is a second schematic diagram of a room layout according to an embodiment of the present disclosure;
FIG. 18 is a schematic diagram of an operation system architecture of a cleaning robot according to an embodiment of the present disclosure;
FIG. 19 is a schematic diagram of an obstacle avoidance method for a cleaning robot according to an embodiment of the present disclosure;
FIG. 20 is a schematic diagram of generating an obstacle avoidance route of a cleaning robot according to an embodiment of the present disclosure;
FIG. 21 is a scenario display diagram of obstacle avoidance of a cleaning robot according to an embodiment of the present disclosure;
FIG. 22 is a flow architecture diagram for generating a semantic map according to an embodiment of the present disclosure;
FIG. 23 is a schematic flowchart of operation of a cleaning robot according to an embodiment of the present disclosure;
FIG. 24 is a flowchart of a first method for controlling a robot according to an embodiment of the present disclosure;
FIG. 25 is a schematic diagram of information such as an inclination angle, an emission point, and a light spot of a laser sensor according to an embodiment of the present disclosure;
FIG. 26 is a flowchart of a second method for controlling a robot according to an embodiment of the present disclosure;
FIG. 27 is a schematic diagram of a down ramp according to an embodiment of the present disclosure;
FIG. 28 is a schematic diagram of a large stair according to an embodiment of the present disclosure;
FIG. 29 is a schematic diagram of a high obstacle according to an embodiment of the present disclosure;
FIG. 30 is a schematic diagram of an up ramp according to an embodiment of the present disclosure;
FIG. 31 is a schematic block diagram of an obstacle avoidance apparatus for a cleaning robot according to an embodiment of the present disclosure;
FIG. 32 is a block diagram of a logic structure of an electronic device according to an embodiment of the present disclosure;
FIG. 33 is a schematic structural diagram of an apparatus for controlling a robot according to an embodiment of the present disclosure;
FIG. 34 is a schematic structural diagram of a robot according to an embodiment of the present disclosure;
FIG. 35 is a schematic block diagram of an apparatus for controlling a cleaning device according to an embodiment of the present disclosure;
FIG. 36 is a schematic block diagram of a cleaning device according to an embodiment of the present disclosure;
FIG. 37 is a schematic block diagram of a cleaning device according to another embodiment of the present disclosure;
FIG. 38 is a schematic block diagram of an apparatus for controlling a movable device according to an embodiment of the present disclosure;
FIG. 39 is a schematic block diagram of a movable device according to an embodiment of the present disclosure; and
FIG. 40 is a schematic block diagram of a movable device according to another embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A method for controlling a cleaning device, an apparatus for controlling a cleaning device, a cleaning device, and a readable storage medium provided by the embodiments of the present disclosure are described below with reference to the accompanying drawings.

In summary, in some embodiments of the present disclosure, a method for controlling a cleaning device is provided. The method comprises obtaining an environmental characteristic parameter by detecting an operation environment of the cleaning device. The environmental characteristic parameter comprises a room characteristic parameter and/or an obstacle parameter. The cleaning device may be controlled to perform cleaning according to the room characteristic parameter and/or the obstacle parameter. Exemplarily, the cleaning device is a cleaning robot. The cleaning robot determines its cleaning route, cleaning parameter, and the like according to the room characteristic parameter and/or the obstacle parameter, and performs automatic room cleaning based on the determined cleaning route, cleaning parameter, and the like. The cleaning robot may comprise, for example, a sweeper, a ground scrubber, a window cleaning robot, a tabletop robot, a garden robot, and the like. It should be noted that the method disclosed in this specification is not limited to the cleaning device, but may also be used in other industrial, commercial, and home robots, such as restaurant service robots.

The method for controlling the cleaning device is capable of controlling the cleaning device based on at least one of the room characteristic parameter and the obstacle parameter, to realize use of different cleaning control manners in different scenarios and realize more intelligent and customized cleaning, which improves high efficiency and accuracy of room cleaning and fully satisfies user's needs.

In another exemplary embodiment of the present disclosure, the method for controlling the cleaning device provided by the embodiments of the present disclosure is described in detail through specific embodiments and their application scenarios.

The room characteristic parameter may comprise floor characteristic information of a room. In another exemplary embodiment of the present disclosure, controlling the cleaning device to perform cleaning according to the room characteristic parameter comprises: determining control information according to the floor characteristic information, and maneuvering the cleaning device according to the control information.

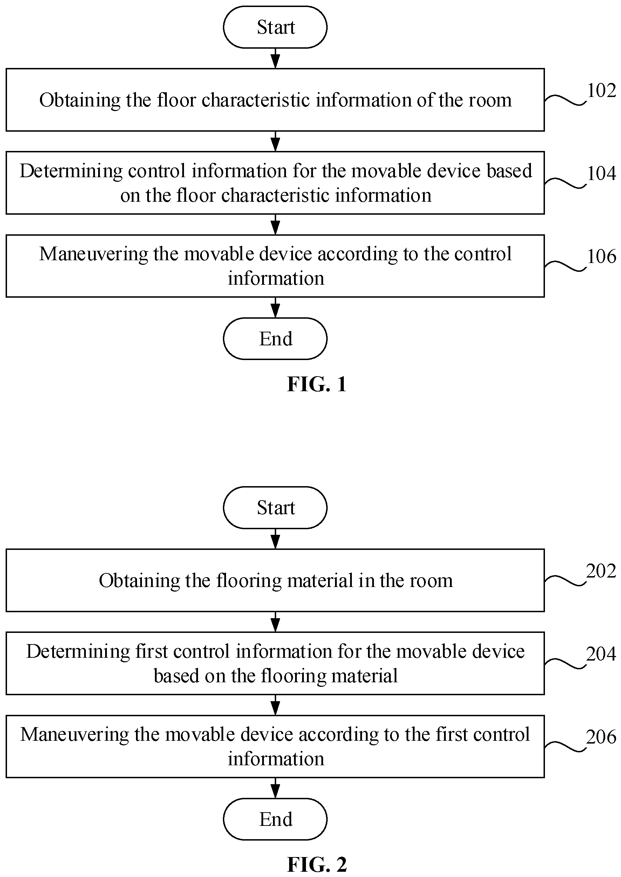

In an exemplary embodiment of the present disclosure, FIG. 1 illustrates a first schematic flowchart of a method for controlling a cleaning device. The cleaning device may be a movable device. As illustrated in FIG. 1, the method comprises steps 102 to 106.

At step 102, the floor characteristic information of the room is obtained.

At step 104, control information for the movable device is determined based on the floor characteristic information.

At step 106, the movable device is maneuvered according to the control information.

In this technical solution, the movable device may be a cleaning device like a sweeping robot, a mopping robot, and an all-in-one sweeping and mopping robot, and is movable in a plurality of rooms. In this way, an objective of performing cleaning in different rooms is realized.

In an exemplary embodiment of the present disclosure, the movable device is mounted with devices like a camera and an infrared sensor, and may acquire the floor characteristic information in the room. The floor characteristic information may indicate a ground paving situation in the room. Further, corresponding control information is determined according to the floor characteristic information in the room. In this way, the movable device performs a cleaning operation according to the control information.

It should be noted that the floor characteristic information comprises at least one of a flooring material, a flooring direction, a flooring size, a socket position, and a room segmenting characteristic.

Through the above manner, the movable device is capable of achieving more intelligent and customized cleaning based on ground situations of the room, and improving the efficiency and accuracy of the room cleaning.

In addition, when the floor characteristic information of the room is unrecognizable, a default cleaning strategy may be executed to ensure smooth progress of cleaning.

In another exemplary embodiment of the present disclosure, FIG. 2 illustrates a second schematic flowchart of a method for controlling a movable device when the floor characteristic information comprises the flooring material. As illustrated in FIG. 2, the method comprises step 202 to step 206.

At step 202, the flooring material in the room is obtained.

At step 204, first control information for the movable device is determined based on the flooring material.

At step 206, the movable device is maneuvered according to the first control information.

In this technical solution, the floor characteristic information may comprise flooring material. For example, the materials comprise wood (like the wood floors), porcelain, stone (like floor tiles), and the like.

The control information of the movable device comprises the first control information. The first control information may be at least one of a water allocating amount, a number of cleaning times, a fan suction force, and a moving speed.

In an exemplary embodiment of the present disclosure, based on a flooring material in the room, a water allocating amount, a fan suction force, and a moving speed of the movable device during operation are determined correspondingly, and a number of cleaning times of the movable device for the room is determined.

Exemplarily, a movement parameter (like motor speed feedback of the movable device) may be adaptively adjusted in actions such as going straight, turning, escaping from difficulties, and bypassing obstacles according to different flooring materials, to make motion of the movable device stabler and smoother.

In addition, for the fan suction force, different materials may correspond to different fan suction forces, and a fan suction force corresponding to a specific material may be determined according to a user's setting parameter. For example, a user may set a large fan suction force corresponding to a flooring material of porcelain or stone. In this way, water stains on a porcelain ground or stone ground can be blotted to the greatest extent, to avoid a problem where the user is slipped. The user may also set a large fan suction force corresponding to a flooring material of wood. Because the bedroom is usually paved with the wood floors, water stains on a ground of the bedroom are blotted to the greatest extent, to avoid a problem of dampness in the bedding caused by excessive water stains.

Through the above manner, the movable device is capable of realizing more personalized and intelligent cleaning of the room based on the flooring material in the room.

In another exemplary embodiment of the present disclosure, a water allocating amount corresponding to a flooring material of wood is smaller than a water allocating amount corresponding to a flooring material of porcelain or stone.

In this technical solution, in response to recognizing that the flooring material in the room is wood, i.e., when the wood floors are paved in the room, a water allocating amount of the movable device when performing cleaning may be reduced. In this way, a damage of water stains to the wood floors is reduced, to protect the wood floors.

In response to recognizing that the flooring material in the room is porcelain or stone, i.e., when the floor tiles are paved in the room, the water allocating amount of the movable device when performing cleaning may be relatively increased. In this way, a cleaning degree for the floor tiles is improved, and a cleaning effect is ensured.

In other some embodiments of the present disclosure, a number of cleaning times corresponding to a flooring material of wood is greater than a number of cleaning times corresponding to a flooring material of porcelain or stone.

In this technical solution, in response to recognizing that the flooring material in the room is wood, i.e., when the wood floors are paved in the room, the water allocating amount of the movable device when performing cleaning may be reduced. In this way, the damage of the water stains to the wood floors is reduced to protect the wood floors, and the number of cleaning times is increased to ensure the cleaning effect.

In response to recognizing that the flooring material in the room is porcelain or stone, i.e., when the floor tiles are paved in the room, the water allocating amount of the movable device when performing cleaning may be relatively increased. In this way, the cleaning degree for the floor tiles is improved to ensure the cleaning effect, while the number of cleaning times is relatively reduced to reduce a waste of electric energy for the movable device.

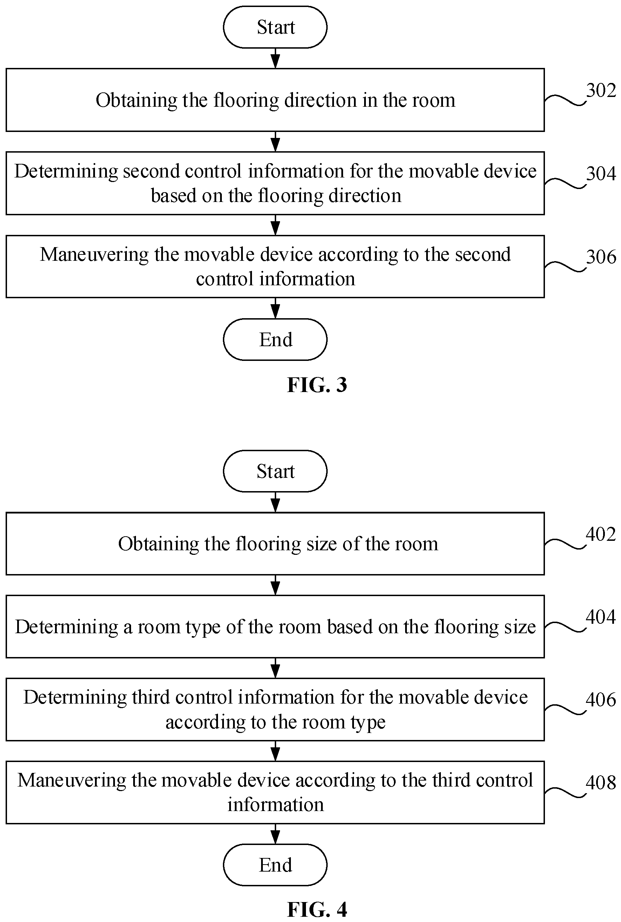

In another exemplary embodiment of the present disclosure, FIG. 3 illustrates a third schematic flowchart of a method for controlling a movable device when the floor characteristic information comprises a flooring direction. As illustrated in FIG. 3, the method comprises step 302 to step 306.

At step 302, the flooring direction in the room is obtained.

At step 304, second control information for the movable device is determined based on the flooring direction.

At step 306, the movable device is maneuvered according to the second control information.

The second control information comprises that a cleaning direction of the movable device is in consistent with the flooring direction.

In this technical solution, the floor characteristic information may comprise the flooring direction, i.e., a texture of the wood floor or floor tiles paved in the ground.

The control information of the movable device comprises the second control information, and the second control information may be control information indicating the cleaning direction of the movable device.

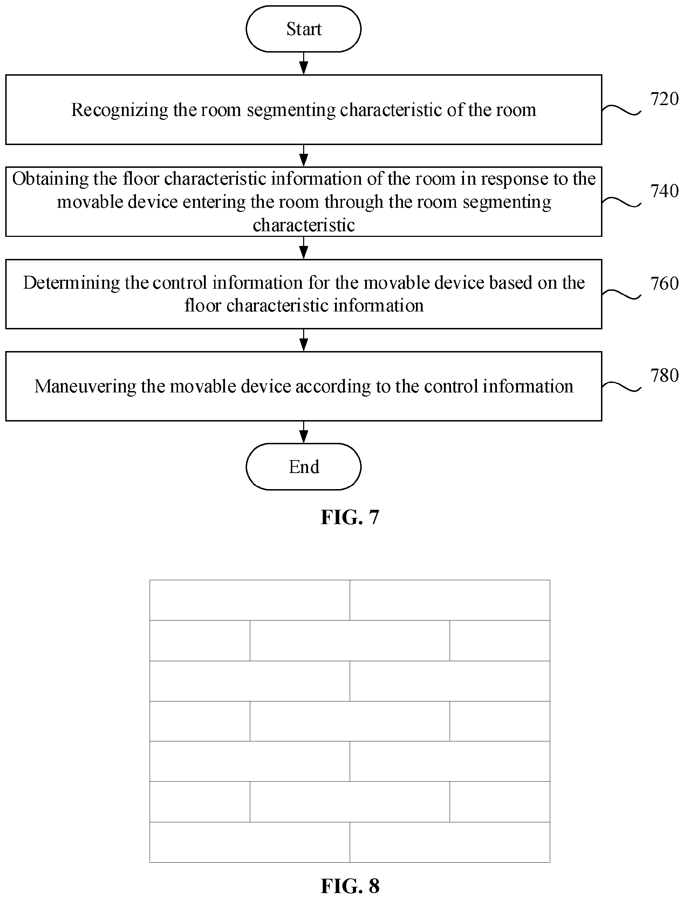

In an exemplary embodiment of the present disclosure, the cleaning direction of the movable device is correspondingly determined based on the flooring direction in the room. In this way, the cleaning direction of the movable device is in consistent with the flooring direction, i.e., the cleaning direction of the movable device is parallel to the flooring direction. As illustrated in FIG. 8, when the flooring direction in the room is lateral, the cleaning direction of the movable device is controlled to be parallel to the flooring direction.

Through the above manner, the movable device is capable of performing cleaning in a direction parallel to the flooring direction in the room. In this way, residual dust and water stains in gaps between the wood floors or floor tiles are reduced, and cleaning marks of the movable device on the wood floors or floor tiles are not chaotic, to make the cleaning marks more beautiful and to improve the cleaning effect.

In another exemplary embodiment of the present disclosure, FIG. 4 illustrates a fourth schematic flowchart of a method for controlling a movable device when the floor characteristic information comprises a flooring size. As illustrated in FIG. 4, the method comprises step 402 to step 408.

At step 402, the flooring size of the room is obtained.

At step 404, a room type of the room is determined based on the flooring size.

At step 406, third control information for the movable device is determined according to the room type.

At step 408, the movable device is maneuvered according to the third control information.

In this technical solution, the floor characteristic information may comprise the flooring size, i.e., a size of the room, and the control information of the movable device may comprise the third control information.

In an exemplary embodiment of the present disclosure, the size of the room is determined based on the flooring size of the room. In this way, the room type is determined, and the third control information of the movable device is further determined correspondingly according to the room type.

Through the above manner, the cleaning of the movable device can be adaptively controlled according to the room type. In this way, the efficiency and accuracy of the room cleaning are improved.

In any of the technical solutions described above, the room type comprises at least one of a bedroom, a living room, a kitchen, and a toilet.

In the technical solution, the room may comprise a bedroom, a living room, a kitchen, or a toilet, and cleaning manners of the movable device may be different in different types of rooms.

In any of the above-described technical solutions, the third control information comprises at least one of a room cleaning sequence, a cleaning agent amount, and a disinfectant amount.

In the technical solution, the third control information of the movable device may be the at least one of the room cleaning sequence, the cleaning agent amount, and the disinfectant amount. For example, when the room is determined to be the bedroom, the room may be cleaned first. When the room is determined to be the living room, the living room may be cleaned after the bedroom is cleaned. When the room is determined to be the kitchen or toilet, the cleaning device may spray the cleaning agent, disinfectant, and the like.

Through the above manner, more intelligent and customized cleaning is realized.

It should be noted that control on the movable device in combination with the flooring size may be performed after a step of controlling the movable device according to the flooring material and/or the flooring direction.

Exemplarily, since the bedroom and living room are typically paved with the wood floors, the kitchen and toilet are typically paved with the floor tiles. After it is recognized that the wood floors are paved on the ground in the room, the room may be preliminarily determined as the bedroom or the living room, and the first control information and/or the second control information may be determined. Further, combined with the room size, it is concretely speculated whether the room is the bedroom or the living room, to determine the room cleaning sequence. For example, based on a small room size of the current room, it is determined that the current room is the bedroom. Moreover, a cleaning priority of the bedroom is pre-set to be greater than a cleaning priority of the living room, so the current bedroom is cleaned first.

Alternatively, the movable device may be controlled in combination with the flooring size, the flooring material and/or the flooring direction.

Exemplarily, in response to recognizing that the wood floors are paved in the room, and it is speculated that the room is the bedroom or the living room based on a room size characteristic. In this way, the room is cleaned first, and then the kitchen, toilet, and other rooms are cleaned, which satisfies the user's needs. In response to recognizing that the floor tiles are paved in the room, and when the size of the room is relatively small, it may be determined that the room is the kitchen or toilet, and then the room will be cleaned finally. Moreover, the cleaning agent, disinfectant, and the like may be sprayed during cleaning.

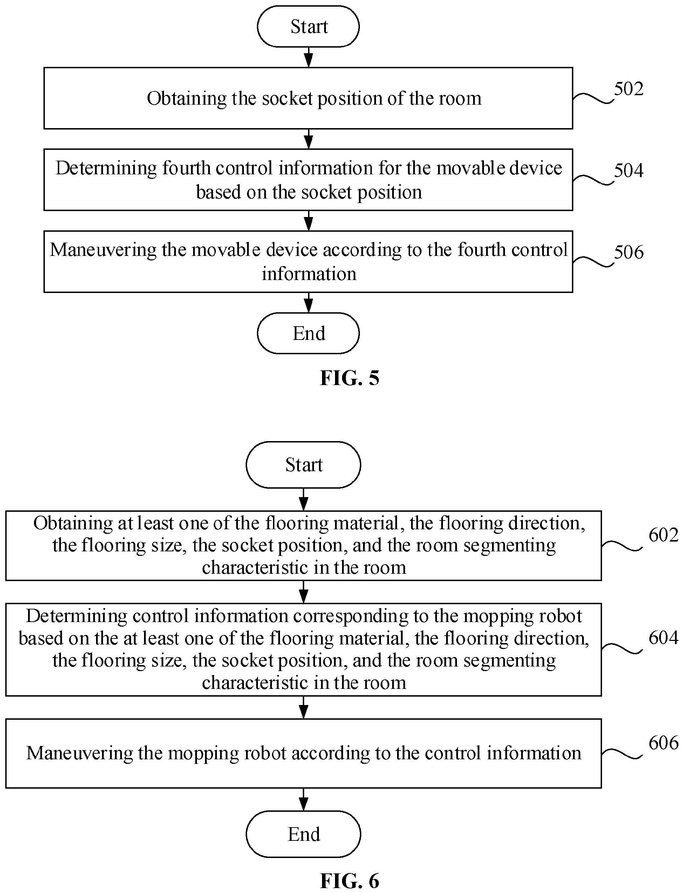

In another exemplary embodiment of the present disclosure, FIG. 5 illustrates a fifth schematic flowchart of a method for controlling a movable device when the floor characteristic information comprises the socket position. As illustrated in FIG. 5, the method comprises step 502 to step 506.

At step 502, the socket position of the room is obtained.

At step 504, fourth control information for the movable device is determined based on the socket position.

At step 506, the movable device is maneuvered according to the fourth control information.

In this technical solution, the floor characteristic information may comprise the socket position, i.e., a position of a socket mounted on the ground. The control information of the movable device comprises the fourth control information for controlling a movement route of the movable device.

In an exemplary embodiment of the present disclosure, based on the socket position on the ground of the room, the movement route of the movable device is controlled to avoid the occurrence of a risk of electric leakage at a position where the movable device cleans the socket and to improve safety during cleaning.

In the above-described technical solution, the fourth control information comprises that a cleaning area of the movable device is controlled to be out of a predetermined range of the socket position.

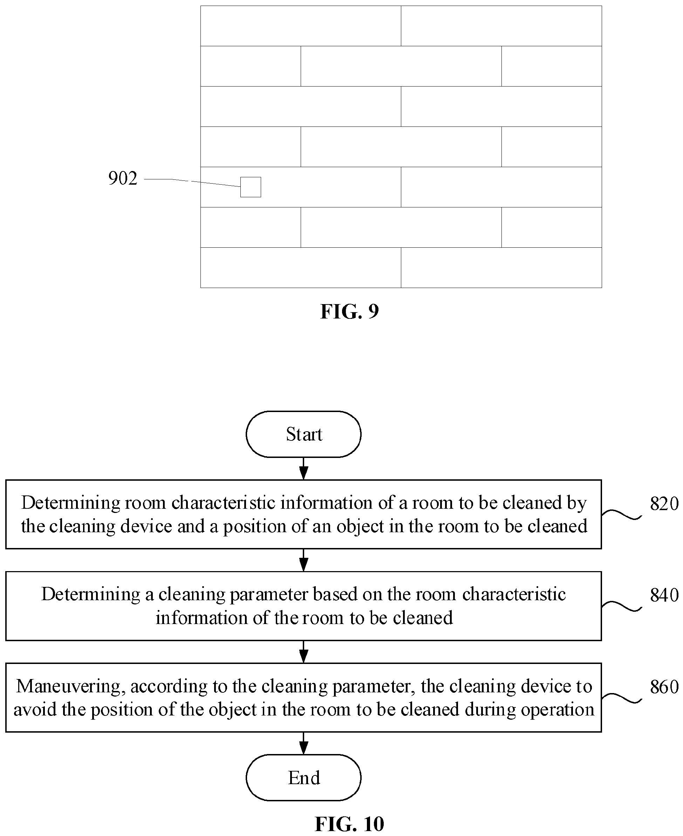

In this technical solution, as illustrated in FIG. 9, in response to recognizing a socket 902 mounted on the ground in the room, the movable device may maintain a predetermined safe distance from the socket 902 during cleaning, i.e., cleaning is performed out of the predetermined range from the socket 902. For example, cleaning is performed outside a position at a distance of 10 centimeters or 20 centimeters from the socket 902.

Through the above manner, the risk of electric leakage at the position where the movable device cleans the socket is avoided, and the safety during cleaning is improved.

It should be noted that performing control on the movable device in conjunction with the socket position may be before or after the step of controlling the movable device according to the flooring material and/or the flooring direction. Alternatively, the movable device may be controlled in combination with the socket position, the flooring material and/or the flooring direction.

In another exemplary embodiment of the present disclosure, when the floor characteristic information comprises the room segmenting characteristic of the room, the step of determining the control information for the movable device based on the floor characteristic information specifically comprises: determining whether a height of the room segmenting characteristic exceeds a predetermined threshold, and determining control information corresponding to the room segmenting characteristic when the height of the room segmenting characteristic does not exceed the predetermined threshold. The room segmenting characteristic refers to a characteristic line (such as a boundary line) that separates different rooms, like a door pass bar, a threshold stone, and a door sliding track.

In this technical solution, the floor characteristic information may comprise the room segmenting characteristic of the room, such as a door pass bar, a threshold stone, and a door sliding track.

When it is recognized that the height of the room segmenting characteristic does not exceed the predetermined threshold, which indicates that the height of the room segmenting characteristic is low, the movable device may be controlled to clean the position. When it is recognized that the height of the room segmenting characteristic exceeds the predetermined threshold, which indicates that the height of the room segmenting characteristic is high, the movable device is allowed not to clean the position, to prevent the movable device from being stuck at a position of the room segmenting characteristic.

In another exemplary embodiment of the present disclosure, as an example, the movable device is the mopping robot. The mopping robot usually uses a single-line laser radar or a camera as a main sensor to perceive an environment and establish a map, and has an intelligence degree that is mainly reflected in an improvement in accuracy of navigation and motion, recognition and collision-free of isolated objects, and non-omission cleaning of segmented regions. As a core function of the mopping robot, cleaning is mostly reflected in characteristics of carpet pressurization, the number of cleaning times, a bow spacing, disinfection and sterilization.

In a region, macro characteristics, such as apartment patterns, room distribution, and ground materials of different families are highly similar. But when it comes to individual families, scenarios, obstacles, and the like vary widely. Therefore, a deep cleaning function needs to start with commonality of cleaning tasks and materials. Based on a large number of room ground-pattern image data and decoration cases, by using a deep learning technology, a ground material and paving pattern recognition model with high accuracy may be obtained through training, which may guide the mopping robot to divide the room map in the cleaning task more accurately, clean according to the room sequence, adjust the cleaning direction, adjust a water allocating amount of mopping, adjust the fan suction force, and the like, to achieve more intelligent and customized deep cleaning.

FIG. 6 illustrates a sixth schematic flowchart of a method for controlling a movable device according to an embodiment of the present disclosure. As illustrated in FIG. 6, the method comprises step 602 to step 606.

At step 602, at least one of the flooring material, the flooring direction, the flooring size, the socket position, and the room segmenting characteristic in the room is obtained.

At step 604, control information corresponding to the mopping robot is determined based on the at least one of the flooring material, the flooring direction, the flooring size, the socket position, and the room segmenting characteristic.

At step 606, the mopping robot is maneuvered according to the control information.

The method uses cameras, infrared sensors, and the like to acquire the floor characteristic information, and obtains a classification result for the ground materials (usually two classifications, such as the wood floors or floor tiles), as well as a paving manner of the ground materials (usually two classifications, such as horizontal paving or vertical paving) through characteristic extraction, image recognition, big data training and learning, and the like, to add the classification result and the paving manner to map semantics to assist the mopping robot to execute a more efficient, accurate, and friendly cleaning strategy, to achieve intelligent deep cleaning.

Through the above manner, the mopping robot is capable of achieving more intelligent and customized cleaning based on ground situations of the room, and improve the efficiency and accuracy of the room cleaning.

In another exemplary embodiment of the present disclosure, FIG. 7 illustrates a seventh schematic flowchart of a method for controlling a movable device. As illustrated in FIG. 7, the method comprises step 720 to step 780.

At step 720, the room segmenting characteristic of the room is recognized.

At step 740, the floor characteristic information of the room is obtained in response to the movable device entering the room through the room segmenting characteristic.

At step 760, the control information for the movable device is determined based on the floor characteristic information.

At step 780, the movable device is maneuvered according to the control information.

In the technical solution, the room segmenting characteristic is an important basis for room division, and may comprise a door pass bar, a threshold stone, a door sliding track, and the like.

In response to recognizing that the movable device enters the room through the room segmenting characteristic, the floor characteristic information of the room is acquired, and the movable device is further controlled to perform room cleaning according to the control information corresponding to the floor characteristic information.

Through the above manner, according to the room segmenting characteristic, it may be accurately determined that whether the movable device enters the room. In this way, the floor characteristic information is acquired after the movable device enters the room, to realize timely and accurate acquisition of the floor characteristic information.

In some embodiments, a deep learning model is trained on a server side according to characteristics like a ground material type, a paving pattern direction, the door pass bar, the threshold stone, and the door sliding track, and the movable device completes the recognition and saves the result. In response to recognizing the room segmenting characteristics such as the door pass bar, the threshold stone, and the door sliding track, the room segmenting characteristics are marked on the map as an important basis for room division on the map, which may make an application map more real and more accurate. Moreover, the cleaning route of the movable device is clearer and easier to understand, which prevents the movable device from getting stuck at the door sliding track and improves cleaning efficiency.

Further, in some embodiments of the present disclosure, the method further comprises, prior to the step of obtaining the floor characteristic information of the room: determining a correspondence relationship between the floor characteristic information and the control information.

In this technical solution, the correspondence relationship between the floor characteristic information and the control information is determined.

For example, the correspondence relationship comprises a correspondence relationship between the flooring material and at least one of the water allocating amount, the number of cleaning times, the fan suction force, and the moving speed, a correspondence relationship between the flooring direction and the cleaning direction of the movable device, a correspondence relationship between the room type and at least one of the types of the room, and a correspondence relationship between the socket position and the cleaning area of the movable device.

Through the above manner, more intelligent and customized cleaning is realized.

In another exemplary embodiment of the present disclosure, the room characteristic parameter comprises room characteristic information of a room, and the obstacle parameter comprises a position of an object in the room. The step of controlling the cleaning device to perform cleaning according to the room characteristic parameter and the obstacle parameter comprises: determining a cleaning parameter according to the room characteristic information; and controlling the cleaning device to avoid the position of the object and to operate according to the cleaning parameter.

In an exemplary embodiment of the present disclosure, FIG. 10 illustrates an eighth schematic flowchart of a method for controlling a cleaning device according to an embodiment of the present disclosure. As illustrated in FIG. 10, the method comprises step 820 to step 860.

At step 820, room characteristic information of a room to be cleaned by the cleaning device and a position of an object in the room to be cleaned are determined.

At step 840, a cleaning parameter is determined based on the room characteristic information of the room to be cleaned.

At step 860, according to the cleaning parameter, the cleaning device is maneuvered to avoid the position of the object in the room to be cleaned during operation.

In this technical solution, the cleaning device may be a device like a sweeping robot, a mopping robot, and an all-in-one sweeping and mopping robot, and is movable in a plurality of rooms. In this way, the objective of performing cleaning in different rooms is realized.

In an exemplary embodiment of the present disclosure, the cleaning device is mounted with a camera, an infrared sensor, and the like, and may acquire the room characteristic information in the room and a specific position of a fixed object in the room. Position characteristic information of the object is capable of indicating the room type, the ground paving in the room, and other situations. The objects may be furniture, electrical appliances, and the like, such as tables and chairs, sofas, carpets, and air conditioners.

Further, a corresponding cleaning parameter is determined according to the room characteristic information in the room, and a route of the cleaning device is determined according to the specific position of the fixed object. In this way, the cleaning device can move with avoiding the specific position of the fixed object and perform a cleaning operation according to the control information.

It should be noted that the room characteristic information comprises at least one of the room type and the flooring material.

Through the above manner, the cleaning device is able to adaptively set a reasonable cleaning manner based on a specific situation of the room, realize more intelligent and customized cleaning, and improve the efficiency and accuracy of the room cleaning.

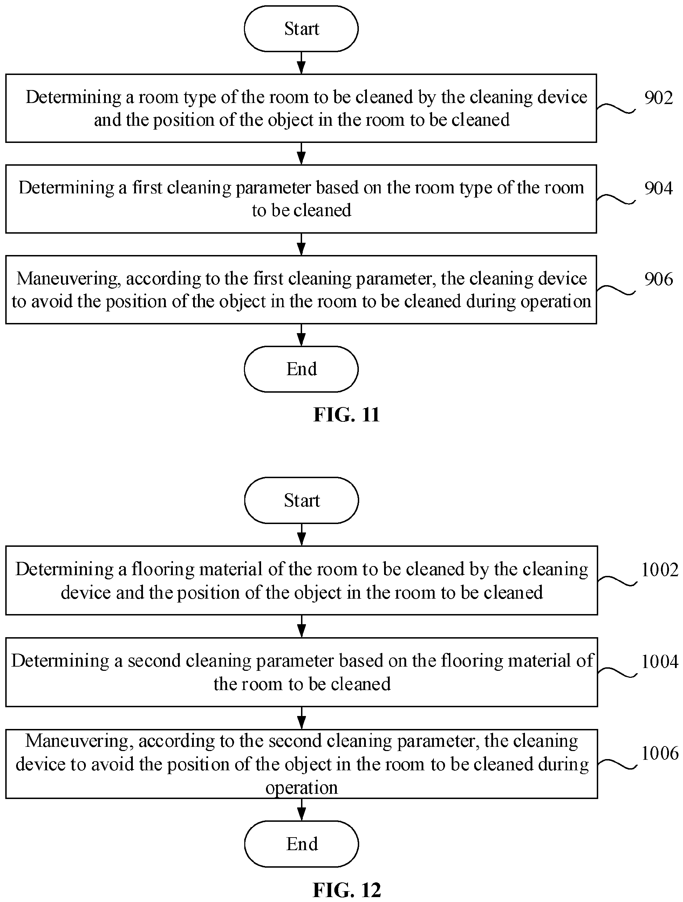

In another exemplary embodiment of the present disclosure, FIG. 11 illustrates a ninth schematic flowchart of a method for controlling a cleaning device when the room characteristic information comprises the room type. As illustrated in FIG. 11, the method comprises step 902 to step 906.

At step 902, a room type of the room to be cleaned by the cleaning device and the position of the object in the room to be cleaned are determined.

At step 904, a first cleaning parameter is determined based on the room type of the room to be cleaned.

At step 906, according to the first cleaning parameter, the cleaning device is maneuvered to avoid the position of the object in the room to be cleaned during operation.

The first cleaning parameter comprises at least one of a cleaning priority and a cleaning degree.

In the technical solution, the room characteristic information may comprise the room type, and the first cleaning parameter of the cleaning device may be further determined correspondingly according to the room type.

The cleaning parameter of the cleaning device comprises the first cleaning parameter. The room may comprise a bedroom, a living room, a kitchen, or a toilet. The first cleaning parameters such as the cleaning priorities and the cleaning degrees of the cleaning device in different types of rooms may be different.

Through the above manner, the cleaning manner of the cleaning device is adaptively controlled according to the room type. In this way, the efficiency and accuracy of the room cleaning are improved.

In this embodiment, when the room is the bedroom or the living room, the cleaning priority is greater than or equal to a first threshold. When the room is the toilet or the kitchen, the cleaning priority is smaller than the first threshold, i.e., a cleaning priority of the bedroom or living room is greater than a cleaning priority of the toilet or kitchen.

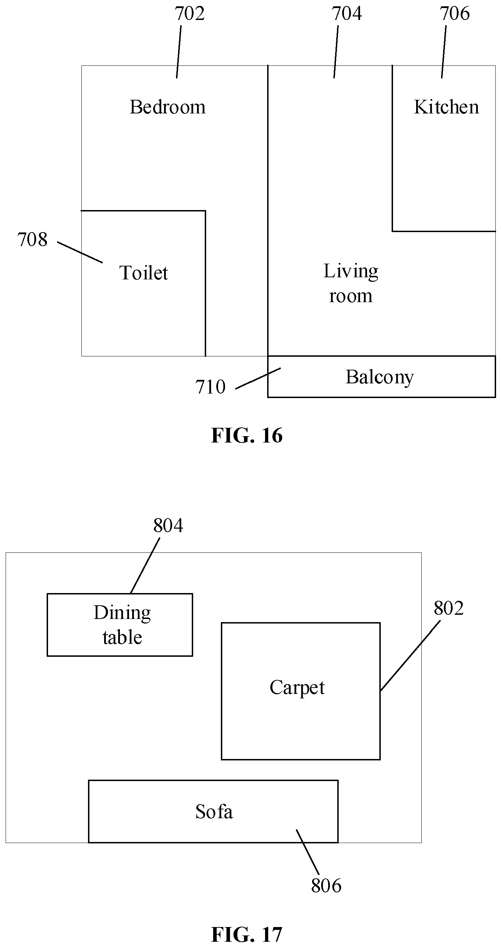

Exemplarily, as illustrated in FIG. 16, the room may comprise a bedroom 702, a living room 704, a kitchen 706, and a toilet 708. The room may be prioritized for cleaning when determined to be the bedroom 702 or the living room 704. When the room is determined to be the toilet 708 or kitchen 706, the toilet 708 or kitchen 706 may be cleaned after the bedroom 702 or living room 704 has been cleaned.

Through the above manner, more intelligent and customized cleaning is realized.

In this embodiment, since a dirty degree of the toilet or the kitchen is greater than a dirty degree of the bedroom or the living room, a cleaning degree for the toilet or a cleaning degree of the kitchen is also greater, and a cleaning degree of the toilet or the kitchen is set to be greater than that a cleaning degree of the bedroom or the living room. That is, the cleaning degree corresponding to a room type of the toilet or kitchen is greater than or equal to a second threshold, and the cleaning degree corresponding to a room type of the bedroom or living room is smaller than the second threshold.

In an exemplary embodiment of the present disclosure, the cleaning degree may be represented as the number of cleaning times, a wiping strength for the ground, whether to spray the cleaning agent, the disinfectant, and the like. For example, when the room is determined to be the kitchen or toilet, the cleaning device may spray the cleaning agent, the disinfectant, and the like to improve the cleaning degree.

Through the above manner, more intelligent and customized cleaning is realized.

In another exemplary embodiment of the present disclosure, FIG. 12 illustrates a tenth schematic flowchart of a method for controlling a cleaning device when the room characteristic information comprises the flooring material. As illustrated in FIG. 12, the method comprises step 1002 to step 1006.

At step 1002, a flooring material in the room to be cleaned by the cleaning device and the position of the object in the room to be cleaned are determined.

At step 1004, a second cleaning parameter is determined based on the flooring material in the room to be cleaned.

At step 1006, according to the second cleaning parameter, the cleaning device is maneuvered to avoid the position of the object in the room to be cleaned during operation.

The second cleaning parameter comprises at least one of the water allocating amount, the number of cleaning times, and the fan suction force.

In this technical solution, the room characteristic information may comprise the flooring material. For example, the materials comprise wood (like the wood floors), porcelain, stone (like the floor tiles), concrete, and the like.

The cleaning parameter of the cleaning device comprises the second cleaning parameter, and the second cleaning parameter may be at least one of the water allocating amount, the number of cleaning times, and the fan suction force.

In an exemplary embodiment of the present disclosure, the water allocating amount, the number of cleaning times, the fan suction force, and the like of the cleaning device during operation are correspondingly determined based on the flooring material in the room.

Through the above manner, the cleaning device is capable of realizing more personalized and intelligent cleaning of the room based on the flooring material in the room.

In this embodiment, a water allocating amount of the cleaning device corresponding to a flooring material of wood is smaller than a water allocating amount of the cleaning device corresponding to a flooring material of porcelain or stone, and the water allocating amount of the cleaning device corresponding to a flooring material of porcelain or stone is smaller than a water allocating amount of the cleaning device corresponding to a flooring material of concrete.

In the technical solution, the water allocating amount of the cleaning device corresponding to a flooring material of wood is smaller than or equal to a third threshold. The water allocating amount of the cleaning device corresponding to a flooring material of porcelain or stone is greater than the third threshold and smaller than or equal to a fourth threshold. The water allocating amount of the cleaning device corresponding to a flooring material of concrete is greater than the fourth threshold. The fourth threshold is greater than the third threshold.

In an exemplary embodiment of the present disclosure, as illustrated in FIG. 16, the room may comprise a bedroom 702, a living room 704, a kitchen 706, a toilet 708, and a balcony 710. Flooring materials in the bedroom 702 and the living room 704 are wood, flooring materials in the kitchen 706 and the toilet 708 are porcelain or stone, and a flooring material in the balcony 710 is concrete.

In response to recognizing that the flooring material in the room is wood, i.e., when the wood floors are paved in the room, the water allocating amount of the cleaning device when performing cleaning may be relatively reduced. In this way, the damage of water stains to the wood floors is reduced, to protect the wood floors.

In response to recognizing that the flooring material in the room is porcelain or stone, i.e., when the floor tiles are paved in the room, the water allocating amount of the cleaning device when performing cleaning may be controlled to be moderate. In this way, the cleaning degree for the floor tiles is improved, and the cleaning effect is ensured.

In response to recognizing that the flooring material in the room is concrete, i.e., when cement is paved in the room, the water allocating amount of the cleaning device when performing cleaning may be relatively increased. In this way, a cleaning degree for a cement ground is improved, and the cleaning effect is ensured.

In this embodiment, the number of cleaning times of the cleaning device corresponding to a flooring material of wood is greater than the number of cleaning times of the cleaning device corresponding to a flooring material of porcelain or stone, and the number of cleaning times of the cleaning device corresponding to a flooring material of porcelain or stone is greater than the number of cleaning times of the cleaning device corresponding to a flooring material of concrete.

In the technical solution, the number of cleaning times of the cleaning device corresponding to a flooring material of wood is greater than or equal to a fifth threshold. The number of cleaning times of the cleaning device corresponding to a flooring material of porcelain or stone is smaller than the fifth threshold and greater than or equal to a sixth threshold. The number of cleaning times of the cleaning device corresponding to a flooring material of concrete is smaller than the sixth threshold. The sixth threshold is smaller than the fifth threshold.

In an exemplary embodiment of the present disclosure, in response to recognizing that the flooring material in the room is wood, i.e., the wood floors are paved in the room, the water allocating amount of the cleaning device when performing cleaning may be relatively reduced. In this way, the damage of water stains to the wood floors is reduced to protect the wood floors, and the number of cleaning times of the cleaning device is increased to ensure the cleaning effect.

In response to recognizing that the flooring material in the room is porcelain or stone, i.e., the floor tiles are paved in the room, the water allocating amount and the number of cleaning times of the cleaning device when performing cleaning may be controlled to be moderate. In this way, the cleaning degree for the floor tiles is improved, and the cleaning effect is ensured.

In response to recognizing that the flooring material in the room is concrete, i.e., the cement is paved in the room, the water allocating amount of the cleaning device when performing cleaning may be relatively increased. In this way, the cleaning degree for the cement ground is improved to ensure the cleaning effect, while the number of cleaning times is relatively reduced to reduce the waste of the electric energy for the cleaning device.

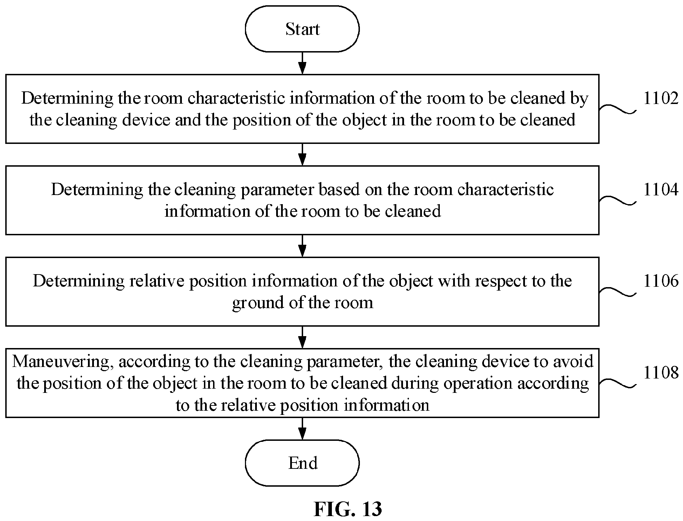

In another exemplary embodiment of the present disclosure, FIG. 13 illustrates an eleventh schematic flowchart of a method for controlling a cleaning device. As illustrated in FIG. 13, the method comprises step 1102 to step 1108.

At step 1102, the room characteristic information of the room to be cleaned by the cleaning device and the position of the object in the room to be cleaned are determined;

At step 1104, the cleaning parameter is determined based on the room characteristic information of the room to be cleaned.

At step 1106, relative position information of the object with respect to the ground of the room is determined.

At step 1108, according to the cleaning parameter, the cleaning device maneuvered to avoid the position of the object in the room to be cleaned during operation according to the relative position information.

In the technical solution, the relative position information of the object in the room with respect to the ground is determined. The relative position information is capable of indicating whether there is a gap between the object and the ground and a size of the gap when there is a gap. Further, according to whether there is a gap or the size of the gap when there is a gap, it is controlled whether the cleaning device moves with avoiding the object.

Exemplarily, as illustrated in FIG. 17, a carpet 802 is paved on a local region of the room ground. There is no gap between the carpet 802 and the ground. In this way, the cleaning device is controlled to perform cleaning with avoiding the carpet. For objects such as tables and chairs in the room, the cleaning device is controlled to perform cleaning with selective avoidance. As illustrated in FIG. 17, a dining table 804 is placed in the room. There is a large gap between a tabletop of the dining table 804 and the ground. In this way, the cleaning device is controlled to avoid table legs of the dining table 804 and pass under the tabletop of the dining table 804, i.e., the dining table 804 is not completely avoided by the cleaning device. A sofa 806 is also placed in the room. There is a small gap between the sofa 806 and the ground. In this way, the cleaning device is controlled to avoid the sofa 806 to prevent the cleaning device from being trapped in the small gap.

Through the above-mentioned manner, control on a manner of avoiding the object by the cleaning device is realized, and the cleaning effect of the room is improved.

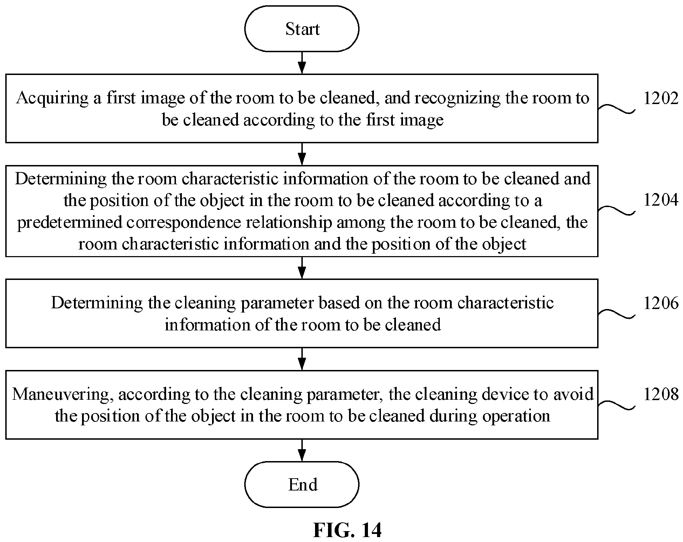

In another exemplary embodiment of the present disclosure, FIG. 14 illustrates a twelfth schematic flowchart of a method for controlling a cleaning device. As illustrated in FIG. 14, the method comprises step 1202 to step 1208.

At step 1202, a first image of the room to be cleaned is acquired, and the room to be cleaned is recognized according to the first image.

At step 1204, the room characteristic information of the room to be cleaned and the position of the object in the room to be cleaned are determined according to a predetermined correspondence relationship among the room to be cleaned, the room characteristic information and the position of the object.

At step 1206, the cleaning parameter is determined based on the room characteristic information of the room to be cleaned.

At step 1208, according to the cleaning parameter, the cleaning device is maneuvered to avoid the position of the object in the room to be cleaned during operation.

In the technical solution, by acquiring the first image of the room, a specific room entered by the cleaning device is determined based on the first image, and the room characteristic information of the room and the position of the object are further determined according to the predetermined correspondence relationship among the room, the room characteristic information, and the position of the object.

That is, the predetermined correspondence relationship among the room, the room characteristic information, and the position of the object is pre-stored. After the specific room is determined according to the first image, the room characteristic information of the room and the position of the object may be obtained.

Through the above manner, after the entered room is determined, the pre-stored room characteristic information and position of the object may be obtained according to the predetermined correspondence relationship, without the need to recognize the room characteristic information and the position of the object through the image. In this way, accuracy and timeliness of obtaining the room characteristic information and the position of the object are improved.

In another exemplary embodiment of the present disclosure, the method further comprises, prior to the step of determining the room characteristic information of the room to be cleaned and the position of the object in the room to be cleaned: controlling the cleaning device to move in the room, and acquiring a second image of the room during the movement; and recognizing the second image, obtaining the room characteristic information of the room and the position of the object, and determining the predetermined correspondence relationship among the room, the room characteristic information, and the position of the object.

In the technical solution, the cleaning device is controlled to move in the room, and the second image of the room is obtained during the movement, to realize image collection with positioning. Further, the room characteristic information of the room and the position of the object are recognized in the second image, and a room name is stored in correspondence with the room characteristic information and the position of the object to determine the predetermined correspondence relationship.

When the cleaning device performs next cleaning, the room characteristic information and the position of object are determined according to the predetermined correspondence relationship. In this way, the cleaning plan is formulated based on the actual situation, and intelligence of the cleaning device is improved.

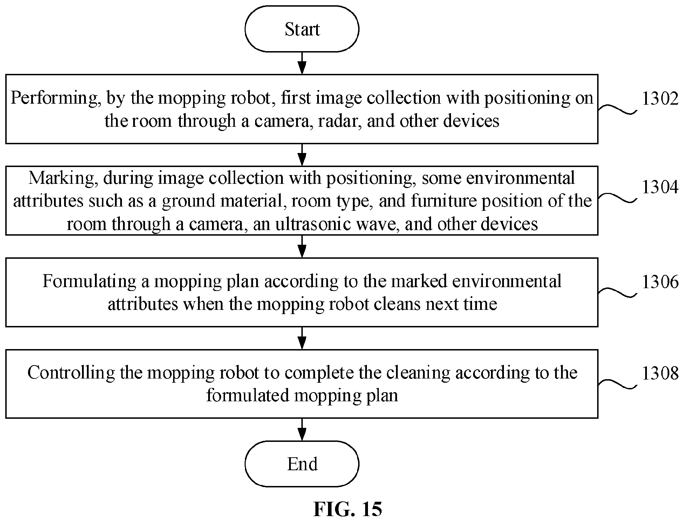

In another exemplary embodiment of the present disclosure, as an example, the cleaning device is a mopping robot. FIG. 15 illustrates a thirteenth schematic flowchart of a method for controlling a cleaning device. As illustrated in FIG. 15, the method comprises step 1302 to step 1308.

At step 1302, the mopping robot performs first image collection with positioning on the room through a camera, radar, and other devices.

At step 1304, during image collection with positioning, some environmental attributes such as a ground material, room type, and furniture position of the room are marked through a camera, an ultrasonic wave, and other devices.

At step 1306, when the mopping robot cleans next time, a mopping plan is formulated according to the marked environmental attributes.

At step 1308, the mopping robot is controlled to complete the cleaning according to the formulated mopping plan.

For example, a water allocating amount of the mopping robot on a wood floor should be low, a water allocating amount of the mopping robot on a ceramic tile ground should be moderate, and a water allocating amount of the mopping robot on the cement ground should be large. For the bedroom and living room, mopping and sweeping on the bedroom and living room are performed first with a normal number of times. For the kitchen and toilet, mopping and sweeping on the kitchen and toilet are performed finally with an increased number of times. The carpet needs to be avoided, and the tables and chairs need to be selectively avoided.

Through the above manner, on the one hand, cleaning of the mopping robot is made more targeted, causing a category decision-making and planning method for a mopping robot to present differentiation from the sweeper. On the other hand, the cleaning of the mopping robot is made more intelligent, which can adaptively formulate mopping plans according to the environmental attributes, with a high intelligence degree.

In another exemplary embodiment of the present disclosure, the cleaning device may be a cleaning robot. The step of controlling the cleaning device to perform cleaning according to the obstacle parameter comprises: starting a cleaning in a target region at a first speed after receiving an operation instruction; obtaining, in response to detecting a target obstacle at a position having a first distance from the cleaning robot in a current forward direction, a recognition result for determining an object category of the target obstacle by using an imaging apparatus disposed on the cleaning robot; selecting a target obstacle avoidance route based on the recognition result; and maneuvering the cleaning robot based on the target obstacle avoidance route. The target obstacle avoidance route corresponds to one of changing the current forward direction and maintaining the current forward direction

It can be seen that in some embodiments of the present disclosure, performing control on the cleaning device according to the obstacle parameters may be that performing obstacle avoidance control on the cleaning robot.

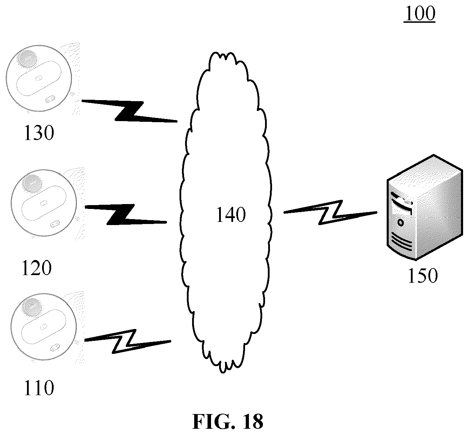

FIG. 18 illustrates a schematic diagram of an exemplary system architecture 100, where an obstacle avoidance method for a cleaning robot or obstacle avoidance of the cleaning robot according to an embodiment of the present disclosure may be applied.

As illustrated in FIG. 18, the system architecture 100 may comprise one or more of cleaning robots 110, 120, 130, a network 140, and a server 150. The network 140 is configured to provide a medium of a communication link between the cleaning robots 110, 120, 130 and the server 150. The network 140 may comprise various connection types, such as a wired communication link, a wireless communication link, or a fiber optic cable.

It should be understood that a number of cleaning robots, a number of networks, and a number of servers in FIG. 18 are schematic only. There may be any number of cleaning robots, networks, and servers as realization needs. For example, the server 150 may be a server cluster composed of a plurality of servers or the like.

The user may use the cleaning robots 110, 120, 130 to interact with the server 150 through the network 140 to receive or transmit messages, acquire images, and the like. The cleaning robots 110, 120, 130 may comprise various electronic devices having a display screen and a camera acquisition apparatus.

The cleaning robots 110, 120, 130 in the present disclosure may be cleaning robots providing various services. For example, the user realizes, through the cleaning robot 130 (also may be the cleaning robot 110 or the cleaning robot 120): starting the cleaning in the target region at the first speed after receiving the operation instruction; obtaining, in response to detecting the target obstacle at the position having the first distance from the cleaning robot in the current forward direction, the recognition result for determining the object category of the target obstacle by using the imaging apparatus disposed on the cleaning robot; selecting the corresponding target obstacle avoidance route based on the recognition result; and maneuvering the cleaning robot based on the target obstacle avoidance route. The target obstacle avoidance route corresponds to the one of changing the current forward direction and maintaining the current forward direction.

It should be noted here that the obstacle avoidance method for the cleaning robot provided in the embodiments of the present disclosure may be performed by one or more of the cleaning robots 110, 120, 130 and/or the server 150. Accordingly, an obstacle avoidance apparatus for the cleaning robot provided in the embodiments of the present disclosure is generally provided in the corresponding cleaning robot and/or the server 150, the present disclosure is not limited thereto.

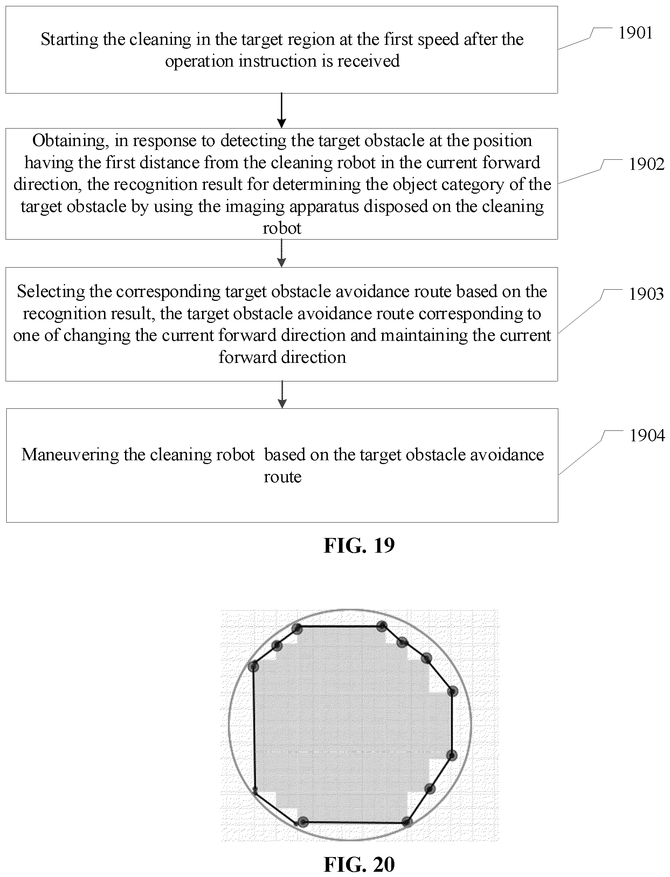

FIG. 19 schematically illustrates a schematic flowchart of an obstacle avoidance method for a cleaning robot according to an embodiment of the present disclosure. As illustrated in FIG. 19, the method is applied to the cleaning robot, and comprises step S1901 and step S1904.

At step S1901, after the operation instruction is received, the cleaning is started in the target region at the first speed.

The cleaning robot is a kind of smart household appliances, and may automatically complete a floor cleaning operation in the region with predetermined artificial intelligence. Brush sweeping and vacuum manners are generally configured to absorb debris on the ground into its own garbage storage box first, to complete a function of ground cleaning.

It should be noted that the operation instruction in the present disclosure may be generated by the user or generated according to a predetermined rule. For example, the robot may be instructed to perform an operating instruction for indoor cleaning at regular intervals, and the like.

In addition, it should be noted that the present disclosure does not limit the target region. For example, the target region may correspond to the bedroom, the kitchen, an office region, or the like. Also, the present disclosure does not limit the first speed. For example, the first speed may be a general operation speed or a fast operation speed.

At step S1902, in response to detecting the target obstacle at the position having the first distance from the cleaning robot in the current forward direction, the recognition result for determining the object category of the target obstacle is obtained by using the imaging apparatus disposed on the cleaning robot.

In the related art, when a traditional cleaning robot performs indoor cleaning, the obstacle usually needs to be avoided to avoid the occurrence of a case where the robot continues to hit walls. In the related art, the cleaning robot usually performs obstacle recognition in perception manners based on sensors such as a laser radar and ultrasonic wave. Further, for example, for a sweeper obstacle detection plan for laser radar, ultrasonic wave, and other sensors, a case of failing to accurately avoid the obstacle often occurs.

For the above-mentioned problems, the present disclosure provides that in response to recognizing the obstacle occurs ahead, a recognition event for determining the object category of the obstacle may first be performed on the obstacle. Therefore, the object category of the obstacle is determined. It may be understood that the cleaning robot may be subsequently be instructed to implement different obstacle avoidance routes according to the recognition result of the object category.

In a manner, in a process of obtaining the recognition result for determining the object category of the target obstacle, the present disclosure may capture an image of the obstacle ahead by using the imaging apparatus disposed on the cleaning robot. Therefore, the image of the target obstacle may be obtained. Moreover, at least one object characteristic of a size characteristic, a color characteristic and a contour characteristic of the target obstacle image is extracted by using the predetermined image detection classification model subsequently. In this way, the object category of the target obstacle is determined subsequently according to the object characteristic.

The present disclosure does not specifically limit the image detection classification model. For example, the image detection classification model may be a convolutional neural network (CNN). CNNs are a class of feedforward neural networks (FNNs) that contain convolutional calculation and have a deep structure, and are one of representative algorithms for deep learning. CNN has a representation learning ability and is able to classify input information in a translation-invariant manner according to a hierarchical structure of CNN. Because of a powerful characteristic representation ability of CNN on the image, CNN has achieved impressive results in the fields of image classification, target detection, semantic segmentation, and the like.

Further, the present disclosure may use the image detection classification model to detect characteristic information in a plurality of target obstacle images acquired by the imaging apparatus carried by the cleaning robot, and characteristic recognition is further performed on the characteristic information to determine the corresponding object category in the target obstacle image. In an exemplary embodiment of the present disclosure, an image to be recognized needs to be inputted into a predetermined CNN model, and an output of a final fully connected layer (FC) of the CNN model is taken as a recognition result for characteristic data corresponding to the image to be recognized.

The present disclosure does not specifically limit the object category of the target obstacle. For example, the object category of the target obstacle may be animal waste, socks, shoes, wires, stools, beds, trash cans, tables, toilets, and the like.

At step S1903, the corresponding target obstacle avoidance route is selected based on the recognition result. The target obstacle avoidance route corresponds to one of changing the current forward direction and maintaining the current forward direction.

It may be understood that, the recognition result comprises two cases, i.e., a first recognition result where the object category of the target obstacle is recognizable and a second recognition result where the object category of the target obstacle is unrecognizable. For the above two cases, different target obstacle avoidance plans may be adopted in the embodiment of the present disclosure as described as follows.

### First case

In response to determining that the object category of the target obstacle is recognizable by the cleaning robot, a first obstacle avoidance route, which is a route on which the cleaning robot is instructed to bypass the target obstacle without changing the current forward direction, may be selected, i.e., the robot selects a route that may bypass the obstacle with maintaining an original forward direction.

Further, the embodiments of the present disclosure may first calculate a circumscribed image of the target obstacle based on the pre-stored obstacle data set and according to the object category of the obstacle and a contour shape and size parameter corresponding to the obstacle. The circumscribed images comprise the following categories based on a purePuresuit algorithm.

Circumscribed circle: as illustrated in FIG. 20, in response to a polygon being similar to a circle and the obstacles being stool legs, trash cans, table legs, and toilet obstacles, the circumscribed circle is calculated, and then tracing points are determined with a straight-line distance of SCM.

Circumscribed rectangle: in response to the polygon being similar to a rectangle and the obstacle being socks, shoes, wires, and tables, the circumscribed rectangle is calculated, and then the tracing points are determined with the straight-line distance of SCM.

Enveloping solid: in response to the polygon being not a circle and the obstacle being animal waste, the enveloping solid is calculated, and then the tracing points are determined with the straight-line distance of SCM.

It may be understood that after the tracing points are generated, the first obstacle avoidance route may be calculated based on the tracing points.

### Second case

In response to determining that the object category of the target obstacle is unrecognizable, a second obstacle avoidance route, which is a route on which the cleaning robot is instructed to bypass the target obstacle by moving in another forward direction, may be selected, i.e., the robot selects a route that may completely avoid the obstacle (for example, an original forward direction is due north, and a forward direction of the second obstacle avoidance route is due west).

Further, since there are many obstacles that their object categories are unrecognizable in a complex home environment, the present disclosure may adopt a real-time avoidance method. In an exemplary embodiment of the present disclosure, when the robot is traveling, it is needs to firstly trigger deceleration to realize the deceleration of the robot. Moreover, when it is detected that the robot has a predetermined distance from the obstacle, the robot obtains angle information from a virtual collision interface. The robot calculates, based on the angle information, an angle at which the robot is parallel to the obstacle according to the following algorithms. The robot turns to be parallel to the obstacle. Then, the robot arcs and walks along the obstacle. When the virtual collision re-occurs, the robot rotates at the calculated angle, then arcs, and re-performs the actions until the robot rotates 360 degrees or returns to an original point. Then, the robot exits a real-time obstacle avoidance function.

A design for a rotation angle of the robot: a rotation angle of the robot in a front of the robot is 0 degrees, a rotation angle of the robot in a clockwise direction ranges from 0 degree to -180 degrees, and a rotation angle of the robot in a counterclockwise direction ranges from 0 degree to 180 degrees. The second obstacle avoidance route may be as follows.
a) When an obstacle angle (Obs_Angle) is in a range of -60 degrees <Obs_Angle<-30 degrees, the rotation angle (Rotate_Angle) of the robot is Rotate_Angle=-Obs_Angle.
b) When the obstacle angle (Obs_Angle) is in a range of -30 degrees<Obs_Angle<30 degrees, the rotation angle (Rotate_Angle) of the robot is Rotate_Angle=90-Obs_Angle.
c) When the obstacle angle (Obs_Angle) is in a range of 30 degrees<Obs_Angle<60 degrees, the rotation angle (Rotate_Angle) of the robot is Rotate_Angle=180-Obs_Angle.

At step S1904, the cleaning robot is maneuvered based on the target obstacle avoidance route.

Further, in the present disclosure, after the target obstacle avoidance route is determined, the robot may be driven to operate under the target obstacle avoidance route until the cleaning robot completes cleaning in the target region.

In an embodiment of the present disclosure, the cleaning is started in the target region at the first speed after receiving the operation instruction. In response to detecting the target obstacle at the position having the first distance from the cleaning robot in the current forward direction, the recognition result for determining the object category of the target obstacle is obtained by using the imaging apparatus disposed on the cleaning robot. The corresponding target obstacle avoidance route is selected based on the recognition result. The target obstacle avoidance route corresponds to one of changing the current forward direction and maintaining the current forward direction. The cleaning robot is maneuvered based on the target obstacle avoidance route. By applying the technical solution of the present disclosure, when the robot detects the obstacle in front of the robot, different obstacle avoidance routes may be selected according to whether the object category of the obstacle is recognizable. In this way, different obstacle bypassing methods can be performed according to different types of object contours. Therefore, an obstacle avoidance ability of the cleaning robot is further improved, and a collision-free function is realized. Moreover, a problem where the robot cannot completely avoid the obstacles due to a limited perception range of the robot is avoided.

In another exemplary embodiment of the present disclosure, step S1903 (selecting the corresponding target obstacle avoidance route based on the recognition result) may comprise: selecting a first obstacle avoidance route in response to determining that the object category of the target obstacle is recognizable; or selecting a second obstacle avoidance route in response to determining that the object category of the target obstacle is unrecognizable. The first obstacle avoidance route is a route on which the cleaning robot is instructed to bypass the target obstacle without changing the current forward direction. The second obstacle avoidance route is a route on which the cleaning robot is instructed to bypass the target obstacle by moving in another forward direction.

In an optional embodiment of the present disclosure, said selecting the first obstacle avoidance route in response to determining that the object category of the target obstacle is recognizable comprises: determining the object category of the target obstacle, and obtaining a contour parameter and a size parameter that correspond to the object category based on a pre-stored obstacle data set; calculating a circumscribed image of the target obstacle according to the contour parameter and the size parameter; and calculating the first obstacle avoidance route based on the circumscribed image and a purePuresuit algorithm.

In an optional embodiment of the present disclosure, the method further comprises, subsequent to calculating the first obstacle avoidance route: selecting the first obstacle avoidance route and maneuvering the cleaning robot; and determining that the cleaning robot completes obstacle avoidance in response to detecting that the cleaning robot bypasses the target obstacle and moves in the current forward direction.

In an embodiment, in response to the cleaning robot being able to determine the object category corresponding to the obstacle, the cleaning robot may determine a contour shape and size of the obstacle according to the pre-stored obstacle data set. Moreover, according to the contour shape and size, a route for avoiding the obstacle is generated.

It may be understood that for example, for a trash can obstacle, a corresponding contour shape and size parameter of the trash can obstacle are mostly cylindrical within a radius smaller than 0.5 meters. Therefore, for the cylinder with a radius smaller than 0.5 meters, in the embodiment of the present disclosure, it is possible to obtain tracing points that may bypass the cylinder within the radius smaller than 0.5 meters based on the circumscribed image and the purePuresuit algorithm, and subsequently generate a first obstacle avoidance route according to the tracing points. In this way, it is ensured that the robot selects a route that may bypass the obstacle with the original forward direction (for example, the original forward direction is due north, and a forward direction of the first obstacle avoidance route is still due north after the robot bypasses the trash can).

In another embodiment, for example, for a square table obstacle, a corresponding contour shape and a size parameter of the square table obstacle are mostly rectangles with a length smaller than 1.5 meters and a width smaller than 1.5 meters. Therefore, for the rectangle within a length smaller than 1.5 meters and a width smaller than 1.5 meters, in the embodiment of the present disclosure, it is possible to obtain tracing points that may bypass the rectangle with a length smaller than 1.5 meters and a width smaller than 1.5 meters based on the circumscribed image and the purePuresuit algorithm, and subsequently generate a first obstacle avoidance route according to the tracing points. In this way, it is ensured that the robot selects a route that may bypass the obstacle with the original forward direction (for example, the original forward direction is due west, and the forward direction of the first obstacle avoidance route is still due west after the robot bypasses the square table).

In an optional embodiment of the present disclosure, said selecting the second obstacle avoidance route in response to determining that the object category of the target obstacle is unrecognizable comprises: obtaining a parallel angle difference between the target obstacle and the cleaning robot in response to determining that the object category of the target obstacle is unrecognizable; and determining a rotation angle for rotating a forward direction of the cleaning robot based on the parallel angle difference, and calculating the second obstacle avoidance route based on the rotation angle.

In an optional embodiment of the present disclosure, the method further comprises, subsequent to calculating the second obstacle avoidance route: selecting the second obstacle avoidance route and maneuvering the cleaning robot; and determining that the cleaning robot completes obstacle avoidance in response to detecting that the cleaning robot moves in the another forward direction and has a distance from the target obstacle exceeding a second distance.

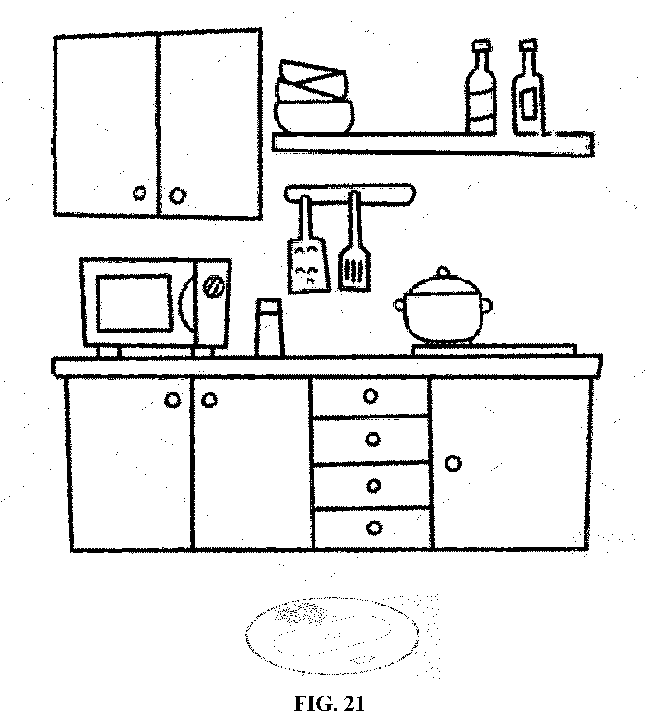

Further, for example, as illustrated in FIG. 21, when a combination of obstacles ahead is too many, too large, or has no pre-stored relevant parameters, the object category corresponding to the obstacle cannot be recognized by the cleaning robot. In this case, in order to ensure normal operation of the cleaning robot, in the embodiment of the present disclosure, after it is determined that the object category of the target obstacle is unrecognizable, it is possible to obtain the parallel angle difference between the target obstacle and the cleaning robot, and to determine the rotation angle for rotating the forward direction of the cleaning robot based on the parallel angle difference and obtain the second obstacle avoidance route based on the rotation angle.

It may be understood that this rotation angle may ensure that the cleaning robot changes its forward direction (for example, the rotation angle may be 190 degrees, which may cause the robot to make a U-turn). In this way, it is ensured that the robot completely bypasses the target obstacle and continues to operate in another forward direction.

In an embodiment, the rotation angle may be determined by the parallel angle difference between the target obstacle and the cleaning robot. That is, a greater parallel angle difference between the target obstacle and the cleaning robot corresponds to a smaller rotation angle for rotating the forward direction of the cleaning robot. Similarly, a smaller parallel angle difference between the target obstacle and the cleaning robot corresponds to a greater rotation angle for rotating the forward direction of the cleaning robot.

In an embodiment, the rotation angle (Rotate_Angle) of the robot is Rotate_Angle=-Obs_Angle when the obstacle angle (Obs_Angle) is in the range of -60 degrees<Obs_Angle<-30 degrees. Alternatively, the rotation angle (Rotate_Angle) of the robot is Rotate_Angle=90-Obs_Angle;c) when the obstacle angle (Obs_Angle) is in the range of -30 degrees<Obs_Angle<30 degrees. Alternatively, the rotation angle (Rotate_Angle) of the robot is Rotate_Angle=180-Obs_Angle when the obstacle angle (Obs_Angle) is in the range of 30 degrees<Obs_Angle<60 degrees.

In another exemplary embodiment of the present disclosure, after S1901 (starting the cleaning in the target region at the first speed), the method further comprises: switching the first speed to a second speed in response to detecting the target obstacle at a position having a second distance from the cleaning robot in the current forward direction; and detecting whether the target obstacle is located at the position having the first distance from the cleaning robot in the current forward direction. The second speed is lower than the first speed, and the second distance is greater than the first distance.

For example, for a first speed of 30 cm/s, when the cleaning robot operates at a speed of 30 cm/s, the cleaning robot will decelerate to 15 cm/s (i.e., a second speed) when approaching the obstacle. It may be understood that a deceleration manner described above may prevent the robot from forcefully colliding with the obstacle. Moreover, it is more conducive to robot braking and a smoother action. It may also be advantageous to acquisition of more accurate image data (which is subsequently used for determining the object category of the obstacle) by using the imaging apparatus.

In an embodiment, a deceleration interface is designed as follows. When the obstacle falls within a region (i.e., related to a second distance) based on a slowdown distance threshold and a robot width, deceleration may be triggered.

In another exemplary embodiment of the present disclosure, prior to S1901 (starting the cleaning in the target region at the first speed), the method further comprises: obtaining an initial grid map of the target region, robot posture information, and sample obstacle information; generating a semantic map by projecting each sample obstacle onto the initial grid map through a Bresenham algorithm; and starting the cleaning in the target region based on the semantic map after receiving the operation instruction. The sample obstacle information comprises a parameter of a sample obstacle and an object category of the sample obstacle.

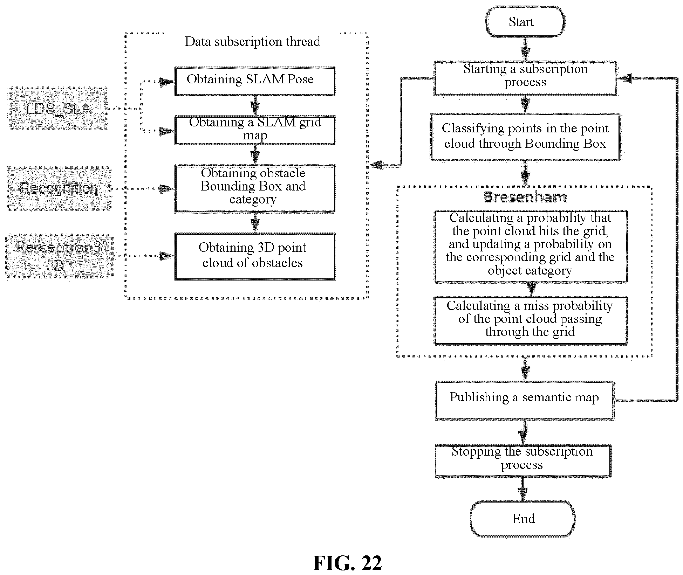

Further, FIG. 22 illustrates a flowchart for generating a semantic map. The cleaning robot, performing the obstacle avoidance method provided in the present disclosure, comprises five nodes: LDS_SLAM node, Recognition node, Perception3D node, Semantic_Map node, and Planer node.

The LDS_SLAM node is responsible for image collection with positioning. The LDS_SLAM node obtains data from IMU, Odometry, and Lidar sensors, creates a map, and outputs a robot's pose. In this way, a "Where am I?" problem is solved.

The Recognition node realizes object recognition through AI technology. The Recognition node mainly realizes recognition of nine types of objects such as animal waste, socks, shoes, wires, stools, beds, trash cans, tables, and toilets. In this way, a "What is it?" problem is solved.

The Perception3D node is responsible for outputting depth information of the obstacle. In this way, a "Where is it?" problem is solved.

The Semntic_map node obtains a spatial pose and the obstacle type from the Recognition node and the Perception3D node, combines a Pose of the LDS_SLAM node, projects the obstacle on the occupied grid map through the Bresenham algorithm, and marks the corresponding grid with object type information to generate the semantic map.

The Planner node mainly realizes intelligent obstacle avoidance based on the information of the semantic map.

Further, semantic map generation in the present disclosure is one of functions of the Planner node. In an exemplary embodiment of the present disclosure, a thread needs to first start to accept a global grid map, robot pose, obstacle bounding box, obstacle category, and 3D point cloud information of obstacles. Then, a point cloud that satisfies the situations (such as points with a height h satisfying a range of groud<h<robot_hight) is calculated with bounding box of the obstacle returned by the Recognition node, to obtain a category of each point. Then, through the Bresennham algorithm, a position and probability of each point falling into the grid are calculated, and the category of the obstacle is marked on the corresponding grid. So far, an occupied grid map (i.e. a semantic map) with semantic information is obtained, and is deployed on the cleaning robot for use by an obstacle avoidance algorithm.

In another exemplary embodiment of the present disclosure, in S1902 (obtaining the recognition result for determining the object category of the target obstacle by using the imaging apparatus disposed on the cleaning robot), the method may comprise: obtaining a target obstacle image by using the imaging apparatus; extracting an object characteristic of the target obstacle image by using an image detection classification model; and determining, based on the object characteristic, the recognition result for determining the object category of the target obstacle. The object characteristic comprises at least one of a size characteristic, a color characteristic, and a contour characteristic.

In another exemplary embodiment of the present disclosure, the method further comprises, prior to obtaining the target obstacle image by using the imaging apparatus: obtaining at least two sample images; labeling a category identifier for each of the at least two sample images based on an object category of an obstacle; and obtaining the image detection classification model satisfying a predetermined condition by training a predetermined image semantic segmentation model by using the sample images labeled with the category identifiers and the obstacle object characteristics comprised in the sample images. The sample image comprises at least one obstacle object characteristic. The image detection classification model is configured for determining the object category of the target obstacle.

Further, the present disclosure first needs to obtain the image detection classification model through training before the target obstacle image is recognized by using the predetermined image detection classification model. In an exemplary embodiment of the present disclosure, a predetermined number of sample images comprising a plurality of obstacle object characteristics need to be obtained first. The plurality of sample images are used to train a basic image semantic segmentation model, and a first image detection classification model satisfying the predetermined situations is further obtained.

It should be noted that the present disclosure determines the object category of the obstacle, and labels a corresponding category identifier for each sample image. For example, when there is a trash can obstacle in the sample image, it is necessary to label the sample image with a category identifier indicating that the obstacle is the trash can. Alternatively, when a bed frame obstacle appears in the sample image, it is necessary to label the sample image with a category identifier indicating that the obstacle is the bed frame.

The present disclosure may recognize at least one obstacle object characteristic (like the size characteristic, the contour characteristic, and the color characteristic) comprised in the sample image through the predetermined image semantic segmentation model. Further, the image semantic segmentation model may also classify various obstacle object characteristics in the sample image, and classify sample characteristics belonging to a same category into a same type of objects. In this way, a plurality of sample characteristics obtained by performing semantic segmentation on the sample image may be a plurality of different types of sample characteristics.

It should be noted that when a neural network image classification model performs semantic segmentation processing on the sample image, a more accurate pixel classification in the sample image leads to a higher accuracy rate of recognizing the labeled objects in the sample image. It should be noted that the predetermined condition may be customized.

For example, the predetermined condition may be that: a classification accuracy rate of pixel points reaches more than 70%. In this way, the image detection classification model is repeatedly trained by the plurality of sample images. When the classification accuracy rate of the pixel points obtained by the neural network image classification model reaches more than 70%, the neural network image classification model may be used as the image detection classification model in the embodiments of the present disclosure to perform image characteristic recognition on a plurality of obstacle images captured by the imaging apparatus in the cleaning robot.

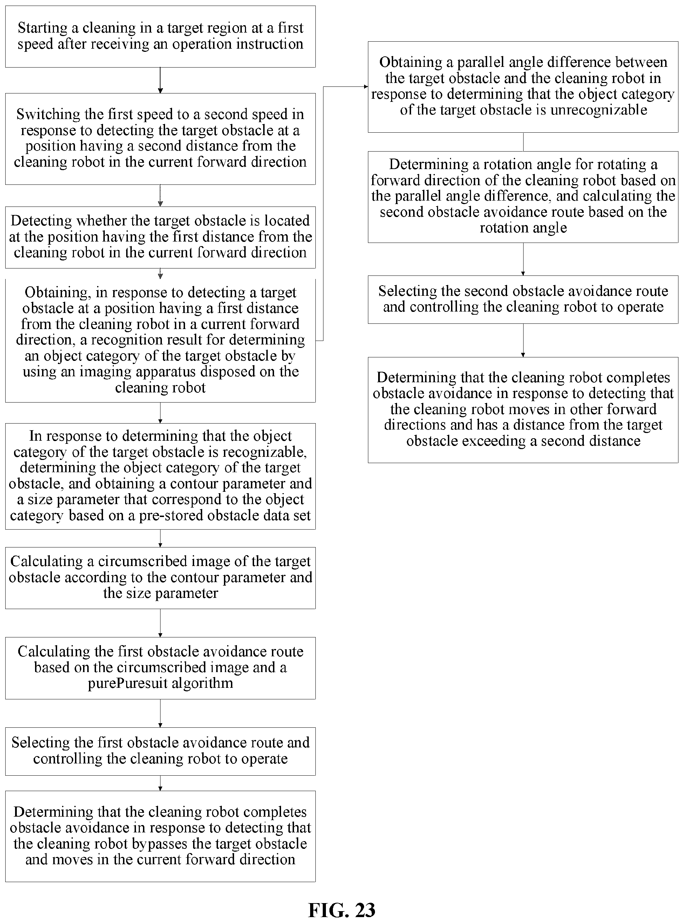

Further, as illustrated in FIG. 23, provided is an overall flowchart of an operation method for a cleaning robot provided in the present disclosure. In the present disclosure, the cleaning is started in the target region at the first speed after the operation instruction is received. Moreover, in response to detecting the target obstacle at the position having the first distance from the cleaning robot in the current forward direction, the recognition result for determining the object category of the target obstacle is obtained by using the imaging apparatus disposed on the cleaning robot.

Further, the corresponding target obstacle avoidance route is selected based on the recognition result. The target obstacle avoidance route corresponds to one of changing the current forward direction and maintaining the current forward direction. Finally, the cleaning robot is maneuvered based on the target obstacle avoidance route.

By applying the technical solution of the present disclosure, when the robot detects the obstacle in front of the robot, different obstacle avoidance routes may be selected according to whether the object category of the obstacle is recognizable. In this way, different obstacle bypassing methods can be performed according to different types of object contours. Therefore, the obstacle avoidance ability of the cleaning robot is further improved, and the collision-free function is realized. Moreover, the problem where the robot cannot completely avoid the obstacles due to the limited perception range of the robot is avoided.

In another exemplary embodiment of the present disclosure, the cleaning device may be a robot mounted with a first laser sensor and a second laser sensor. An inclination angle of the first laser sensor on the robot is different from an inclination angle of the second laser sensor on the robot. A mounting height of the first laser sensor on the robot is different from a mounting height of the second laser sensor on the robot. The step of controlling the cleaning device to perform cleaning according to the obstacle parameter may comprise: obtaining a first sensing distance through the first laser sensor; obtaining a second sensing distance through the second laser sensor; determining a first falling point coordinate based on the mounting height and the inclination angle of the first laser sensor on the robot, and the first sensing distance; determining a second falling point coordinate based on the mounting height and the inclination angle of the second laser sensor on the robot, and the second sensing distance; recognizing an obstacle type corresponding to a target region based on the first falling point coordinate, the second falling point coordinate, and a predetermined height for surmountable obstacle; and controlling motion of the robot based on the obstacle type. The first sensing distance is a distance between the first laser sensor and a light spot of a laser emitted by the first laser sensor. The second sensing distance is a distance between the second laser sensor and a light spot of a laser emitted by the second laser sensor. The first falling point coordinate is a coordinate of the light spot of the laser emitted by the first laser sensor. The second falling point coordinate is a coordinate of the light spot of the laser emitted by the second laser sensor. The target region is a region where the first falling point coordinate and the second falling point coordinate are located.

That is, in the embodiment, the step of controlling the cleaning device according to the obstacle parameter may be to control the motion of the robot by recognizing the obstacle type corresponding to the target region.

It is difficult to quickly recognize the type of stair when a cliff sensor is configured to recognize the type of the obstacle in front of the robot. Moreover, it is difficult to accurately determine whether the type of the current obstacle is a stair or a down ramp. Therefore, the embodiments of the present disclosure provide a method for controlling a robot.

In the method for controlling the robot, two laser sensors are mounted at a side of a forward direction of the robot. In this way, the two laser sensors are capable of emitting a laser towards the front of the robot. According to the mounting heights and the inclination angles of the two laser sensors on the robot and the detected distances, the robot is capable of calculating coordinates of light spots corresponding to different laser sensors, and is further capable of recognizing corresponding obstacle types in a region where the two light spots are located according to the obtained coordinates of the two light spots and the predetermined height for surmountable obstacle.

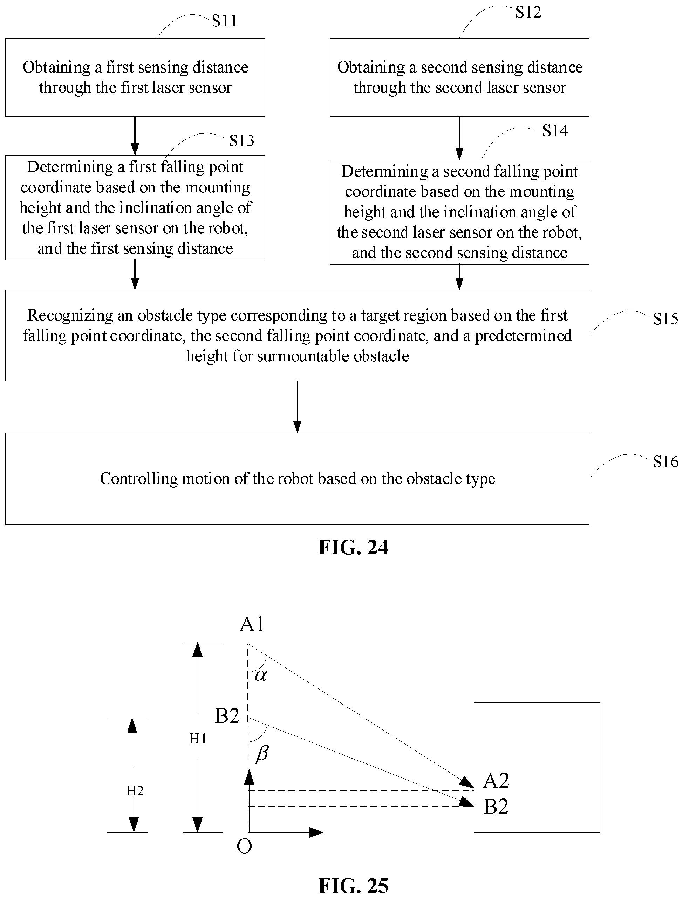

FIG. 24 illustrates a flowchart of a first method for controlling a robot provided by an embodiment of the present disclosure. The method for controlling the robot is applied to the robot mounted with the first laser sensor and the second laser sensor. An inclination angle of the first laser sensor on the robot is unequal to an inclination angle of the second laser sensor on the robot. Moreover, a mounting height of the first laser sensor on the robot is unequal to a mounting height of the second laser sensor on the robot. Detailed descriptions are as follow.

At step S11, the first sensing distance is obtained through the first laser sensor. The first sensing distance is the distance between the first laser sensor and the light spot of the laser emitted by the first laser sensor.

In an exemplary embodiment of the present disclosure, the first laser sensor emits the laser. When the laser is shielded, the light spot is formed on the shielded object. Since a propagation speed of the light is fixed, a distance between the first laser sensor and the corresponding light spot may be calculated according to the propagation speed of the light and a propagation time of the light.

It should be noted that the first sensing distance in the embodiment of the present disclosure may be calculated by the first laser sensor and transmitted to the robot by the first laser sensor, or may be calculated by the robot.

The robot in the embodiment of the present disclosure may be a cleaning device such as a cleaning robot used for cleaning.

At step S12, the second sensing distance is obtained through the second laser sensor, and the second sensing distance is the distance between the second laser sensor and the light spot of the laser emitted by the second laser sensor.

A manner for calculating the second sensing distance is the same as a manner for calculating the first sensing distance, and details are omitted herein.

At step S13, the first falling point coordinate is determined based on the mounting height and the inclination angle of the first laser sensor on the robot, and the first sensing distance. The first falling point coordinate is a coordinate of the light spot of the laser emitted by the first laser sensor.

The mounting height of the first laser sensor on the robot refers to a distance from a mounting position where the first laser sensor is mounted on the robot to the ground.

The inclination angle of the first laser sensor on the robot refers to an angle smaller than 90 degrees among angles between a laser emission opening of the first laser sensor and the robot.

As illustrated in FIG. 25, a laser emission point of the first laser sensor is A1, a light spot of A1 is A2, the inclination angle of the first laser sensor is cs, the mounting height of the first laser sensor on the robot is H1, and the first sensing distance is a length of a side corresponding to A1A2. A laser emission point of the second laser sensor is B1, a light spot of B1 is B2, the inclination angle of the second laser sensor is β, the mounting height of the first laser sensor on the robot is H2, and the first sensing distance is B1B2.

According to a length of a hypotenuse (like A1A2) of a right triangle in FIG. 25 and the inclination angle (like cs), a length of a right-angle side in a horizontal direction in the right triangle may be determined, and a horizontal coordinate of A2 is further determined. In addition, a length of a right-angled side in a vertical direction of the right triangle may be determined according to the length of the hypotenuse of the right triangle and the inclination angle, and a vertical coordinate of A2 may be calculated by combining the length of the right-angle side with the mounting height H1.

At step S14, the second falling point coordinate is determined according to the mounting height and the inclination angle of the second laser sensor on the robot, and the second sensing distance. The second falling point coordinate is the coordinate of the light spot of the laser emitted by the second laser sensor.

A manner for calculating the second falling point coordinate is the same as a manner for calculating the first falling point coordinate, and details are omitted herein.

At step S15, the obstacle type corresponding to the target region is recognized according to the first falling point coordinate, the second falling point coordinate, and the predetermined height for surmountable obstacle, and the target region is the region where the first falling point coordinate and the second falling point coordinate are located.

The predetermined height for surmountable obstacle refers to the greatest obstacle height that can be climbed over by the robot.

The above-mentioned obstacle type comprises a large stair.

In this embodiment, since information of two close positions in the vertical direction and in the horizontal direction may reflect an obstacle type in a region where the two close positions are located. For example, when the obstacle type in the region where the two close positions are located is a type of large stair, absolute values of values of the two close positions in the vertical direction are generally far greater than the height for surmountable obstacle. Therefore, through the above-described manner, the obstacle type in the corresponding region can be accurately recognized.

At step S16, the motion of the robot is controlled according to the obstacle type.

In this embodiment, the robot controls itself to execute its corresponding motion according to different types of obstacles, to improve accuracy of control.

In the embodiment of the present disclosure, the inclination angle of the first laser sensor mounted on the robot is unequal to the inclination angle of the second laser sensor mounted on the robot. Moreover, the mounting height of the first laser sensor on the robot is unequal to the mounting height of the second laser sensor on the robot. Therefore, the first falling point coordinate obtained based on the first laser sensor and the second falling point coordinate obtained based on the second laser sensor are coordinates corresponding to two different positions. Since the coordinates of the two different positions may reflect a height difference between the two positions, combined with the predetermined height for surmountable obstacle, the corresponding obstacle type in the region where the two different positions are located can be quickly and accurately recognized. For example, it is recognized whether the obstacle type is a stair that can be climbed over by the robot. For example, it is possible to recognize whether there is a stair ahead before the robot reaches the stair, rather than recognizing whether there is a stair ahead when the robot reaches the stair.

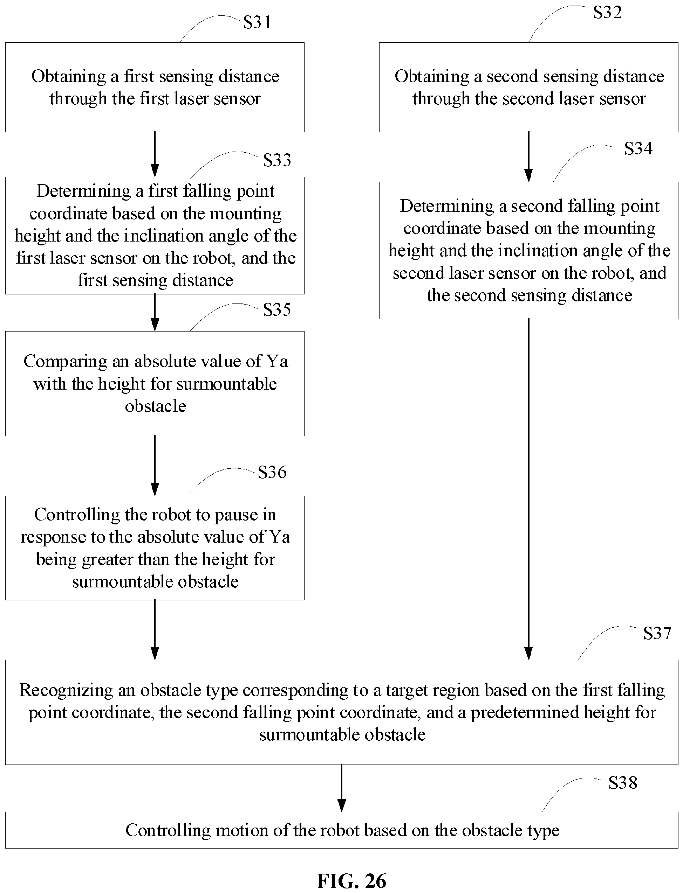

FIG. 26 illustrates a flowchart of a second method for controlling a robot provided by the embodiments of the present disclosure. In this embodiment, steps S31, S32, S33, and S34 are respectively the same as steps S11, S12, S13, and S14 of the above-mentioned embodiments, and steps S37 and S38 are respectively the same as steps S15 and S16 of the above-mentioned embodiments, and details are omitted herein.

In this embodiment, the mounting height of the first laser sensor on the robot is greater than the mounting height of the second laser sensor on the robot, and a distance that is reachable by the laser emitted by the first laser sensor is greater than a distance that is reachable by the laser emitted by the second laser sensor. Detailed descriptions are as follows.

At step S31, the first sensing distance is obtained through the first laser sensor. The first sensing distance is the distance between the first laser sensor and the light spot of the laser emitted by the first laser sensor.

At step S32, the second sensing distance is obtained through the second laser sensor, and the second sensing distance is the distance between the second laser sensor and the light spot of the laser emitted by the second laser sensor.

At step S33, the first falling point coordinate is determined based on the mounting height and the inclination angle of the first laser sensor on the robot, and the first sensing distance. The first falling point coordinate is the coordinate of the light spot of the laser emitted by the first laser sensor.

At step S34, the second falling point coordinate is determined according to the mounting height and the inclination angle of the second laser sensor on the robot, and the second sensing distance. The second falling point coordinate is the coordinate of the light spot of the laser emitted by the second laser sensor.

At step S35, an absolute value of Ya is compared with the height for surmountable obstacle.

In the embodiment of the present disclosure, it is assumed that a horizontal coordinate of the first falling point coordinate is Xa and a vertical coordinate of the first falling point coordinate is Ya. Ya is the vertical coordinate of the first falling point coordinate, and may be greater than 0 or smaller than 0. The height for surmountable obstacle is greater than 0.

At step S36, the robot is controlled to pause in response to the absolute value of Ya being greater than the height for surmountable obstacle.

In this embodiment, in response to Ya being greater than 0, when Ya is greater than the height for surmountable obstacle, it indicates that there may be a high obstacle in front of the robot. In this case, the robot is first controlled to stop motion. In this way, a sufficient time can be left for subsequent control of the robot.

Similarly, in response to Ya being smaller than 0, when Ya is smaller than a negative number of the height for surmountable obstacle, it indicates that there may be a low stair (such as a downward stair) in front of the robot. In this case, the robot is first controlled to stop motion. In this way, a sufficient time can be left for subsequent control of the robot.

At Step S37, the obstacle type corresponding to the target region is recognized according to the first falling point coordinate, the second falling point coordinate, and the predetermined height for surmountable obstacle, and the target region is the region where the first falling point coordinate and the second falling point coordinate are located.

At step S38, the motion of the robot is controlled according to the obstacle type.

In the embodiment of the present disclosure, Ya is the light spot corresponding to the laser emitted from the first laser sensor, and the mounting height of the first laser sensor on the robot is higher than the mounting height of the second laser sensor on the robot. Moreover, the distance that is reachable by the laser emitted by the first laser sensor is greater than the distance that is reachable by the laser emitted by the second laser sensor. Therefore, compared with the second falling point coordinate, Ya of the first falling point coordinate can reflect obstacle information of a position farther ahead of the robot. In this way, it is conducive for the robot to make earlier response. Meanwhile, when the absolute value of Ya is greater than the height for surmountable obstacle, it indicates that there may be an upward stair or an upward obstacle in front of the robot, or there may be a downward stair in front of the robot. Therefore, the robot is first controlled to stop motion, and then continues to be controlled to move after the obstacle type is determined. In this way, the robot has enough time to change its motion when it cannot pass the obstacle. Further, a probability of the occurrence of accidents in the robot can be effectively reduced.

In some embodiments, the first laser sensor may be a line laser sensor, and the second laser sensor may be a laser ranging sensor.

The first falling point coordinate corresponding to the first laser sensor is first selected for processing during the recognition of the obstacle type, and a scanning region corresponding to the line laser sensor is greater than a scanning region corresponding to the laser ranging sensor. Therefore, the first laser sensor is provided as the line laser sensor, and the second laser sensor is provided as the laser ranging sensor, which can not only improve a probability of scanning the obstacle, but can also reduce the cost.

In some embodiments, by assuming that a horizontal coordinate of the second falling point coordinate is Xb, a vertical coordinate of the second falling point coordinate is Yb, and the height for surmountable obstacle is h, step S37 comprises A1 to A3.

At A1, it is determined that the obstacle type corresponding to the target region is a large stair in response to Ya being smaller than -h and Yb being smaller than or equal to Ya.

In this embodiment, when Ya<-h (i.e., the absolute value of Ya is greater than h), in response to determining that Yb≤Ya, it is determined that there is a large stair in front of the robot. At this time, the robot may retreat and then turn to change its path.

At A2, it is determined that the obstacle type corresponding to the target region is a down ramp in response to Ya being smaller than -h and Yb being smaller than 0 and greater than Ya.

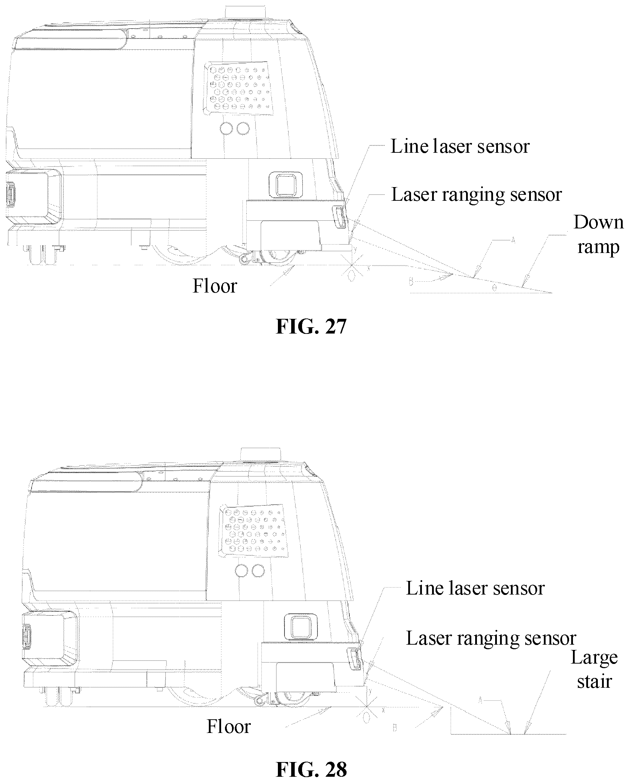

In the embodiment, as illustrated in FIG. 27, when Ya<-h (i.e., the absolute value of Ya is greater than h), in response to determining that Ya<Yb<0, it is determined that there is down ramp in the front of the robot.

At A3, it is determined that the obstacle type corresponding to the target region is a large stair in response to Ya being smaller than -h and Yb being greater than or equal to 0.

As illustrated in FIG. 28, when Ya<-h (i.e., the absolute value of Ya is greater than h), in response to determining that Yb≥0, it is determined that there is a large stair in the front of the robot. At this time, the robot may retreat and then turn to change its path.

According to a relationship between the first falling point coordinate and the second falling point coordinate in FIG. 27 and FIG. 28, the determining method adopted in the embodiments of the present disclosure may accurately determine whether the obstacle type is a large stair or a down ramp.

In some embodiments, the obstacle type is the down ramp, and the step S38 specifically comprises B1 and B2.

At B1, an angle corresponding to the down ramp is determined.

The angle corresponding to the down ramp may be calculated according to the first falling point coordinate and the second falling point coordinate.

At B2, the motion of the robot is controlled based on the angle corresponding to the down ramp and a predetermined climbable degree.

In an exemplary embodiment of the present disclosure, when the angle corresponding to the down ramp is smaller than or equal to the predetermined climbable degree, the robot continues to move forwards and downhill. When the angle corresponding to the down ramp is greater than the predetermined climbable degree, the robot retreats and then turns to change the path.

In the embodiment of the present disclosure, the robot is usually unable to climb over a ramp with a large angle (such as not exceeding the predetermined climbable degree) after the robot is designed. Therefore, when it is determined the down ramp in front of the robot, a corresponding motion needs to be selected in combination with the angle corresponding to the down ramp and the predetermined climbable degree, to avoid overturning of the robot caused by the robot still moving forwards when the angle corresponding to the down ramp is too large.

In some embodiments, by assuming that the second falling point coordinate is (Xb, Yb), and the predetermined height for surmountable obstacle is h, step S37 comprises C1 and C2.

At C1, it is determined that the obstacle type corresponding to the target region is a high obstacle in response to Ya being greater than h and Xb being greater than or equal to Xa.

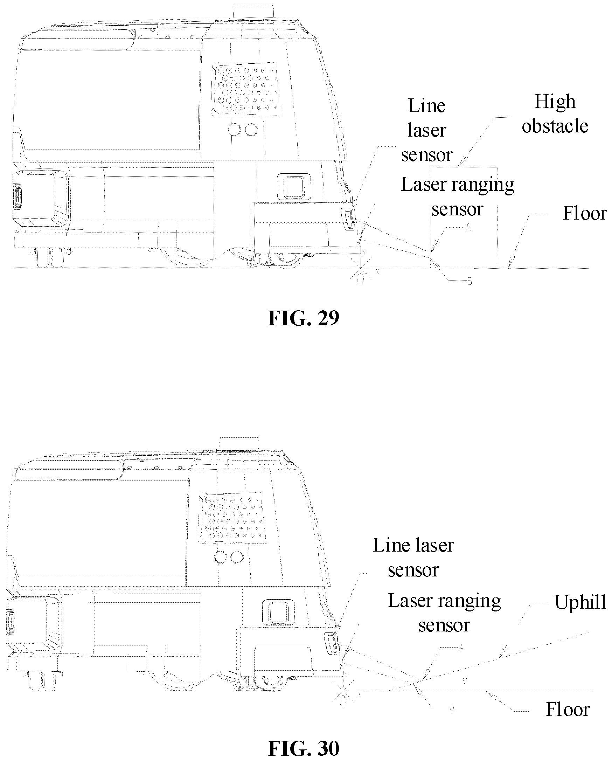

As illustrated in FIG. 29, in response to Ya>h (i.e., the absolute value of Ya is greater than h) and determining that Xb≥Xa, it is considered that a high obstacle occurs in front of the robot. At this time, the robot may retreat and then turn to change the path.

At C2, it is determined that the obstacle type corresponding to the target region is an up ramp in response to Ya being greater than h and Xb being smaller than Xa.

As illustrated in FIG. 30, in response to Ya>h (i.e., the absolute value of Ya is greater than h) and determining that Xb<Xa, it is considered that the up ramp occurs in the front of the robot.

According to a relationship between the first falling point coordinate and the second falling point coordinate in FIG. 29 and FIG. 30, the determining method adopted in the embodiments of the present disclosure may accurately determine whether the obstacle type is a high obstacle or an up ramp.

In some embodiments, the obstacle type is the up ramp, and the step S38 specifically comprises D1 and D2.

At D1, the angle corresponding to the up ramp is determined.

In an exemplary embodiment of the present disclosure, the angle corresponding to the up ramp may be calculated based on the first falling point coordinate and the second falling point coordinate.

At D2, the motion of the robot is controlled based on the angle corresponding to the up ramp and the predetermined climbable degree.

In an exemplary embodiment of the present disclosure, when the angle corresponding to the up ramp is smaller than or equal to the predetermined climbable degree, the robot continues to move forwards and uphill. When the angle corresponding to the up ramp is greater than the predetermined climbable degree, the robot retreats and then turns to change the path.

In the embodiment of the present disclosure, when it is determined the up ramp in front of the robot, the corresponding motion is selected in combination with the angle corresponding to the up ramp and the predetermined climbable degree. Therefore, the overturning of the robot, caused by the robot still moving forwards when the angle corresponding to the up ramp is too large, can be avoided.

In some embodiments, the mounting height of the first laser sensor is greater than the mounting height of the second laser sensor. A distance that is reachable by the laser emitted by the first laser sensor is greater than a distance that is reachable by the laser emitted by the second laser sensor. The first falling point coordinate is (Xa, Ya). Moreover, the height for surmountable obstacle is h. The method further comprises E1 to E3.

At E1, the robot is controlled to switch from a normal mode to a low-speed mode in response to Ya being greater than a target height and smaller than or equal to h. The target height is greater than 0 and smaller than h, and a speed of the low-speed mode is smaller than a speed of the normal mode.

In some embodiments, the target height may be set to h/2.

Since it is determined that Ya has a predetermined height, it indicates that there may be a region that cannot be climbed over in front of the robot, and the speed of the low-speed mode is lower, i.e., a corresponding inertia in the low-speed mode is smaller. Therefore, switching the robot from the normal mode to the low-speed mode can reduce the probability of the occurrence of accidents in the robot by performing judgment in advance. In this way, the accuracy of the control on the robot is improved.

At E2, the robot is controlled to move in the normal mode in response to Ya being greater than or equal to a negative number of the target height and smaller than or equal to the target height.

Since the target height is between 0 and h, when it is determined that Ya is greater than or equal to the negative number of the target height and smaller than or equal to the target height, it indicates that a probability, that a region in front of the robot is a region that can be climbed over by the robot, is high. At this time, the robot only needs to be controlled to move in the normal mode to ensure that the robot can perform tasks smoothly.

At E3, the robot is controlled to switch from the normal mode to the low-speed mode in response to Ya being greater than or equal to a negative number of h and smaller than the negative number of the target height.

When it is determined that Ya is smaller than the negative number of the target height, it indicates that a terrain at a position where the first falling point coordinate is located is low, i.e., it indicates that there is a high probability that a region, which cannot be climbed over by the robot, occurs in front of the robot, and the speed of the low-speed mode is lower, i.e., the corresponding inertia in the low-speed mode is smaller. Therefore, by switching the robot from the normal mode to the low-speed mode first, the probability of the occurrence of accidents in the robot can be reduced by performing judgment in advance. In this way, the accuracy of the control on the robot is improved.

It should be understood that numerical values of sequence numbers of respective steps in the above embodiments do not indicate an order of execution. The order of execution of respective processes should be determined by functions and internal logics of the processes, and should not constitute any limitation on an implementation process of the embodiments of the present disclosure.

In some embodiments of the present disclosure, an apparatus for controlling a cleaning device is also provided. The apparatus for controlling the cleaning device comprises a detection device and a control device. The detection device is configured to obtain an environmental characteristic parameter by detecting an operation environment of the cleaning device. The environmental characteristic parameter comprises at least one of a room characteristic parameter and an obstacle parameter. The control device is configured to control the cleaning device to perform cleaning according to the at least one of the room characteristic parameter and the obstacle parameter.

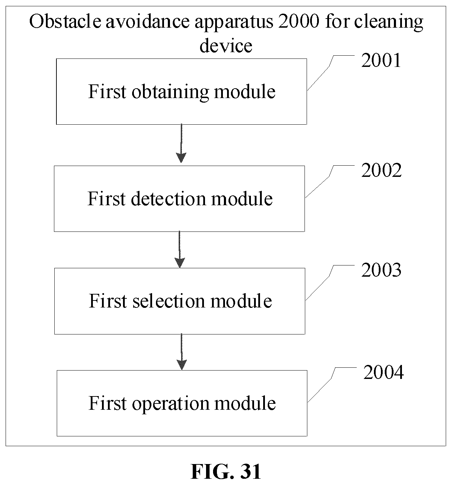

Further, in some embodiments of the present disclosure, the cleaning device may be a cleaning robot. As illustrated in FIG. 31, the control device may be an obstacle avoidance apparatus 2000 for the cleaning robot. The obstacle avoidance apparatus 2000 comprises a first obtaining module 2001, a first detection module 2002, a first selection module 2003, and a first operation module 2004.

The first obtaining module 2001 is configured to start a cleaning in a target region at a first speed after receiving an operation instruction.

The first detection module 2002 is configured to obtain, in response to detecting a target obstacle at a position having a first distance from the cleaning robot in a current forward direction, a recognition result for determining an object category of the target obstacle by using an imaging apparatus disposed on the cleaning robot.

The first selection module 2003 is configured to select a target obstacle avoidance route based on the recognition result. The target obstacle avoidance route corresponds to one of changing the current forward direction and maintaining the current forward direction.

The first operation module 2004 is configured to maneuver the cleaning robot based on the target obstacle avoidance route.

In the present disclosure, the cleaning is started in the target region at the first speed after the operation instruction is received. In response to detecting the target obstacle at the position having the first distance from the cleaning robot in the current forward direction, the recognition result for determining the object category of the target obstacle is obtained by using the imaging apparatus disposed on the cleaning robot. The corresponding target obstacle avoidance route is selected based on the recognition result. The target obstacle avoidance route corresponds to one of changing the current forward direction and maintaining the current forward direction. The cleaning robot is maneuvered based on the target obstacle avoidance route. By applying the technical solutions of the present disclosure, when the robot detects the obstacle in front of the robot, different obstacle avoidance routes may be selected according to whether the object category of the obstacle is recognizable. In this way, different obstacle bypassing methods can be performed according to different types of object contours. Therefore, the obstacle avoidance ability of the cleaning robot is further improved, and the collision-free function is realized. Moreover, the problem, where the robot cannot completely avoid the obstacles due to the limited perception range of the robot, is avoided.

In another embodiment of the present disclosure, the first selection module 2003 is further configured to: select a first obstacle avoidance route in response to determining that the object category of the target obstacle is recognizable; or select a second obstacle avoidance route in response to determining that the object category of the target obstacle is unrecognizable. The first obstacle avoidance route is a route on which the cleaning robot is instructed to bypass the target obstacle without changing the current forward direction. The second obstacle avoidance route is a route on which the cleaning robot is instructed to bypass the target obstacle by moving in another forward direction.

In another embodiment of the present disclosure, the first selection module 2003 is further configured to: determine the object category of the target obstacle, and obtain a contour parameter and a size parameter that correspond to the object category based on a pre-stored obstacle data set; calculate a circumscribed image of the target obstacle according to the contour parameter and the size parameter; and calculate the first obstacle avoidance route based on the circumscribed image and a purePuresuit algorithm.

In another embodiment of the present disclosure, the first selection module 2003 is further configured to: select the first obstacle avoidance route and maneuver the cleaning robot; and determine that the cleaning robot completes obstacle avoidance in response to detecting that the cleaning robot bypasses the target obstacle and moves in the current forward direction.

In another embodiment of the present disclosure, the first selection module 2003 is further configured to: obtain a parallel angle difference between the target obstacle and the cleaning robot in response to determining that the object category of the target obstacle is unrecognizable; and determine a rotation angle for rotating a forward direction of the cleaning robot based on the parallel angle difference, and calculate the second obstacle avoidance route based on the rotation angle.

In another embodiment based on the method described above in the present disclosure, the method further comprises, subsequent to calculating the second obstacle avoidance route: selecting the second obstacle avoidance route and maneuvering the cleaning robot; and determining that the cleaning robot completes obstacle avoidance in response to detecting that the cleaning robot moves in the another forward direction and has a distance from the target obstacle exceeding a second distance.

In another embodiment of the present disclosure, the first detection module 2002 is configured to: switch the first speed to a second speed in response to detecting the target obstacle at a position having a second distance from the cleaning robot in the current forward direction; and detect whether the target obstacle is located at the position having the first distance from the cleaning robot in the current forward direction. The second speed is lower than the first speed, and the second distance is greater than the first distance.

In another embodiment of the present disclosure, the first obtaining module 2001 is configured to: obtain an initial grid map of the target region, robot posture information, and sample obstacle information; and generate a semantic map by projecting each sample obstacle onto the initial grid map through a Bresenham algorithm. The sample obstacle information comprises a parameter of a sample obstacle and an object category of the sample obstacle. Said starting the cleaning in the target region at the first speed after receiving the operation instruction comprises: starting the cleaning in the target region at the first speed based on the semantic map after receiving the operation instruction.

In another embodiment of the present disclosure, the first detection module 2002 is configured to: obtain a target obstacle image by using the imaging apparatus; extract an object characteristic of the target obstacle image by using an image detection classification model; and determine, based on the object characteristic, the recognition result for determining the object category of the target obstacle. The object characteristic comprises at least one of a size characteristic, a color characteristic, and a contour characteristic.

In another embodiment based on the method described above in the present disclosure, the method further comprises, prior to obtaining the target obstacle image by using the imaging apparatus: obtaining at least two sample images; labeling a category identifier for each of the at least two sample images based on an object category of an obstacle; and obtaining the image detection classification model satisfying a predetermined condition by training a predetermined image semantic segmentation model by using the sample images labeled with the category identifiers and the obstacle object characteristics comprised in the sample images. The sample image comprises at least one obstacle object characteristic. The image detection classification model is configured for determining the object category of the target obstacle.

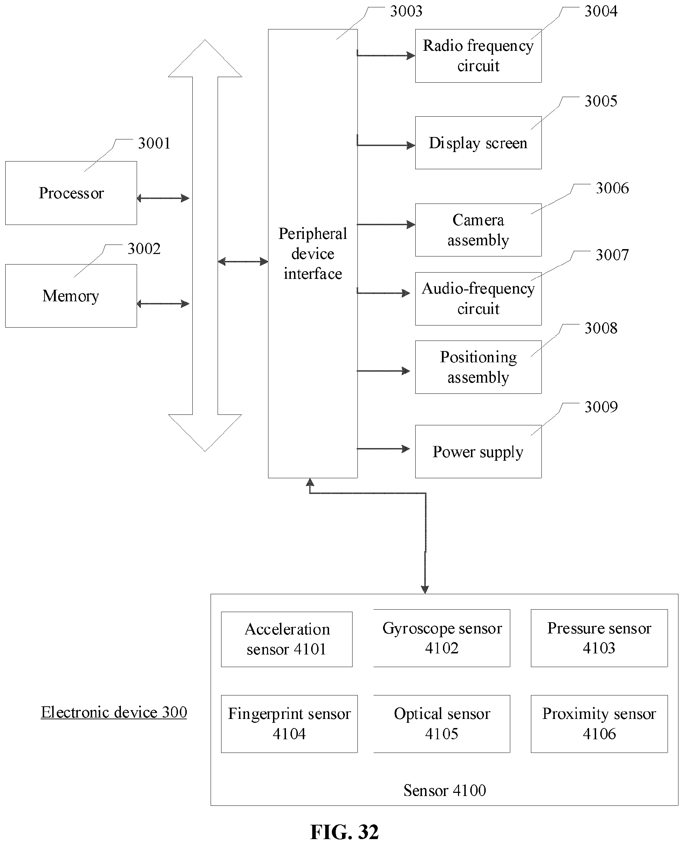

FIG. 32 is a block diagram of a logic structure of an electronic device according to an exemplary embodiment. For example, the electronic device 3000 may be a mobile phone, a computer, a digital broadcasting terminal, a messaging transceiver, a gaming console, a tablet device, a medical device, a fitness device, a personal digital assistant, or the like.

Referring to FIG. 32, the electronic device 3000 may comprise one or more of a processor 3001 and a memory 3002.

The processor 3001 may comprise one or more processing cores, such as a 4-core processor, an 8-core processor, or the like. The processor 3001 may be realized in at least one hardware form among digital signal processing (DSP), field-programmable gate array (FPGA), and programmable logic array (PLA). The processor 3001 may also comprise a main processor and a coprocessor. The main processor is a processor for processing data in a wake-up state, and also known as a central processing unit (CPU). The coprocessor is a low power processor for processing data in a standby state. In some embodiments, the processor 3001 may be integrated with a graphics processing unit (GPU). GPU is responsible for rendering and drawing a content required to be displayed on the display screen. In some embodiments, the processor 3001 may also comprise an artificial intelligence (Al) processor for processing computational operations related to robot learning.

The memory 3002 may comprise one or more computer-readable storage media, which may be non-transient. The memory 3002 may also comprise a high-speed random access memory and a non-volatile memory such as one or more disk storage devices and one or more flash storage devices. In some embodiments, a non-transient computer-readable storage medium in the memory 3002 is configured for storing at least one instruction. The at least one instruction is configured for being executed by the processor 3001 to realize the obstacle avoidance method provided by method embodiments of the present disclosure.

In some embodiments, the electronic device 3000 may also optionally comprise a peripheral device interface 3003 and at least one peripheral device. The processor 3001, the memory 3002, and the peripheral device interface 3003 may be connected to each other by a bus or signal line. Each peripheral device may be connected to the peripheral device interface 3003 via a bus, signal line, or circuit board. In an exemplary embodiment of the present disclosure, the peripheral device comprises at least one of a radio frequency circuit 3004, a touch display screen 3005, a camera 3006, an audio-frequency circuit 3007, a positioning assembly 3008, and a power supply 3009.

The peripheral device interface 3003 may be configured to connect at least one input/output (I/O)-related peripheral device to the processor 3001 and the memory 3002. In some embodiments, the processor 3001, the memory 3002, and the peripheral device interface 3003 are integrated on a same chip or a same circuit board. In some other embodiments, any one or two of the processor 3001, the memory 3002, and the peripheral device interface 3003 may be implemented on a separate chip or a separate circuit board, which is not limited in this embodiment.

The radio frequency circuit 3004 is configured to receive and transmit a radio frequency (RF) signal, also known as an electromagnetic signal. The radio frequency circuit 3004 communicates with a communication network and other communication devices through electromagnetic signals. The radio frequency circuit 3004 converts an electrical signal into the electromagnetic signal for transmission or converts the received electromagnetic signal into the electrical signal. In another exemplary embodiment of the present disclosure, the radio frequency circuit 3004 comprises an antenna system, an RF transceiver, one or more amplifiers, a tuner, an oscillator, a digital signal processor, a codec chipset, a user identity module card, and the like. The radio frequency circuit 3004 may communicate with other terminals through at least one wireless communication protocol. Such wireless communication protocols comprise but are not limited to: a metropolitan area network, various generations of mobile communication networks (2G, 3G, 4G, and 5G), a wireless local area network and/or a wireless fidelity (WiFi) network. In some embodiments, the radio frequency circuit 3004 may also comprise circuits related to near field communication (NFC), which is not limited by the present disclosure.

The display screen 3005 is configured for displaying a user interface (Ul). The UI may comprise graphics, text, icons, videos, and any combination thereof. When the display screen 3005 is a touch display screen, the display screen 3005 also has an ability to acquire touch signals on or above a surface of the display screen 3005. The touch signal may be inputted as a control signal to the processor 3001 for processing. At this time, the display screen 3005 may also be configured to provide a virtual button and/or a virtual keyboard, also referred to as a soft button and/or a soft keyboard. In some embodiments, one display screen 3005 may be provided at a front panel of the electronic device 3000. In other some embodiments, at least two display screens 3005 may be provided respectively at different surfaces of the electronic device 3000 or be shown in a folded design. In yet other some embodiments, the display screen 3005 may be a flexible display screen disposed at a curved surface or a folded surface of the electronic device 3000. Even, the display screen 3005 may also be disposed in a non-rectangular irregular pattern, i.e., a special-shaped screen. The display screen 3005 may be made of materials such as a liquid crystal display screen (LCD), an organic light-emitting diode (OLED), and the like.

A camera assembly 3006 is configured to capture an image or video. In another exemplary embodiment of the present disclosure, the camera assembly 3006 comprises a front camera and a rear camera. Typically, the front camera is disposed at a front panel of the terminal, and the rear camera is disposed at a back of the terminal. In some embodiments, at least two rear cameras are provided, and are respectively a main camera, a depth-of-field camera, a wide-angle camera, and a telephoto camera, to realize the fusion of the main camera and the depth-of-field camera to realize a background blur function, and the fusion of the main camera and the wide-angle camera to realize a panoramic shooting function and a virtual reality (VR) shooting function or other fusion shooting functions. In some embodiments, the camera assembly 3006 may also comprise flashlight. The flashlight may be monochrome temperature flashlight or dual color temperature flashlight. The dual color temperature flashlight refers to a combination of warm light flashlight and cold light flashlight, and may be used for light compensation under different color temperatures.

The audio-frequency circuit 3007 may comprise a microphone and a loudspeaker. The microphone is configured for acquiring sound waves of the user and the environment, and converting the sound waves into electrical signals and inputting the electrical signals to the processor 3001 for processing or inputting the electrical signals to the radio frequency circuit 3004 to realize voice communication. A plurality of microphones may be provided at different parts of the electronic device 3000 for stereo acquisition or noise reduction purposes. The microphone may also be an array microphone or an omnidirectional acquisition microphone. The loudspeaker is configured to convert the electrical signal from the processor 3001 or the radio frequency circuit 3004 into sound waves. The loudspeaker may be a traditional film loudspeaker or a piezoelectric ceramic loudspeaker. When the loudspeaker is the piezoelectric ceramic loudspeaker, the electrical signals can not only be converted into sound waves that can be heard by humans, but also be converted into sound waves that cannot be heard by humans for ranging and other purposes. In some embodiments, the audio-frequency circuit 3007 may also comprise a headset jack.

The positioning assembly 3008 is configured to determine a current geographic position of the electronic device 3000 to realize navigation or location based service (LBS). The positioning assembly 3008 may be a positioning assembly based on the global positioning system (GPS) of the United States, the Beidou system of China, the Grenas system of Russia, or the Galileo system of the European Union.

The power supply 3009 is configured to supply power for various components in the electronic device 3000. The power supply 3009 may be an alternating current, a direct current, a disposable battery, or a rechargeable battery. When the power supply 3009 comprises a rechargeable battery, the rechargeable battery may support wired charging or wireless charging. The rechargeable battery can also be configured to support fast charging technology.

In some embodiments, the electronic device 3000 also comprises one or more sensors 4100. The one or more sensors 4100 comprise, but are not limited to, an acceleration sensor 4101, a gyroscope sensor 4102, a pressure sensor 4103, a fingerprint sensor 4104, an optical sensor 4105, and a proximity sensor 4106.

The acceleration sensor 4101 may detect a magnitude of accelerated speeds on three axes of a coordinate system established by the electronic device 3000. For example, the acceleration sensor 4101 may be configured to detect components of a gravitational acceleration speed on the three axes. The processor 3001 may control the touch display screen 3005 to display the user interface in a lateral view or a longitudinal view based on the gravity acceleration signal acquired by the acceleration sensor 4101. The acceleration sensor 4101 may also be used for acquisition of game data or user motion data.

The gyroscope sensor 4102 may detect a machine body direction and a rotation angle of the electronic device 3000, and may cooperate with the acceleration sensor 4101 to acquire a 3D action of the user on the electronic device 3000. Based on the data acquired by the gyroscope sensor 4102, the processor 3001 may implement functions of motion sensing (such as changing the UI according to a user's tilt operation), image stabilization during shooting, game control, and inertial navigation.

The pressure sensor 4103 may be disposed at a side frame of the electronic device 3000 and/or a lower layer of the touch display screen 3005. When the pressure sensor 4103 is disposed at the side frame of the electronic device 3000, a grip signal of the electronic device 3000 by the user may be detected, and the processor 3001 performs a left and right hand recognition or a shortcut operation based on the grip signal acquired by the pressure sensor 4103. When the pressure sensor 4103 is disposed at the lower layer of the touch display screen 3005, the processor 3001 realizes control of an operable control element on the UI interface according to a pressure operation of the user on the touch display screen 3005. The operable control element comprises at least one of a button control element, a scroll bar control element, an icon control element, and a menu control element.

The fingerprint sensor 4104 is configured to acquire a fingerprint of the user, and an identity of the user is recognized by the processor 3001 based on the fingerprint acquired by the fingerprint sensor 4104, or the identity of the user is recognized by the fingerprint sensor 4104 based on the acquired fingerprint. When the identity of the user is recognized as a trusted identity, the processor 3001 authorizes the user to perform relevant sensitive operations, comprising an operation of unlocking the screen, an operation of viewing encrypted information, an operation of downloading software, an operation of paying, an operation of changing settings, and the like. The fingerprint sensor 4104 may be disposed at a front surface, a back surface, or a side surface of the electronic device 3000. When the electronic device 3000 is provided with a physical button or a manufacturer's Logo, the fingerprint sensor 4104 may be integrated with the physical button or the manufacturer's Logo.

The optical sensor 4105 is configured to acquire an ambient light intensity. In an embodiment, the processor 3001 may control a display brightness of the touch display screen 3005 based on the ambient light intensity acquired by the optical sensor 4105. In an exemplary embodiment of the present disclosure, when the ambient light intensity is high, the display brightness of the touch display screen 3005 is turned up; and when the ambient light intensity is low, the display brightness of the touch display screen 3005 is turned down. In another embodiment, the processor 3001 may also dynamically adjust shooting parameters of the camera assembly 3006 based on the ambient light intensity captured by the optical sensor 4105.

The proximity sensor 4106, also referred to as a distance sensor, is typically disposed at the front panel of the electronic device 3000. The proximity sensor 4106 is configured to acquire a distance between the user and the front surface of the electronic device 3000. In an embodiment, when the proximity sensor 4106 detects that the distance between the user and the front surface of the electronic device 3000 gradually decreases, the touch display screen 3005 is controlled by the processor 3001 to switch from an on-screen state to an off-screen state. When the proximity sensor 4106 detects that the distance between the user and the front surface of the electronic device 3000 gradually increases, the touch display screen 3005 is controlled by the processor 3001 to switch from the off-screen state to the on-screen state.

It may be understood by those skilled in the art that the structure illustrated in FIG. 32 does not constitute a limitation for the electronic device 3000 and may comprise more or fewer components than components shown in the drawings, or combine some components, or employ different component arrangements.

In an exemplary embodiment, a non-transient computer-readable storage medium comprising instructions is also provided, such as a memory 3002 comprising instructions, and the instruction may be executed by the processor 3001 of the electronic device 3000 to complete the above-described obstacle avoidance method for the cleaning robot. The method comprises: starting the cleaning in the target region at the first speed after receiving the operation instruction; obtaining, in response to detecting the target obstacle at the position having the first distance from the cleaning robot in the current forward direction, the recognition result for determining the object category of the target obstacle by using the imaging apparatus disposed on the cleaning robot; selecting the corresponding target obstacle avoidance route based on the recognition result; and maneuvering the cleaning robot based on the target obstacle avoidance route. The target obstacle avoidance route corresponds to one of changing the current forward direction and maintaining the current forward direction. In another exemplary embodiment of the present disclosure, the above instructions may also be executed by the processor 3001 of the electronic device 3000 to complete other steps involved in the above exemplary embodiments. For example, the non-transient computer-readable storage medium may be a ROM, a random access memory (RAM), a CD-ROM, a magnetic tape, a floppy disk, an optical data storage device, and the like.

In an exemplary embodiment, an application program/computer program product comprising one or more instructions is also provided. One or more instructions may be executed by the processor 3001 of the electronic device 3000 to complete the above-described obstacle avoidance method for the cleaning robot. The method comprises: starting the cleaning in the target region at the first speed after receiving the operation instruction; obtaining, in response to detecting the target obstacle at the position having the first distance from the cleaning robot in the current forward direction, the recognition result for determining the object category of the target obstacle by using the imaging apparatus disposed on the cleaning robot; selecting the corresponding target obstacle avoidance route based on the recognition result; and maneuvering the cleaning robot based on the target obstacle avoidance route. The target obstacle avoidance route corresponds to one of changing the current forward direction and maintaining the current forward direction. In another exemplary embodiment of the present disclosure, the above instructions may also be executed by the processor 3001 of the electronic device 3000 to complete other steps involved in the above exemplary embodiments.

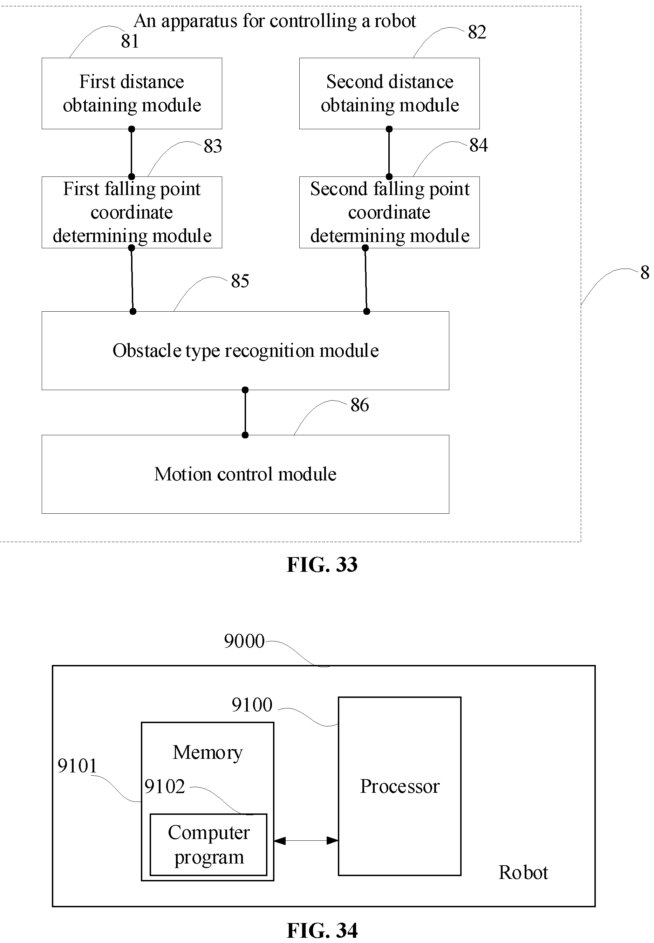

In another exemplary embodiment of the present disclosure, the cleaning device may be a robot, and the control device may be an apparatus for controlling the robot. As illustrated in FIG. 33, the apparatus 8 for controlling the robot is applied to the robot. The robot is mounted with the first laser sensor and the second laser sensor. The inclination angle of the first laser sensor on the robot is different from the inclination angle of the second laser sensor on the robot, and the mounting height of the first laser sensor on the robot is different from the mounting height of the second laser sensor on the robot. The apparatus 8 for controlling the robot comprises a first distance obtaining module 81, a second distance obtaining module 82, a first falling point coordinate determining module 83, a second falling point coordinate determining module 84, an obstacle type recognition module 85, and a motion control module 86.

The first distance obtaining module 81 is configured to obtain a first sensing distance through the first laser sensor. The first sensing distance is a distance between the first laser sensor and a light spot of a laser emitted by the first laser sensor.

In an exemplary embodiment of the present disclosure, the first laser sensor emits laser. When the laser is shielded, the light spot is formed on the shielded object. Since the propagation speed of the light is fixed, the distance between the first laser sensor and the corresponding light spot may be calculated according to the propagation speed of the light and the propagation time of the light.

It should be noted that the first sensing distance in the embodiments of the present disclosure may be calculated by the first laser sensor and transmitted by the first laser sensor to the robot, or may be calculated by the robot.

The robot in the embodiments of the present disclosure may be a cleaning device such as a cleaning robot used for cleaning.

The second distance obtaining module 82 is configured to obtain a second sensing distance through the second laser sensor. The second sensing distance is a distance between the second laser sensor and a light spot of a laser emitted by the second laser sensor.

The manner for calculating the second sensing distance is the same as the manner for calculating the first sensing distance, and details are omitted herein.

The first falling point coordinate determining module 83 is configured to determine a first falling point coordinate based on the mounting height and the inclination angle of the first laser sensor on the robot, and the first sensing distance. The first falling point coordinate is a coordinate of the light spot of the laser emitted by the first laser sensor.

The mounting height of the first laser sensor on the robot refers to the distance from the mounting position where the first laser sensor is mounted on the robot to the ground.

The inclination angle of the first laser sensor on the robot refers to the angle smaller than 90 degrees among the angles between the laser emission opening of the first laser sensor and the robot.

As illustrated in FIG. 25, the laser emission point of the first laser sensor is A1, the light spot of A1 is A2, the inclination angle of the first laser sensor is , the mounting height of the first laser sensor on the robot is H1, and the first sensing distance is A1A2. The laser emission point of the second laser sensor is B1, the light spot of B1 is B2, the inclination angle of the second laser sensor is , the mounting height of the first laser sensor on the robot is H2, and the first sensing distance is B1B2.

According to the length of the hypotenuse (like A1A2) of the right triangle in FIG. 25 and the inclination angle (like ), the length of the right-angle side in the horizontal direction in the right triangle may be determined, and the horizontal coordinate of A2 is further determined. In addition, the length of the right-angled side in the vertical direction of the right triangle may be determined according to the length of the hypotenuse of the right triangle and the inclination angle, and the vertical coordinate of A2 may be calculated by combining the length of the right-angle side with the mounting height H1.

The second falling point coordinate determining module 84 is configured to determine a second falling point coordinate based on the mounting height and the inclination angle of the second laser sensor on the robot, and the second sensing distance. The second falling point coordinate is a coordinate of the light spot of the laser emitted by the second laser sensor.

The manner for calculating the second falling point coordinate is the same as the manner for calculating the first falling point coordinate, and details are omitted herein.

The obstacle type recognition module 85 is configured to recognize an obstacle type corresponding to a target region based on the first falling point coordinate, the second falling point coordinate, and a predetermined height for surmountable obstacle. The target region is a region where the first falling point coordinate and the second falling point coordinate are located.

The predetermined height for surmountable obstacle refers to the greatest obstacle height that can be climbed over by the robot.

In this embodiment, since the information of the two close positions in the vertical direction and in the horizontal direction may reflect the obstacle type in the region where the two close positions are located. For example, when the obstacle type in the region where the two close positions are located is the type of large stair, the values of the two close positions in the vertical direction are generally far smaller than the height for surmountable obstacle. Therefore, through the above-described manner, the obstacle type in the corresponding region can be accurately recognized.

The motion control module 86 is configured to control motion of the robot based on the obstacle type.

In this embodiment, the robot controls itself to execute its corresponding motion according to different types of obstacles, to improve the accuracy of control.

In the embodiment of the present disclosure, the inclination angle of the first laser sensor mounted on the robot is unequal to the inclination angle of the second laser sensor mounted on the robot. Moreover, the mounting height of the first laser sensor on the robot is unequal to the mounting height of the second laser sensor on the robot. Therefore, the first falling point coordinate obtained based on the first laser sensor and the second falling point coordinate obtained based on the second laser sensor are coordinates corresponding to two different positions. Since the coordinates of the two different positions may reflect the height difference between the two positions, combined with the predetermined height for surmountable obstacle, the corresponding obstacle type in the region where the two different positions are located can be quickly and accurately recognized. For example, it is recognized whether the obstacle type is the stair that can be climbed over by the robot. For example, it is possible to recognize whether there is a stair ahead before the robot reaches the stair, rather than recognizing whether there is a stair ahead when the robot reaches the stair.

In some embodiments, the mounting height of the first laser sensor is greater than the mounting height of the second laser sensor. Moreover, the distance that is reachable by the laser emitted by the first laser sensor is greater than the distance that is reachable by the laser emitted by the second laser sensor. The first falling point coordinate is (Xa, Ya). The apparatus 8 for controlling the robot further comprises an absolute value comparison module and a pause control module. The absolute value comparison module is configured to compare the absolute value of Ya with the height for surmountable obstacle. Ya is the vertical coordinate of the first falling point coordinate, and may be greater than 0 or smaller than 0. The height for surmountable obstacle is greater than 0.

The pause control module is configured to control the robot to pause in response to the absolute value of Ya being greater than the height for surmountable obstacle.

In this embodiment, in response to Ya being greater than 0, when Ya is greater than the height for surmountable obstacle, it indicates that a high obstacle may occur in front of the robot. In this case, the robot is first controlled to stop motion. In this way, sufficient time can be left for subsequent control of the robot.

Similarly, in response to Ya being smaller than 0, when Ya is smaller than the negative number of the height for surmountable obstacle, it indicates that a low stair (such as a downward stair) may occur in front of the robot. In this case, the robot is first controlled to stop motion. In this way, a sufficient time can be left for subsequent control of the robot.

In the embodiment of the present disclosure, Ya is the light spot corresponding to the laser emitted from the first laser sensor, and the mounting height of the first laser sensor on the robot is higher than the mounting height of the second laser sensor on the robot. Moreover, the distance that is reachable by the laser emitted by the first laser sensor is greater than the distance that is reachable by the laser emitted by the second laser sensor. Therefore, compared with the second falling point coordinate, Ya of the first falling point coordinate can reflect the obstacle information of the position farther ahead of the robot. In this way, it is conducive for the robot to make earlier response. Meanwhile, when the absolute value of Ya is greater than the height for surmountable obstacle, it indicates that an upward stair or an upward obstacle may occur in front of the robot, or a downward stair may occur in front of the robot. Therefore, the robot is first controlled to stop motion, and then continues to be controlled to move after the obstacle type is determined. In this way, the robot has enough time to change its motion when it cannot pass the obstacle. Further, the probability of the occurrence of accidents in the robot can be effectively reduced.

In some embodiments, the first laser sensor may be a line laser sensor, and the second laser sensor may be a laser ranging sensor.

The first falling point coordinate corresponding to the first laser sensor is first selected for processing during the recognition of the obstacle type, and the scanning region corresponding to the line laser sensor is greater than the scanning region corresponding to the laser ranging sensor. Therefore, the first laser sensor is provided as the line laser sensor, and the second laser sensor is provided as the laser ranging sensor, which can not only improve the probability of scanning the obstacle, but can also reduce the cost.

In some embodiments, by assuming that the horizontal coordinate of the second falling point coordinate is Xb, the vertical coordinate of the second falling point coordinate is Yb, and the height for surmountable obstacle is h, the obstacle type recognition module 85 is specifically configured to: determine that the obstacle type corresponding to the target region is a large stair in response to Ya being smaller than -h and Yb being smaller than or equal to Ya.

In this embodiment, when Ya<-h (i.e., the absolute value of Ya is greater than h), in response to determining that Yb≤Ya, it is determined that there is a large stair in front of the robot. At this time, the robot may retreat and then turn to change its path.

It is determined that the obstacle type corresponding to the target region is a down ramp in response to Ya being smaller than -h and Yb being smaller than 0 and greater than Ya.

In the embodiment, as illustrated in FIG. 27, when Ya<-h (i.e., the absolute value of Ya is greater than h), in response to determining that Ya<Yb<0, it is determined that there is down ramp in the front of the robot.

It is determined that the obstacle type corresponding to the target region is a large stair in response to Ya being smaller than -h and Yb being greater than or equal to 0.

As illustrated in FIG. 28, when Ya<-h (i.e., the absolute value of Ya is greater than h), in response to determining that Yb≥0, it is determined that there is a large stair in the front of the robot. At this time, the robot may retreat and then turn to change its path.

According to the relationship between the first falling point coordinate and the second falling point coordinate in FIG. 27 and FIG. 28, the determining method adopted in the embodiments of the present disclosure may accurately determine whether the obstacle type is a large stair or a down ramp.

In some embodiments, if the obstacle type is the down ramp, controlling the motion of the robot based on the obstacle type comprises: determining the angle corresponding to the down ramp, and controlling the motion of the robot based on the angle corresponding to the down ramp and the predetermined climbable degree.

In this embodiment, the angle corresponding to the down ramp may be calculated according to the relationship between the first falling point coordinate and the second falling point coordinate. When the angle corresponding to the down ramp is smaller than or equal to the predetermined climbable degree, the robot continues to move forwards and downhill. When the angle corresponding to the down ramp is greater than the predetermined climbable degree, the robot retreats and then turns to change the path.

In the embodiment of the present disclosure, the robot is usually unable to climb over the ramp with the large angle (such as not exceeding the predetermined climbable degree) after the robot is designed. Therefore, when it is determined the down ramp in front of the robot, the corresponding motion needs to be selected in combination with the angle corresponding to the down ramp and the predetermined climbable degree, to avoid the overturning of the robot caused by the robot still moving forwards when the angle corresponding to the down ramp is too large.

In some embodiments, by assuming that the horizontal coordinate of the second falling point coordinate is Xb, the vertical coordinate of the second falling point coordinate is Yb, and the height for surmountable obstacle is h, the obstacle type recognition module 85 is specifically configured to: determine that the obstacle type corresponding to the target region is a high obstacle in response to Ya being greater than h and Xb being greater than or equal to Xa.

In this embodiment, as illustrated in FIG. 29, in response to Ya>h (i.e., the absolute value of Ya is greater than h) and determining that Xb≥Xa, it is considered that a high obstacle occurs in front of the robot. At this time, the robot may retreat and then turn to change the path.

It is determined that the obstacle type corresponding to the target region is an up ramp in response to Ya being greater than h and Xb being smaller than Xa.

In this embodiment, in response to Ya>h (i.e., the absolute value of Ya is greater than h) and determining that Xb<Xa, it is considered that the up ramp occurs in the front of the robot.

According to the relationship between the first falling point coordinate and the second falling point coordinate in FIG. 29 and FIG. 30, the determining method adopted in the embodiments of the present disclosure may accurately determine whether the obstacle type is a high obstacle or an up ramp.

In some embodiments, the obstacle type is the up ramp, and controlling the motion of the robot based on the obstacle type comprises: determining the angle corresponding to the up ramp; and controlling the motion of the robot based on the angle corresponding to the up ramp and the predetermined climbable degree.

In this embodiment, the angle corresponding to the up ramp may be calculated based on the first falling point coordinate and the second falling point coordinate. When the angle corresponding to the up ramp is smaller than or equal to the predetermined climbable degree, the robot continues to move forwards and uphill. When the angle corresponding to the up ramp is greater than the predetermined climbable degree, the robot retreats and then turns to change the path.

In the embodiment of the present disclosure, when it is determined the up ramp in front of the robot, the corresponding motion is selected in combination with the angle corresponding to the up ramp and the predetermined climbable degree. Therefore, the overturning of the robot, caused by the robot still moving forwards when the angle corresponding to the up ramp is too large, can be avoided.

In some embodiments, the mounting height of the first laser sensor on the robot is greater than the mounting height of the second laser sensor on the robot. The distance that is reachable by the laser emitted by the first laser sensor is greater than the distance that is reachable by the laser emitted by the second laser sensor. The first falling point coordinate is (Xa, Ya). Moreover, the height for surmountable obstacle is h. The apparatus 8 for controlling the robot further comprises a mode switching module configured to control the robot to switch from the normal mode to the low-speed mode in response to Ya being greater than the target height and smaller than or equal to h. The target height is greater than 0 and smaller than h. The speed of the low-speed mode is smaller than the speed of the normal mode.

In some embodiments, the target height may be set to h/2.

When it is determined that Ya has a predetermined height, it indicates that there may be a region that cannot be climbed over in front of the robot, and the speed in the low-speed mode is lower, i.e., the corresponding inertia in the low-speed mode is smaller. Therefore, switching the robot from the normal mode to the low-speed mode can reduce the probability of the occurrence of accidents in the robot by performing judgment in advance. In this way, the accuracy of the control on the robot is improved.

The robot is controlled to move in the normal mode in response to Ya being greater than or equal to a negative number of the target height and smaller than or equal to the target height.

In this embodiment, since the target height is between 0 and h, when it is determined that Ya is between the target height and the negative number of the target height, it indicates that the probability, that the region in front of the robot is the region that can be climbed over by the robot, is high. At this time, the robot only needs to be controlled to move in the normal mode to ensure that the robot can perform tasks smoothly.

The robot is controlled to switch from the normal mode to the low-speed mode in response to Ya being greater than or equal to the negative number of h and smaller than the negative number of the target height.

In this embodiment, when it is determined that Ya is smaller than the negative number of the target height, it indicates the terrain at the position where the first falling point coordinate is located is low, i.e., it indicates that there is a high probability that a region, which cannot be climbed over by the robot, occurs in front of the robot, and the speed in the low-speed mode is lower, i.e., the corresponding inertia in the low-speed mode is smaller. Therefore, by switching the robot from the normal mode to the low-speed mode first, the probability of the occurrence of accidents in the robot can be reduced by performing judgment in advance. In this way, an accuracy of the control on the robot is improved.

It should be noted that since contents such as information interaction and execution processes between the above-mentioned apparatuses/units are based on the same concept as the method embodiments of the present disclosure, for specific functions and technical effects brought by the above-mentioned apparatuses/units, reference may be made to the method embodiments specifically, and details are omitted herein.

FIG. 34 is a schematic structural diagram of a robot according to an embodiment of the present disclosure. As illustrated in FIG. 34, the robot 9000 in this embodiment comprises at least one processor 9100 (only one processor is illustrated in FIG. 34), a memory 9101, and a computer program 9102 stored in the memory 9101 and executable on the at least one processor 9100. The processor 9100 performs the steps in any of the various method embodiments described above when executing the computer program 9102.

The robot may comprise, but is not limited to, the processor 9100 and the memory 9101. It may be understood by those skilled in the art that FIG. 34 is only an example of the robot 9000, does not constitute a limitation on the robot 9000, and may comprise more or fewer components than the components shown in the drawings, or combinations of some components, or different components. For example, input and output devices, network access devices, and the like may also be comprised.

The processor 9100 may be a central processing unit (CPU). The processor 9100 may also be any other general-purpose processor, a digital signal processor (DSP), an application specific integrated circuit (ASIC), a field-programmable gate array (FPGA), or any other programmable logic device, a discrete gate or a transistor logic device, a discrete hardware component, and the like. The general-purpose processor may be a microprocessor, or the processor may also be any conventional processor or the like.

In some embodiments, the memory 9101 may be an internal storage unit of the robot 9000, such as a hard disk or a memory of the robot 9000. In other some embodiments, the memory 9101 may also be an external storage device of the robot 9000, such as a plug-in hard disk, a smart media card (SMC), a secure digital (SD) card, a flash card, or the like equipped on the robot 9000. Further, the memory 9101 may also comprise both the internal storage unit of the robot 9000 and the external storage device of the robot 9000. The memory 9101 is configured for storing an operation system, an application program, a BootLoader program, data, and other programs, such as a program code of the computer program. The memory 91 may also be used for temporarily storing data that has been outputted or data that is to be outputted.

Those skilled in the art can clearly understand that, for convenience and conciseness of description, the divisions of the above functional units and modules are merely illustrative. In practical applications, the above functions can be allocated to different functional units and modules for implementation as required. That is, an internal structure of the above apparatus is divided into different functional units or modules to complete all or part of the functions described above. The functional units and modules in the embodiments may be integrated into one processing unit, or each unit may exist physically alone, or two or more units may be integrated into one unit. The integrated units can be implemented in a form of hardware, or in a form of a software functional unit. In addition, specific names of the functional units and modules are only for the convenience of distinguishing one from another, and are not used to limit the scope of the present disclosure. For a specific working process of the units and modules in the above system, reference may be made to a corresponding process in the above method embodiments, and details thereof will not be repeated herein.

The embodiments of the present disclosure also provide a network device. The network device comprises at least one processor, a memory, and a computer program stored in the memory and executable on the at least one processor. The processor performs the steps in any of the above-mentioned various method embodiments when executing the computer program.

The embodiments of the present disclosure also provide a computer-readable storage medium having a computer program stored thereon. The computer program, when executed by the processor, causes the processor to perform the steps in various method embodiments described above.

The embodiments of the present disclosure provide a computer program product. When the computer program product is operated on a mobile terminal, the mobile terminal is caused to perform the steps in the above-described various method embodiments during executing.

In another exemplary embodiment of the present disclosure, the room characteristic parameter comprises the room characteristic information of the room, and the obstacle parameter comprises the position of the object in the room. The control device is further configured to: determine the cleaning parameter according to the room characteristic information; and control the cleaning device to avoid the position of the object and to operate according to the cleaning parameter.

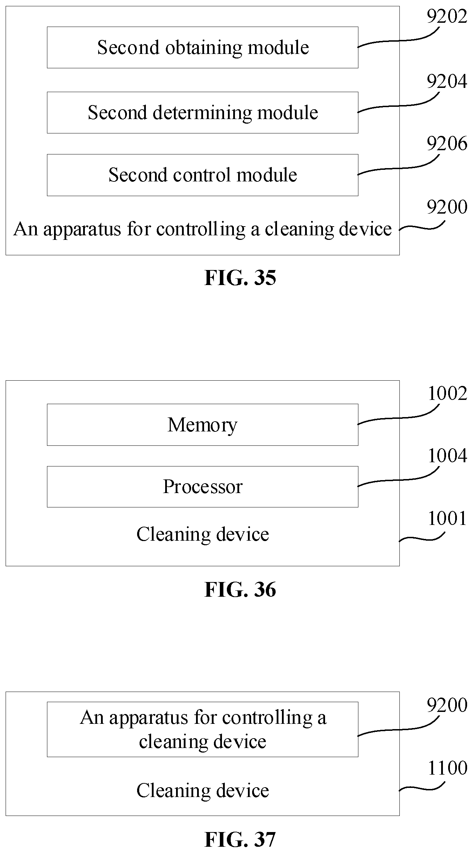

That is, in some embodiments of the present disclosure, an apparatus for controlling a cleaning device is provided, and FIG. 35 illustrates a schematic block diagram of an apparatus 9200 for controlling a cleaning device. The apparatus 9200 for controlling the cleaning device comprises a second obtaining module 9202, a second determining module 9204, and a second control module 9206.

The second obtaining module 9202 is configured to obtain the room characteristic information of the room to be cleaned by the cleaning device and the positions of the object in the room to be cleaned. The second determining module 9204 is configured to determine the cleaning parameter based on the room characteristic information of the room to be cleaned. The second control module 9206 is configured to control the operation of the cleaning device according to the cleaning parameter, and avoid the position of the object in the room to be cleaned during the operation.

In this technical solution, the cleaning device may be a sweeping robot, a mopping robot, an all-in-one sweeping and mopping robot, and the like, and is movable in the plurality of rooms. In this way, the objective of performing cleaning in different rooms is realized.

In an exemplary embodiment of the present disclosure, the cleaning device is mounted with a camera, an infrared sensor, and the like, and may acquire the room characteristic information in the room and the specific position of the fixed object in the room. The position characteristic information of the object is capable of indicating the room type, the ground paving in the room, and other situations.

Further, the corresponding cleaning parameter is determined according to the room characteristic information in the room, and the route of the cleaning device is determined according to the specific position of the fixed object. In this way, the cleaning device can move with avoiding the specific position of the fixed object and perform a cleaning operation according to the control information.

Through the above manner, the cleaning device is able to adaptively set a reasonable cleaning manner based on the specific situation of the room, realize more intelligent and customized cleaning, and improve the efficiency and accuracy of the room cleaning.

In this technical embodiment, the room characteristic information may comprise the room type. In this way, the second determining module 9204 is configured to determine the first cleaning parameter of the cleaning device correspondingly according to the room type. The cleaning parameter of the cleaning device comprises the first cleaning parameter. The room may comprise a bedroom, a living room, a kitchen, or a toilet. The first cleaning parameters such as the cleaning priorities and cleaning degrees of the cleaning device in different types of rooms may be different. Through the above manner, the cleaning manner of the cleaning device is adaptively controlled according to the room type. In this way, the efficiency and accuracy of the room cleaning are improved.

In this embodiment, when the room is the bedroom or the living room, the cleaning priority is greater than or equal to a first threshold. When the room is the toilet or the kitchen, the cleaning priority is smaller than the first threshold.

In the technical solution, since the dirty degree of the toilet or the kitchen is greater than the dirty degree of the bedroom or the living room, the cleaning degree for the toilet or the cleaning degree of the kitchen is also greater. That is, the cleaning degree corresponding to a room type of the toilet or the kitchen is greater than or equal to a second threshold, and the cleaning degree corresponding to a room type of the bedroom or the living room is smaller than the second threshold.

In this technical solution, the room characteristic information may comprise the flooring material. For example, the materials comprise wood (like the wood floors), porcelain, stone (like the floor tiles), concrete, and the like. The cleaning parameter of the cleaning device comprises the second cleaning parameter, and the second cleaning parameter may be the at least one of the water allocating amount, the number of cleaning times, and the fan suction force. In an exemplary embodiment of the present disclosure, the second determining module 9204 is configured to correspondingly determine the water allocating amount, the number of cleaning times, the fan suction force, and the like of the cleaning device during operation based on the flooring material in the room. Through the above manner, the cleaning device is capable of realizing more personalized and intelligent cleaning of the room based on the flooring material in the room.

In the technical solution, the water allocating amount of the cleaning device corresponding to a flooring material of wood is smaller than or equal to a third threshold. The water allocating amount of the cleaning device corresponding to a flooring material of porcelain or stone is greater than the third threshold and smaller than or equal to a fourth threshold. The water allocating amount of the cleaning device corresponding to a flooring material of concrete is greater than the fourth threshold. The fourth threshold is greater than the third threshold.

In the technical solution, the number of cleaning times of the cleaning device corresponding to a flooring material of wood is greater than or equal to a fifth threshold. The number of cleaning times of the cleaning device corresponding to a flooring material of porcelain or stone is smaller than the fifth threshold and greater than or equal to a sixth threshold. The number of cleaning times of the cleaning device corresponding to a flooring material of concrete is smaller than the sixth threshold. The sixth threshold is smaller than the fifth threshold.

In this technical solution, the second determining module 9204 is also configured to determine the relative position information of the object in the room with respect to the ground. The relative position information is capable of indicating whether there is a gap between the object and the ground and the size of the gap when there is a gap. The second determining module 9204 is configured to determine whether the cleaning device moves with avoiding the object based on the relative position information according to whether there is a gap or the size of the gap when there is a gap. Through the above-mentioned manner, performing control on the manner of avoiding the object by the cleaning device is realized, and the cleaning effect of the room is improved.

In this technical solution, the apparatus 9200 for controlling the cleaning device further comprises an acquisition module configured to acquire the first image of the room. The second determining module 9204 is configured to determine the specific room entered by the cleaning device based on the first image, and determine the room characteristic information of the room and the position of the object according to the predetermined correspondence relationship among the room, the room characteristic information, and the position of the object.

In this technical solution, the second control module 9206 is further configured to control the cleaning device to move in the room, and the acquisition module is further configured to obtain the second image of the room during the movement of the cleaning device, to realize image collection with positioning. Further, the second control module 9206 is further configured to recognize the room characteristic information of the room and the position of the object in the second image, and store the room name in correspondence with the room characteristic information and the position of the object, to determine the predetermined correspondence relationship.

In another exemplary embodiment of the present disclosure, a cleaning device is also provided, and FIG. 36 illustrates a schematic block diagram of the cleaning device 1001 according to the embodiments of the present disclosure. The cleaning device 1001 comprises the memory 1002 and the processor 1004.

The memory 1002 has a program or an instruction stored therein, and the processor 1004 performs the steps of the method for controlling the cleaning device according to any of the technical solutions described above when executing the program or the instruction. The memory 1002 may be connected to the processor 1004 via a bus or through other manners. The processor 1004 may comprise one or more processing units, and may be chips like a central processing unit (CPU), a digital signal processor (DSP), an application specific integrated circuit (ASIC), and a field programmable gate array (FPGA).

The cleaning device 1001 provided in the present disclosure performs the steps of the method for controlling the cleaning device according to any of the technical solutions described above when the program or instruction is executed by the processor 1004. Therefore, the cleaning device 1001 comprises all the beneficial effects of the method for controlling the cleaning device according to any of the technical solutions described above.

In the above-described technical solution, the cleaning device 1001 may be a mopping robot or an all-in-one sweeping and mopping robot.

In another exemplary embodiment of the present disclosure, a cleaning device is also provided, and FIG. 37 illustrates a schematic block diagram of the cleaning device 1100 according to an embodiment of the present disclosure. The cleaning device 1100 comprises the apparatus 9200 for controlling the cleaning device in the technical solutions as described above.

The cleaning device 1100 provided in the present disclosure comprises the apparatus 9200 for controlling the cleaning device in the technical solutions as described above. Therefore, the cleaning device 1100 comprises all the beneficial effects of the apparatus 9200 for controlling the cleaning device in the technical solution as described above.

In an embodiment of the present disclosure, a readable storage medium is provided. The readable storage medium has a program or an instruction stored thereon. The program or the instruction, when executed by a processor, causes the processor to perform the steps of the method for controlling the cleaning device according to any one of the technical solutions described above.

The readable storage medium comprises a read-only memory (ROM), a random access memory (RAM), a magnetic disk or an optical disc, and the like.

The readable storage medium provided by the present disclosure realizes the steps of the method for controlling the cleaning device according to any of the technical solutions described above when the program or instruction is executed by the processor. Therefore, the readable storage medium comprises all the beneficial effects of the method for controlling the cleaning device according to any of the technical solutions described above.

In another exemplary embodiment of the present disclosure, the room characteristic parameter comprises the floor characteristic information of the room. The control device is further configured to determine the control information according to the floor characteristic information, and maneuver the cleaning device according to the control information.

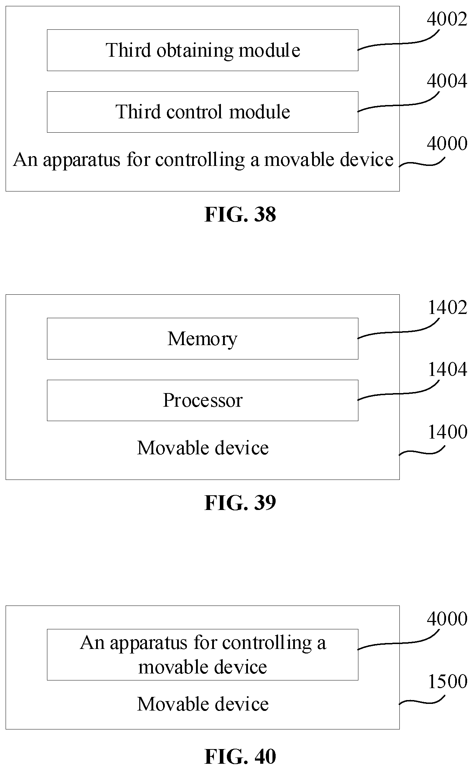

That is, in some embodiments of the present disclosure, an apparatus for controlling a movable device is provided, and FIG. 38 illustrates a schematic block diagram of an apparatus 4000 for controlling a movable device according to an embodiment of the present disclosure. The apparatus 4000 for controlling the movable device comprises a third obtaining module 4002 and a third control module 4004.

The third obtaining module 4002 is configured to obtain the floor characteristic information of the room, and the third control module 4004 is configured to determine the control information for the movable device based on the floor characteristic information, and maneuver the movable device according to the control information.

In this technical solution, the movable device may be a cleaning device such as a sweeping robot, a mopping robot, and an all-in-one sweeping and mopping robot, and is movable in the plurality of rooms. In this way, the objective of performing cleaning in different rooms is realized.

In an exemplary embodiment of the present disclosure, the movable device is mounted with a camera, an infrared sensor, and other devices, and may acquire the floor characteristic information in the room, and the floor characteristic information is capable of indicating the ground paving situation in the room. Further, the corresponding control information is determined according to the floor characteristic information in the room. In this way, the movable device performs the cleaning operation according to the control information.

Through the above manner, the movable device is capable of achieving more intelligent and customized cleaning based on the ground situations of the room, and improving the efficiency and accuracy of the room cleaning.

In some embodiments of the present disclosure, a movable device is provided, and FIG. 39 illustrates a schematic block diagram of a movable device 1400 according to an embodiment of the present disclosure. The movable device 1400 comprises a memory 1402 and a processor 1404.

The memory 1402 is configured to store a program or an instruction. The processor 1404, when executing the program or the instruction, performs the steps of the method for controlling the movable device according to any of the above technical solutions.

The memory 1402 may be connected to the processor 1404 via a bus or through other manners. The processor 1404 may comprise one or more processing units, and may be chips like a central processing unit (CPU), a digital signal processor (DSP), an application specific integrated circuit (ASIC), and a field programmable gate array (FPGA).

The movable device 1400 provided in the present disclosure performs the steps of the method for controlling the movable device according to any of the technical solutions described above when the program or the instruction is executed by the processor 1404. Therefore, the movable device 1400 comprises all the beneficial effects of the method for controlling the movable device according to any of the technical solutions described above.

In another exemplary embodiment of the present disclosure, a movable device is provided, and FIG. 40 illustrates a schematic block diagram of a movable device 1500 according to an embodiment of the present disclosure. The movable device 1500 comprises the apparatus 4000 for controlling the movable device of the technical solution as described above.

The movable device 1500 provided in the present disclosure comprises the apparatus 4000 for controlling the movable device of the technical solution as described above. Therefore, the movable device 1500 comprises all the beneficial effects of the apparatus 4000 for controlling the movable device in the technical solution as described above.

The embodiments of the present disclosure also provide a readable storage medium having a program or an instruction stored thereon. The program or the instruction, when executed by a processor, causes the processor to perform the method for controlling the movable device according to any of the technical solutions described above.

The readable storage medium comprises a read-only memory (ROM), a random access memory (RAM), a magnetic disk or an optical disc, and the like.

The readable storage medium provided by the present disclosure performs the steps of the method for controlling the movable device according to any of the technical solutions described above when the program or the instruction is executed by the processor. Therefore, the readable storage medium comprises all the beneficial effects of the method for controlling the movable device according to any of the technical solutions described above.

In the description of the present disclosure, it needs to be understood that, orientation or position relationship indicated by terms such as "center", "over", "below", "front", "back", "left", "right", "vertical", "horizontal", "top", "bottom", "in", "out", etc., is based on the orientation or position relationship illustrated in the accompanying drawings, and is merely for the convenience of describing the present disclosure and simplifying the description, rather than indicating or implying that the associated apparatus or element must have a specific orientation, or be constructed and operated in a specific orientation, and therefore cannot be understood as a limitation on the present disclosure.

It should be noted that the terms "first" and "second" are only used for descriptive purposes, and cannot be understood as indicating or implying relative importance or implicitly indicating the number of indicated technical features. Therefore, the features associated with "first" and "second" may explicitly or implicitly comprise one or more of the features. Further, in the description of the present disclosure, "plurality" means at least two, unless otherwise specifically defined.

In the description of this specification, descriptions with reference to the terms "an embodiment," "some embodiments," "schematic embodiments," "examples," "specific examples," or "some examples", etc. mean that specific features, structure, materials or characteristics described in conjunction with the embodiment or example are comprised in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure are illustrated and described above, it may be understood by those of ordinary skill in the art that various changes, modifications, substitutions and alterations may be made to these embodiments without departing from the principle and concept of the present disclosure. The scope of the present disclosure is defined by the claims and their equivalents.

## Claims

1. A method for controlling a cleaning device, comprising:
obtaining an environmental characteristic parameter by detecting an operation environment of the cleaning device, the environmental characteristic parameter comprising at least one of a room characteristic parameter and an obstacle parameter; and
controlling the cleaning device to perform cleaning according to the at least one of the room characteristic parameter and the obstacle parameter.

2. The method according to claim 1, wherein
the room characteristic parameter comprises floor characteristic information of a room; and
controlling the cleaning device to perform cleaning according to the room characteristic parameter comprises:
determining control information according to the floor characteristic information, and
controlling the cleaning device according to the control information.

3. The method according to claim 2, wherein
the floor characteristic information comprises a flooring material; and
said determining the control information according to the floor characteristic information comprises:
determining first control information corresponding to the flooring material,
wherein the first control information comprises at least one of a water allocating amount, a number of cleaning times, a fan suction force, and a moving speed.

4. The method according to claim 3, wherein:
a water allocating amount corresponding to a flooring material of wood is smaller than a water allocating amount corresponding to a flooring material of porcelain or stone; and/or
a number of cleaning times corresponding to a flooring material of wood is greater than a number of cleaning times corresponding to a flooring material of porcelain or stone.

5. The method according to claim 2, wherein:
the floor characteristic information comprises a flooring direction; and
said determining the control information according to the floor characteristic information comprises:
determining second control information corresponding to the flooring direction,
wherein the second control information comprises that a cleaning direction of the cleaning device is in consistent with the flooring direction.

6. The method according to any one of claims 2 to 5, wherein:
the floor characteristic information comprises a flooring size; and
said determining the control information according to the floor characteristic information comprises:
determining a room type of the room based on the flooring size; and
determining third control information corresponding to the room type.

7. The method according to claim 6, wherein:
the room type comprises at least one of a bedroom, a living room, a kitchen, and a toilet; and
the third control information comprises at least one of a room cleaning sequence, a cleaning agent amount, and a disinfectant amount.

8. The method according to any one of claims 2 to 5, wherein:
the floor characteristic information comprises a socket position; and
said determining the control information according to the floor characteristic information comprises:
determining fourth control information corresponding to the socket position.

9. The method according to claim 8, wherein the fourth control information comprises that a cleaning area of the cleaning device is out of a predetermined range of the socket position.

10. The method according to any one of claims 2 to 5, wherein:
the floor characteristic information comprises a room segmenting characteristic of the room; and
said determining the control information according to the floor characteristic information comprises:
determining control information corresponding to the room segmenting characteristic based on a height of the room segmenting characteristic being smaller than or equal to a predetermined threshold.

11. The method according to any one of claims 2 to 5, wherein obtaining the floor characteristic information of the room comprises:
obtaining a room segmenting characteristic of the room; and
obtaining the floor characteristic information of the room in response to the cleaning device entering the room through the room segmenting characteristic.

12. The method according to claim 1, wherein:
the room characteristic parameter comprises room characteristic information of a room; and
the obstacle parameter comprises a position of an object in the room,
wherein controlling the cleaning device to perform cleaning according to the room characteristic parameter and the obstacle parameter comprises:
determining a cleaning parameter according to the room characteristic information; and
controlling the cleaning device to avoid the position of the object and to operate according to the cleaning parameter.

13. The method according to claim 12, wherein:
the room characteristic information comprises a room type; and
said determining the cleaning parameter according to the room characteristic information comprises:
determining a first cleaning parameter corresponding to the room type,
wherein the first cleaning parameter comprises at least one of a cleaning priority and a cleaning degree.

14. The method according to claim 13, wherein:
a cleaning priority corresponding to a room type of a bedroom or a living room is greater than a cleaning priority corresponding to a room type of a toilet or a kitchen; and/or
a cleaning degree corresponding to a room type of a toilet or a kitchen is greater than a cleaning degree corresponding to a room type of a bedroom or a living room.

15. The method according to claim 12, wherein:
the room characteristic information comprises a flooring material; and
said determining the cleaning parameter according to the room characteristic information comprises:
determining a second cleaning parameter corresponding to the flooring material,
wherein the second cleaning parameter comprises at least one of a water allocating amount, a number of cleaning times, and a fan suction force.

16. The method according to claim 15, wherein:
a water allocating amount corresponding to a flooring material of wood, a water allocating amount corresponding to a flooring material of porcelain or stone, and a water allocating amount corresponding to a flooring material of concrete increase sequentially; and/or
a number of cleaning times corresponding to a flooring material of wood, a number of cleaning times corresponding to a flooring material of porcelain or stone, and a number of cleaning times corresponding to a flooring material of concrete decrease sequentially.

17. The method according to any one of claims 12 to 16, wherein said controlling the cleaning device to avoid the position of the object comprises:
determining relative position information of the object with respect to a ground of the room; and
controlling the cleaning device to avoid the position of the object according to the relative position information.

18. The method according to any one of claims 12 to 16, wherein obtaining the environmental characteristic parameter comprises:
acquiring a first image of the room, and recognizing the room based on the first image; and
determining, corresponding to the room, the characteristic information of the room and the position of the object according to a predetermined correspondence relationship.

19. The method according to claim 18, further comprising, prior to obtaining the environmental characteristic parameter:
controlling the cleaning device to move in the room, and acquiring a second image of the room; and
determining the room characteristic information and the position of the object based on the second image, and determining the predetermined correspondence relationship.

20. The method according to claim 1, wherein:
the cleaning device is a cleaning robot; and
controlling the cleaning device to perform cleaning according to the obstacle parameter comprises:
starting a cleaning in a target region at a first speed after receiving an operation instruction;
obtaining, in response to detecting a target obstacle at a position having a first distance from the cleaning robot in a current forward direction, a recognition result for determining an object category of the target obstacle by using an imaging apparatus disposed on the cleaning robot;
selecting a target obstacle avoidance route based on the recognition result, the target obstacle avoidance route corresponding to one of changing the current forward direction and maintaining the current forward direction; and
maneuvering the cleaning robot based on the target obstacle avoidance route.

21. The method according to claim 20, wherein said selecting the target obstacle avoidance route based on the recognition result comprises:
selecting a first obstacle avoidance route in response to determining that the object category of the target obstacle is recognizable, the first obstacle avoidance route being a route on which the cleaning robot is instructed to bypass the target obstacle without changing the current forward direction; or
selecting a second obstacle avoidance route in response to determining that the object category of the target obstacle is unrecognizable, the second obstacle avoidance route being a route on which the cleaning robot is instructed to bypass the target obstacle by moving in another forward direction.

22. The method according to claim 21, wherein said selecting the first obstacle avoidance route in response to determining that the object category of the target obstacle is recognizable comprises:
determining the object category of the target obstacle, and obtaining a contour parameter and a size parameter that correspond to the object category based on a pre-stored obstacle data set;
calculating a circumscribed image of the target obstacle according to the contour parameter and the size parameter; and
calculating the first obstacle avoidance route based on the circumscribed image and a pure Puresuit algorithm.

23. The method according to claim 22, further comprising, subsequent to calculating the first obstacle avoidance route:
selecting the first obstacle avoidance route and maneuvering the cleaning robot; and
determining that the cleaning robot completes obstacle avoidance in response to detecting that the cleaning robot bypasses the target obstacle and moves in the current forward direction.

24. The method according to claim 21, wherein said selecting the second obstacle avoidance route in response to determining that the object category of the target obstacle is unrecognizable comprises:
obtaining a parallel angle difference between the target obstacle and the cleaning robot in response to determining that the object category of the target obstacle is unrecognizable; and
determining a rotation angle for rotating a forward direction of the cleaning robot based on the parallel angle difference, and calculating the second obstacle avoidance route based on the rotation angle.

25. The method according to claim 24, further comprising, subsequent to calculating the second obstacle avoidance route:
selecting the second obstacle avoidance route and maneuvering the cleaning robot; and
determining that the cleaning robot completes obstacle avoidance in response to detecting that the cleaning robot moves in the another forward direction and has a distance from the target obstacle exceeding a second distance.

26. The method according to claim 20, further comprising, subsequent to starting the cleaning in the target region at the first speed:
switching the first speed to a second speed in response to detecting the target obstacle at a position having a second distance from the cleaning robot in the current forward direction, the second speed being lower than the first speed, and the second distance being greater than the first distance; and
detecting whether the target obstacle is located at the position having the first distance from the cleaning robot in the current forward direction.

27. The method according to claim 20, further comprising, prior to starting the cleaning in the target region at the first speed:
obtaining an initial grid map of the target region, robot posture information, and sample obstacle information, wherein the sample obstacle information comprises a parameter of a sample obstacle and an object category of the sample obstacle; and
generating a semantic map by projecting each sample obstacle onto the initial grid map through a Bresenham algorithm,
wherein said starting the cleaning in the target region at the first speed after receiving the operation instruction comprises:
starting the cleaning in the target region at the first speed based on the semantic map after receiving the operation instruction.

28. The method according to claim 20, wherein said obtaining the recognition result for determining the object category of the target obstacle by using the imaging apparatus disposed on the cleaning robot comprises:
obtaining a target obstacle image by using the imaging apparatus;
extracting an object characteristic of the target obstacle image by using an image detection classification model, the object characteristic comprising at least one of a size characteristic, a color characteristic, and a contour characteristic; and
determining the recognition result of the object category corresponding to the target obstacle based on the existence of object characteristics;

29. The method according to claim 28, further comprising, prior to obtaining the target obstacle image by using the imaging apparatus:
obtaining at least two sample images, the sample image comprising at least one obstacle object characteristic;
labeling a category identifier for each of the at least two sample images based on an object category of an obstacle; and
obtaining the image detection classification model satisfying a predetermined condition by training a predetermined image semantic segmentation model by using the sample images labeled with the category identifiers and the obstacle object characteristics comprised in the sample images, the image detection classification model being used for determining the object category of the target obstacle.

30. The method according to claim 1, wherein:
the cleaning device is a robot mounted with a first laser sensor and a second laser sensor, an inclination angle of the first laser sensor on the robot is different from an inclination angle of the second laser sensor on the robot, and a mounting height of the first laser sensor on the robot is different from a mounting height of the second laser sensor on the robot; and
controlling the cleaning device to perform cleaning according to the obstacle parameter comprises:
obtaining a first sensing distance through the first laser sensor, the first sensing distance being a distance between the first laser sensor and a light spot of a laser emitted by the first laser sensor;
obtaining a second sensing distance through the second laser sensor, the second sensing distance being a distance between the second laser sensor and a light spot of a laser emitted by the second laser sensor;
determining a first falling point coordinate based on the mounting height, the inclination angle of the first laser sensor on the robot, and the first sensing distance, the first falling point coordinate being a coordinate of the light spot of the laser emitted by the first laser sensor;
determining a second falling point coordinate based on the mounting height and the inclination angle of the second laser sensor on the robot, and the second sensing distance, the second falling point coordinate being a coordinate of the light spot of the laser emitted by the second laser sensor;
recognizing an obstacle type corresponding to a target region based on the first falling point coordinate, the second falling point coordinate, and a predetermined height for surmountable obstacle, the target region being a region where the first falling point coordinate and the second falling point coordinate are located; and
controlling motion of the robot based on the obstacle type.

31. The method according to claim 30, wherein:
the mounting height of the first laser sensor is greater than the mounting height of the second laser sensor; and
a distance that is reachable by the laser emitted by the first laser sensor is greater than a distance that is reachable by the laser emitted by the second laser sensor, the first falling point coordinate being (Xa, Ya),
wherein the method further comprises, prior to recognizing the obstacle type corresponding to the target region:
comparing an absolute value of Ya with the height for surmountable obstacle; and
controlling the robot to pause in response to the absolute value of Ya being greater than the height for surmountable obstacle.

32. The method according to claim 31, wherein:
the second falling point coordinate is (Xb, Yb);
the height for surmountable obstacle is h; and
said recognizing the obstacle type corresponding to the target region based on the first falling point coordinate, the second falling point coordinate, and the predetermined height for surmountable obstacle comprises:
determining that the obstacle type corresponding to the target region is a large stair in response to Ya being smaller than -h and Yb being smaller than or equal to Ya;
determining that the obstacle type corresponding to the target region is a down ramp in response to Ya being smaller than -h and Yb being smaller than 0 but greater than Ya; and
determining that the obstacle type corresponding to the target region is a large stair in response to Ya being smaller than -h and Yb being greater than or equal to 0.

33. The method according to claim 32, wherein the obstacle type is the down ramp; and
said controlling the motion of the robot based on the obstacle type comprises:
determining an angle corresponding to the down ramp; and
controlling the motion of the robot based on the angle corresponding to the down ramp and a predetermined climbable degree.

34. The method according to claim 31, wherein:
the second falling point coordinate is (Xb, Yb);
the height for surmountable obstacle is h; and
said recognizing the obstacle type corresponding to the target region based on the first falling point coordinate, the second falling point coordinate, and the predetermined height for surmountable obstacle comprises:
determining that the obstacle type corresponding to the target region is a high obstacle in response to Ya being greater than h and Xb being greater than or equal to Xa; and
determining that the obstacle type corresponding to the target region is an up ramp in response to Ya being greater than h and Xb being smaller than Xa.

35. The method according to claim 34, wherein:
the obstacle type is the up ramp; and
said controlling the motion of the robot based on the obstacle type comprises:
determining an angle corresponding to the up ramp; and
controlling the motion of the robot based on the angle corresponding to the up ramp and a predetermined climbable degree.

36. The method according to claim 30, wherein:
the mounting height of the first laser sensor is greater than the mounting height of the second laser sensor;
a distance that is reachable by the laser emitted by the first laser sensor is greater than a distance that is reachable by the laser emitted by the second laser sensor;
the first falling point coordinate is (Xa, Ya); and
the height for surmountable obstacle is h,
wherein the method further comprises:
controlling the robot to switch from a normal mode to a low-speed mode in response to Ya being greater than a target height and smaller than or equal to h, the target height being greater than 0 and smaller than h, and a speed of the low-speed mode being smaller than a speed of the normal mode;
controlling the robot to move in the normal mode in response to Ya being greater than or equal to a negative number of the target height and smaller than or equal to the target height; and
controlling the robot to switch from the normal mode to the low-speed mode in response to Ya being greater than or equal to a negative number of h and smaller than the negative number of the target height.

37. The method according to any one of claims 30 to 36, wherein:
the first laser sensor is a line laser sensor; and
the second laser sensor is a laser ranging sensor.

38. An apparatus for controlling a cleaning device, comprising:
a detection device configured to obtain an environmental characteristic parameter by detecting an operation environment of the cleaning device, the environmental characteristic parameter comprising at least one of a room characteristic parameter and an obstacle parameter; and
a control device configured to control the cleaning device to perform cleaning according to the at least one of the room characteristic parameter and the obstacle parameter.

39. The apparatus according to claim 38, wherein:
the cleaning device is a cleaning robot; and
the control device comprises:
a first obtaining module configured to start a cleaning in a target region at a first speed after receiving an operation instruction;
a first detection module configured to obtain, in response to detecting a target obstacle at a position having a first distance from the cleaning robot in a current forward direction, a recognition result for determining an object category of the target obstacle by using an imaging apparatus disposed on the cleaning robot;
a first selection module configured to select a target obstacle avoidance route based on the recognition result, the target obstacle avoidance route corresponding to one of changing the current forward direction and maintaining the current forward direction; and
a first operation module configured to maneuver the cleaning robot based on the target obstacle avoidance route.

40. The apparatus according to claim 38, wherein:
the cleaning device is a robot mounted with a first laser sensor and a second laser sensor, an inclination angle of the first laser sensor on the robot is different from an inclination angle of the second laser sensor on the robot, and a mounting height of the first laser sensor on the robot is different from a mounting height of the second laser sensor on the robot; and
the control device comprises:
a first distance obtaining module configured to obtain a first sensing distance through the first laser sensor, the first sensing distance being a distance between the first laser sensor and a light spot of a laser emitted by the first laser sensor;
a second distance obtaining module configured to obtain a second sensing distance through the second laser sensor, the second sensing distance being a distance between the second laser sensor and a light spot of a laser emitted by the second laser sensor;
a first falling point coordinate determining module configured to determine a first falling point coordinate based on the mounting height and the inclination angle of the first laser sensor on the robot, and the first sensing distance, the first falling point coordinate being a coordinate of the light spot of the laser emitted by the first laser sensor;
a second falling point coordinate determining module configured to determine a second falling point coordinate based on the mounting height and the inclination angle of the second laser sensor on the robot, and the second sensing distance, the second falling point coordinate being a coordinate of the light spot of the laser emitted by the second laser sensor;
an obstacle type recognition module configured to recognize an obstacle type corresponding to a target region based on the first falling point coordinate, the second falling point coordinate, and a predetermined height for surmountable obstacle, the target region being a region where the first falling point coordinate and the second falling point coordinate are located; and
a motion control module configured to control motion of the robot based on the obstacle type.

41. The apparatus according to claim 38, wherein:
the room characteristic parameter comprises floor characteristic information of a room; and
the control device is further configured to determine control information according to the floor characteristic information and maneuver the cleaning device according to the control information.

42. The apparatus according to claim 38, wherein:
the room characteristic parameter comprises room characteristic information of a room; and
the obstacle parameter comprises a position of an object in the room,
wherein the control device is further configured to:
determine a cleaning parameter according to the room characteristic information; and
control the cleaning device to avoid the position of the object and to operate according to the cleaning parameter.

43. A cleaning device, comprising:
a memory configured to store a program or an instruction; and
a processor, when executing the program or the instruction, performing the method for controlling the cleaning device according to any one of claims 1 to 37.

44. A readable storage medium having a program or an instruction stored thereon, wherein the program or the instruction, when executed by a processor, causes the processor to perform the method for controlling the cleaning device according to any one of claims 1 to 37.
